# EUROPEAN PATENT APPLICATION

(11) **EP 0 990 962 A1**
(43) Date of publication of application: **05.04.2000**
(21) Application number: 99917142.4
(22) Date of filing: 23.04.1999
(51) Int. Cl.: G04D 3/00, G04B 45/00, G06F 17/50, G06F 17/60

(54) **SYSTEM AND METHOD FOR WATCH DESIGN**

(30) Priority: 24.04.1998 JP 11543398; 01.05.1998 JP 13590898; 30.09.1998 JP 27791298; 19.04.1999 JP 11106799
(71) Applicant: TECNOL MEDICAL PRODUCTS, INC., Fort Worth, Texas 76180 (US)
(72) Inventor: HARASAKI, Hiroyuki, Citizen Watch Co. Ltd., Shinjuku-ku, Tokyo 163-0428 (JP); HORI, Akihiro, Citizen Watch Co. Ltd., Shinjuku-ku, Tokyo 163-0428 (JP); SAKITA, Eiichi, Citizen Watch Co. Ltd., Shinjuku-ku, Tokyo 163-0428 (JP); KATOH, Shiro, Citizen Watch Co. Ltd., Shinjuku-ku, Tokyo 163-0428 (JP); OZAKI, Masashi, Citizen Watch Co. Ltd., Tanashi-shi, Tokyo 188-8511 (JP); OKABE, Akio, Citizen Trading Co. Ltd., Nakano-ku, Tokyo 164-8726 (JP); YAMAUCHI, Kaoru, Citizen Trading Co. Ltd., Nakano-ku, Tokyo 164-8726 (JP); KUDOU, Kouzi, Citizen Trading Co. Ltd., Nakano-ku, Tokyo 164-8726 (JP); ICHIHARA, Masam, Citizen Trading Co. Ltd., Nakano-ku, Tokyo 164-8726 (JP); EHARA, Yuuzi, Tokyo Bijyutu Co. Ltd., Toshima-ku, Tokyo 170-0011 (JP)
(74) Representative: Wilhelm, Hans-Herbert, Dr.-Ing.
(86) International application number: JP9902190
(87) International publication number: WO9956183

(57) **Abstract**

The watch design creating system according to the present invention utilizes, for example, the internet as an information communication network. For example, a consumer (1) in subscribers (1 to N) which are customers, requests design information to a host computer (H) of the watch maker which is a watch supplier, through the internet, the watch maker provides, for example, a CD-ROM stored design software and data used for original design to the consumer. The consumer creates the original design watch in accordance with steps stored in the CD-ROM, records it into a FD (floppy disk) and sends it to the watch maker. The watch maker produces the original watch and delivers the completed watch to the consumer.

## Description

### TECHNICAL FIELD

The present invention relates to an article supply system based on digital information processing technique, in particular, it relates to a watch design creating system and method of the same in order to directly make a watch, originally designed by a consumer himself and based on his favorite design, by a watch maker.

In a first aspect of the present invention, when the consumer requests service from the watch maker through an information communication means, such as the internet, magazines, etc., the watch maker sends design information in which design specifications including design software and data are recorded through the information communication means or using a storage medium. The consumer reads necessary data from the design information, or creates an original watch design on a display, executes enlargement, reduction, movement of the watch design on the display, and creates an original design information of the watch (i.e., a design specification) having his favorite design. Further, the consumer sends the original design information to the watch maker by utilizing the information communication means or by recording the design information on the storage medium, for example, a floppy disk. The watch maker produces the watch based on the design specification from the consumer, and provides the completed watch to the consumer.

In a second aspect of the present invention, when the consumer receives directly an "order kit" including an order sheet, etc., for an original design watch from the watch maker, or buys the order kit at an agency, the consumer fill ups the order sheet with predetermined matters, for example, designs of a dial-plate, a watch band, and a time indicator, and a message printed on the dial-plate, in order to order the original watch from the watch maker. When the watch maker receives the order sheet, pictures and characters on the dial-plate designed filled up in the order sheet are scanned by an image scanner and input into a computer. Further, various processes are provided for the pictures on the display. The watch maker produces a manufacturing specification of the originally designed watch along with the request of the consumer, and delivers the completed watch to the consumer.

Further, in a third aspect of the present invention, when the consumer receives the order kit as shown in the second aspect of the present invention, the consumer fills up the enclosed "watch design sheet" with predetermined matters, for example, a type of watch, an arrangement of pictures on the-dial-plate, a background of the dial-plate, a location and content of the message on the dial-plate, etc. In the third aspect of the present invention, the consumer only encloses the picture into the order kit, and designates the location of the picture on a completed image drawing column and an effective range of the picture on a dial-plate request column. At the watch maker, the pictures and drawings are processed as in the second aspect of the present invention. Further, the completed watch is contained in a watch box, and delivered to the consumer.

Still further, in a fourth aspect of the present invention, there is provided an "order sheet" in which various improvements are added in order to provide convenience to the consumer when deciding the picture and drawings, and when bonding them on the order sheet by the consumer.

### BACKGROUND ART

There is a known mail-order system in which a consumer selects his favorite article from a predetermined catalog, and orders it through a communication line. Further, there is a known TV-order system in which a consumer selects his favorite article on the television display, and orders it through the communication line.

In these order sales system, there is a system in which the favorite design can be designated by the consumer from several kinds of designs of, for example, the dial-plate of the watch which was previously prepared by a product maker. Further, there is a particular order system in which designated characters can be printed either on the dial-plate or on a back lid of the watch case, if the consumer orders a large number of the watches.

However, in these order sales system, although some flexibility regarding the design, such as designation of the dial-plate, printing of characters, etc., are available to the consumer, this flexibility on the design is insufficient to give a feeling of satisfaction to the consumer, i.e., creation of an originally-designed watch, of which there is only one in the world, to the consumer.

Accordingly, the following watch design creating system has been desired from a market. That is, by utilizing the information communication means, such as information communication network, the consumer directly executes access to a watch supplier (for example, a watch maker). The consumer uses the design software, which is provided from the watch maker and includes the basic design information, and designs the watch on his personal computer. The watch designed by the consumer is produced by the watch maker.

In this case, however, when actually using the watch design creating system, although there is no problem for the younger generation which is relatively skilled to the personal computer when designing the original design watch by handling the personal computer and ordering the watch to the watch maker, there are problems for women and the aged because they are relatively unskilled with the personal computer. Accordingly, these consumers wish to be able to easily order the originally designed watch, as they say "Is there more easy way to order the watch when ordering it?", "I want to order the original design watch, but I have no personal computer", "I have no personal computer, but, since I can provide you a picture used as the dial-plate, I wish to leave processing of the picture to the watchmaker."

Accordingly, the present invention is to provide the watch design creating system and a creating method which includes various requests for the consumers as mentioned above.

### DISCLOSURE OF THE INVENTION

The object of the first aspect of the present invention aims to be able to produce an originally-designed and full-scale watch in which a consumer directly accesses a watch supplier (for example, a watch maker) through an information communication means, such as an information communication network, utilizes design software including design basic information provided by the watch maker, and executes the design of the watch on the display of a consumer's personal computer.

Further, the object of the second to the fourth aspects of the present invention aims to be able to easily order the originally designed watch to the watch maker from the consumers who are unskilled with a personal computer or have no personal computer.

In the first aspect of the present invention, a watch design creating system and creating method is characterized by comprising: means for announcing a creation service of the watch design from the watch maker through the information communication means; means for accepting the design software and the parts digital information, which are requested by the consumer, by the watch maker; means for providing the parts digital information which can be provided to the consumer, and the design software to combine the parts digital information through the information communication means from the watch supplier; means for accepting the original watch design information, which was created by combining the parts digital information with the design software in the consumer, into the watch maker; means for accepting production of the watch, which was designed by the consumer based on the watch original design information and requested from the watch maker, by the watch maker; and means for producing the watch by the watch maker based on the originally-designed information provided by the consumer, and providing the completed watch to the consumer.

Further, in the second aspect of the present invention, a watch design creating system in which a predetermined order kit is sent from the watch maker to the consumer in accordance with request of the consumer; the consumer fills up predetermined matters in order to design the desirable original design watch along with the contents of the order kit, and sends the order kit with the pictures and drawings, which are used for the dial-plate, to the watch maker; the watch maker produces the original along with the contents of the order kit, and delivers the completed watch to the consumer; characterized in that the order kit includes an order sheet which is filled up by the consumer; and the order sheet includes at least a picture bonding column used for bonding the pictures and drawings in which the consumer intends to use as the dial-plate, and a type selecting column for selecting the type of the watch by the consumer.

Further, in the third aspect of the present invention, the watch design creating system according to the second aspect of the present invention characterized in that the order kit includes a watch design sheet and an order sheet, these being filled up by the consumer; and the watch design sheet includes at least a watch type selecting column for selecting the desirable type of the watch by the consumer, and a picture location selecting column for selecting the location of the pictures and drawings on the dial-plate.

Still further, in the fourth aspect of the present invention, the watch design creating system, according to the second aspect of the present invention, are characterized in that the order kit includes an order sheet which is filled up by the consumer, and the order sheet includes at least a picture bonding column used for bonding the pictures and drawings in which the consumer intends to use them as the dial-plate, and the picture bonding column includes a separation means for deciding a desirable range of the pictures and drawings in order to use as the dial-plate.

### BRIEF DESCRIPTION OF THE DRAWINGS

Figure 1 is a flowchart of basic operation according to the first aspect of present invention;
Figure 2 is a flowchart of another basic operation according to the first aspect of the present invention;
Figure 3 is a basic flowchart at a consumer's operation according to the first aspect of the present invention;
Figure 4 shows steps of displaying a main menu;
Figure 5 shows steps of displaying an image check;
Figure 6 shows steps of selecting samples, such as "watch", "dial-plate", "hands";
Figure 7 shows steps of confirming the dial-plate;
Figure 8 shows another steps of confirming the dial-plate;
Figure 9 shows steps of confirming an order;
Figure 10 shows steps of confirming color tone;
Figure 11 shows steps of preparing an order data;
Figure 12 is a structural view of a system according to the first aspect of the present invention;
Figure 13 is an explanatory view of contents of a storage medium used in the first aspect of the present invention;
Figure 14 shows a display of a main menu image;
Figure 15 shows a display of an image check;
Figure 16 shows a display of a result of the design image check;
Figure 17 shows a display of an image of watch sample selection;
Figure 18 shows a display of a dial-plate at sample selection;
Figure 19 shows a display of a list of dial-plates at sample selection;
Figure 20 shows a display of confirmation of the dial-plate at sample selection;
Figure 21 shows a display of the dial-plate at sample selection;
Figure 22 shows a display of a read-in of the dial-plate at sample selection;
Figure 23 shows a display of a time indicator at sample selection;
Figure 24 shows a display of a message input image at sample selection;
Figure 25 shows a display of hands at sample selection;
Figure 26 shows a display of a watch case at sample selection;
Figure 27 shows a display of a wrist band made of urethane at sample selection;
Figure 28 shows a display of a wrist band made of leather at sample selection;
Figure 29 shows a display of a crown at sample selection;
Figure 30 shows a display of a holding image of an outer view;
Figure 31 shows a display of a confirming image of messages;
Figure 32 shows a display of preparing an order data;
Figure 33 shows a display of confirming a sum of money;
Figure 34 shows a display of selecting a "HOLD" button;
Figure 35 shows a display of materials of the wrist band at sample selection;
Figure 36 shows a display of hands image at sample selection;
Figure 37 shows a display of a basic pattern of hands;
Figure 38 shows a display of watch constituent parts;
Figure 39 shows a display of design of hands;
Figure 40 shows a display of time indicators;
Figure 41 shows a display of selected and enlarged time indicators;
Figure 42 shows a display of frames;
Figure 43 shows a display of selected and enlarged frame;
Figure 44 shows a display of already selected and enlarged watch case, time indicators, and the frame;
Figure 45 shows a display of graphics;
Figure 46 shows a display of graphics when selecting different watch in Fig. 37;
Figure 47 shows a display of enlarged watch designed by combining already selected watch case, hands, time indicators, frame and graphics;
Figure 48 shows a display of a message;
Figure 49 shows a display of font, size and color of the message;
Figure 50 shows a display of graphics created by a customer;
Figure 51 shows a display of "trimming" by the customer (No. 1);
Figure 52 shows a display of "trimming" by the customer (No. 2);
Figure 53 shows a display of "trimming" by the customer (No. 3);
Figure 54 shows a display of "trimming" by the customer (No. 4);
Figure 55 shows a display of an enlarged watch design created by combining graphics, hands, frame, time indicators;
Figure 56 shows one example of a production sheet in the first aspect (A), an explanatory view in which a ultra-violet film is bonded on the production sheet in the first aspect (B), and an explanatory view of a hand guide hole at a center of an image sheet in the first aspect (C);
Figure 57 is a schematic view for explaining punching of the dial-plate and positioning of the image sheet in the first aspect;
Figure 58 is an exploded and perspective view of assembly of the original design watch in the first aspect of the present invention;
Figure 59 is a detailed cross-sectional view after assembling processes shown in Fig. 58;
Figure 60 is a system structural view of the watch design creating system in the second aspect of the present invention;
Figure 61 shows one example of an order sheet according to the second aspect;
Figure 62 is an explanatory view for bonding pictures to a picture bonding column at front side of the sheet in the second aspect;
Figure 63 is an explanatory view for bonding pictures to a picture bonding column at back side of the sheet in the second aspect;
Figure 64 is an explanatory view of "trimming" at the picture bonding column in the second aspect (A to C);
Figure 65 shows examples of guide sheets (transparent sheets) in the second aspect (A to D);
Figure 66 shows other examples of the guide sheets in the second aspect (A, B);
Figure 67 shows other examples of the order sheets in the second aspect (A to D);
Figure 68 shows a system structure at the watch maker in the second aspect;
Figure 69 shows a display after the picture was input as the image into the computer in the second aspect;
Figure 70 shows one example of a watch design sheet according to the third embodiment of the present invention;
Figure 71 shows one example of an order sheet used in the third aspect;
Figure 72 shows examples of watches in the third aspect;
Figure 73 shows one example of location of the picture (A), and location of the message (B);
Figure 74 is a flow chart for explaining separated works at the watch maker in the third aspect;
Figure 75 shows one example of a watch receiving box used in the third aspect;
Figure 76 shows an inner side of the watch receiving box shown in Fig. 75;
Figure 77 is an exploded and perspective view of a lid of the watch receiving box shown in Fig. 76;
Figure 78 is a cross-sectional view of the watch receiving box shown in Fig. 75;
Figure 79 is an outer an perspective view of another example of the watch receiving box in the third aspect, (A) shows the lid being closed, and (B) shows the lid being opened;
Figure 80 is an exploded and perspective view for explaining inner side of the watch receiving box shown in Fig. 79;
Figure 81 is a flow chart for explaining all processes at the watch maker in the third aspect;
Figure 82 shows one example of the order sheet made of the transparent sheet in which the time indicators, the message and the hand hole are printed on the dial-plate, in the fourth aspect of the present invention;
Figure 83 shows another example of the order sheet shown in Fig. 82, and plural kinds of watch cases and bands are printed on the order sheet;
Figure 84 shows still another example of the order sheet shown in Fig. 82(A), and the transparent sheet of printed plural kinds of dial-plates are separately prepared on the transparent sheet (B);
Figure 85 shows another example of the transparent sheet shown in Fig. 85(B), and the transparent sheet of printed plural kinds of dial-plates are separately prepared on the transparent sheet (B);
Figure 86 shows the whole view by combining the transparent film of Fig. 84 and the transparent film of Fig. 85;
Figure 87 shows one example of the order sheet made of a magnetic sheet, and another magnetic sheet for holding the picture (A, B);
Figure 88 shows another example of the order sheet in the second aspect, and long holes are provided on upper and lower sides of each hole so that it is possible to easily bond the picture in each hole (A, B);
Figure 89 shows one example of a case frame (or trimming sheet) for deciding the range of the picture in the fourth aspect, (A) shows the front of the case frame, and (B) shows the back of the case frame;
Figure 90 shows another example of the case frame (A, B) shown in Fig. 89, and shows a large size, a middle-size, and a small size;
Figure 91 shows another example of the order sheet in the second aspect, and shows each pair of large hole, middle-hole and small hole;
Figure 92 shows another example of trimming sheet for deciding the range of the picture in the fourth aspect, and a felt pencil is used for deciding the range;
Figure 93 shows still another example of the trimming sheet shown in Fig. 92, and it is possible to cut off an unnecessary area on the sheet; and
Figure 94 shows another example of the case frame, and it is possible to combine plural kinds of case frames with case sheets and band sheets.

### BEST MODE OF CARRYING OUT THE INVENTION

Before explaining the embodiments according to the first aspect of the present invention, definitions of terms used in the present invention will be clarified below.

First, the "watch supplier" includes not only a single supplier, but also a plurality of watch suppliers. For example, when a trading company A provides software to a consumer; and when a maker B produces a watch, the trading company A and the maker B correspond to the watch suppliers. As another case, when the trading company A requests parts digital information to an agency company C, the agency company C is also included in the watch supplier. Further, the maker B may include a plurality of makers B1, B2, B3, . . . .

Further, the "consumer" includes not only a single consumer, but also a plurality of consumers. For example, when a consumer A requests preparation of information of the watch original design to an agency B, and when the consumer A orders the watch based on the design of the agency B, the consumer A and the agency B are included in the consumer.

Still further, the "design basic information" is the information indicating a basic combination and mutual arrangement among the parts digital information decided based on kinds of watches. The watch supplier includes means for providing the design basic information based on the design software to the consumer. For example, in the case of a wrist watch, there is the basic information, i.e., two bands being coupled to the watch case, and the hour and minutes hands being arranged on the front of the dial-plate, etc. Based on the design basic information, the consumer can create the watch original design information so that it is easy to create the original design information for the consumer. Accordingly, it is possible to prevent an omission when selecting the watch constituent, parts. Further, when the watch supplier prepares some custom samples, and when constituent parts of the custom samples are changed by the consumer to his favorite parts, the creation of the original design information by the consumer becomes easy and effective.

Further, "watch constituent parts" are various kinds of parts constituting the watch, and the parts are decided based on kinds of the watches. For example, in the case of the wrist watch, the constituent parts are indicated by a watch case, a wrist band, a buckle, a dial-plate, hands, a crown, etc. The watch constituent parts may be defined as either parts for deciding an outer view, or parts for deciding function of the watch.

Further, the "information communication means" includes all current communication means to communicate with the consumer, for example, an advertisement on a newspaper or magazine; an advertisement in a vehicle, such as a train, a bus, etc.; commercial scene in TV or radio broadcasting; a manual information transfer means using mail, or a telephone; and the internet.

Further, "information providing means" includes, for example, mail.

Still further, the "information communication network" includes all networks to communicate with the consumer, which is represented by an internet, personal computer communication, etc.

Although the present invention relates to a watch, if it is an article in which a consumer can select constituent parts of that article, it is possible to apply the present invention to any articles. For example, the following parts, i.e., accessories, such as a dress, a necktie, etc.; ornaments, such as a necklace, a finger ring, etc.; a car; a motor bicycle; furniture; etc., are included. Further, it is possible to design room planning and internal ornaments in a house by the consumer as the original design. Further, it is possible to design audio equipment, such as a stereo, an amplifier, etc., by the consumer, as the original design.

Below, embodiments of the first aspect of the present invention will be explained in detail with reference to the drawings.

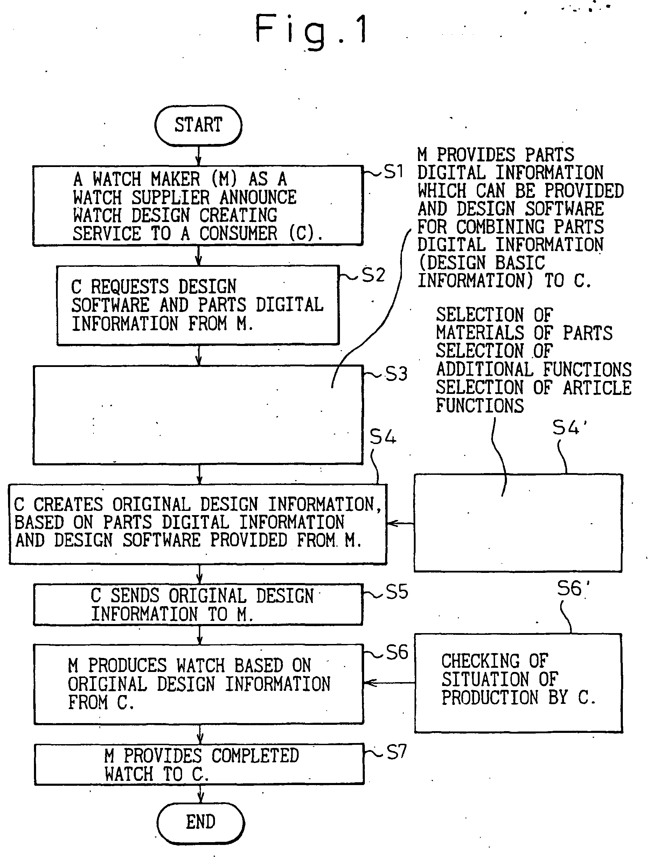

Figure 1 is a flowchart of basic operation according to the first aspect of the present invention. This example is in the case that a watch supplier is a watch maker. That is, a consumer creates a watch having his favorite design. As explained in detail below, the watch maker provides the design basic information to design the watch design through the information communication network, and the consumer returns the original design information of the watch through the same network.

First, the watch maker (M) as the watch supplier announces a watch design creation service to the consumer (C) through the information communication network (for example, the internet (24H service) (S1). The consumer who received the information requests the design software and the parts digital information through the internet, an E-mail, etc. (S2).

Further, other than parts digital information which are provided from the watch maker, there are other parts digital information which are independently created by the consumer. In this case, a digital image taken by a digital camera, a digital image scanned from a photograph, etc., are included in the parts digital information.

Next, the watch maker provides parts digital information, which can be supplied from the watch maker to the consumer, and the design software (or the design basic information based on the design software) to combine these parts to the consumer through the network (S3). The consumer who received the design software (or the design basic information based on the design software) utilizes the design software and the parts digital information, combines the parts digital information which are independently created by the consumer, and creates the original design information as the completed watch (S4). At that time, the consumer selects materials of the watch constituent parts, selects additional functions added to the watch constituent parts, and selects functions of the watch (S4'). Further, the parts digital information are trimmed, i.e., enlarged, reduced, moved, overlapped, by the consumer. Then, the consumer sends the original design information to the watch maker through the network, and requests production of the watch (S5).

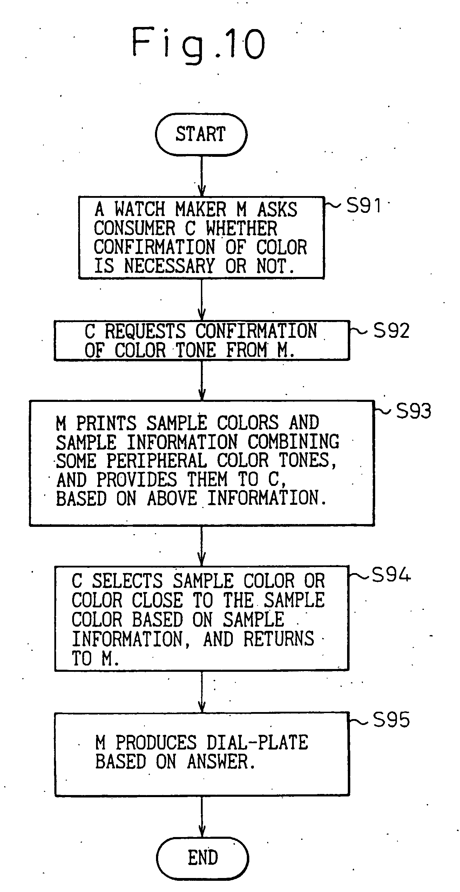

Next, the watch maker produces the watch in accordance with the original data recorded in the original design information which received from the consumer (S6). In this case, the consumer may check situation of production at the watch maker through the network (S6'). Further, the watch maker completes the watch and provides it to the consumer (S7). In this case, as explained in Fig. 10, when the watch maker considers a situation that the color tone of the dial-plate is slightly different between the image on the display and an actual color tone of the dial-plate, the watch maker confirms the color tone of the dial-plate to the consumer, if the consumer wishes.

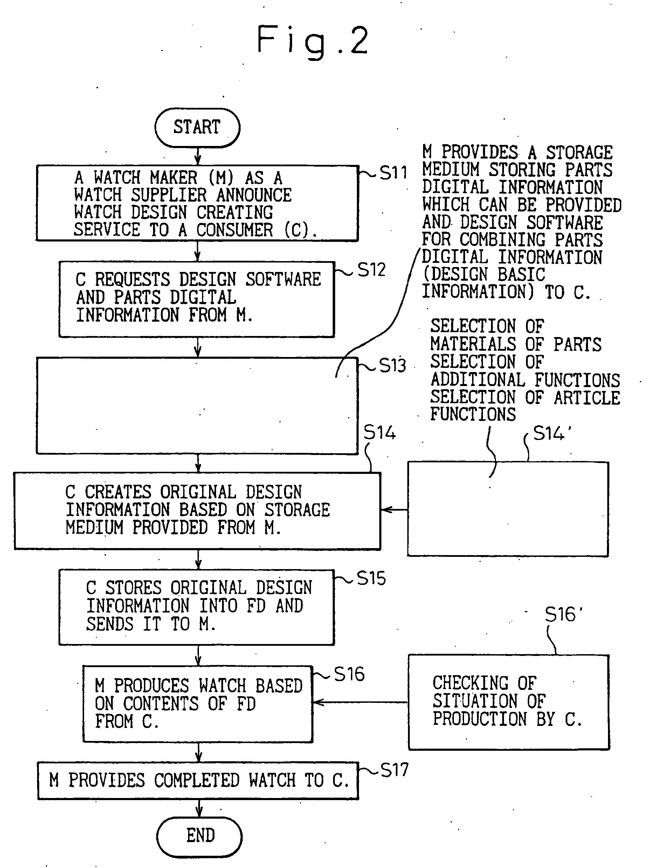

Figure 2 is a flowchart of another basic operations according to the first aspect of the present invention. In this example, the watch maker temporarily stores the design basic information on a storage, medium and provides it to the consumer. The consumer returns the original design information to the watch maker using the floppy disk (FD).

First, the watch maker (M) announces the watch design creation service to the consumer (C) through the information communication network (for example, the internet (24H service) (S11). The consumer who received the information requests the design software and the parts digital information through the internet, E-mail, a letter, etc. (S12). Next, the watch maker sends the storage medium (for example, a CD-ROM) which stored parts digital information, which can be supplied from the watch maker, and the design software (or the design basic information based on the design software) to combine these parts to the consumer through the network (S13).

In this case, as the storage medium, other than the above-mentioned CD-ROM and the floppy disk, there are a hard disk drive; a ROM; a RAM; an optical recording medium; a photo-magnetic recording medium, such as a magnetic disk (MD); and a semiconductor memory, such as an IC card and a miniature card.

The consumer who received the CD-ROM sets it into his personal computer. The consumer combines the parts digital information which were supplied by the watch maker, and the parts digital information which were independently created by the consumer if necessary (for example, a dial-plate on which an original message is written), and creates the original design information (S14). At that time, the consumer selects materials of the watch constituent parts, selects the additional functions added to the watch constituent parts, and selects the functions of the watch (S14'). Further, the consumer sends the original design information to the watch maker through the network and requests production of the watch (S15).

Next, the watch maker produces the watch in accordance with the original data recorded in the floppy disk which received from the consumer (S16). In this case, the consumer may check situation of production at the watch maker through the internet. Further, the watch maker completes the watch and provides it to the consumer (S17).

In this case, the consumer may check the current situation of production (below, production situation) at the watch maker for the ordered watch through the information communication network, for example, the internet (S16').

Concretely, there is the following method. That is, the watch maker inputs situation of production of the wrist watches, which were ordered by the consumers, for each watch in a home page of the internet. Each user's name and telephone number are attached in the production situation data in the home page as keywords for search. Accordingly, the consumer accesses the home page of the watch maker, and can obtain the production situation data for the wrist watch which was ordered by himself by using his own name and telephone number. In this case, the following three steps are displayed on the screen as the production situation data, i.e., (1) The order of the wrist watch was received, (2) The ordered wrist watch is in production, and (3) The ordered wrist watch was sent. Further, if the above step (2) is divided into a plurality of steps and displayed on the screen, the consumer can know the exact production situation.

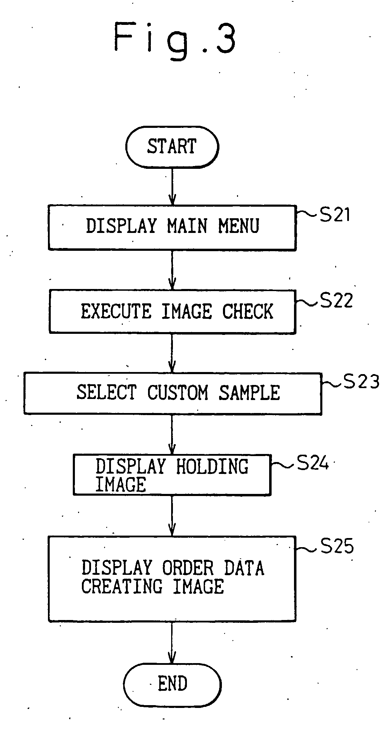

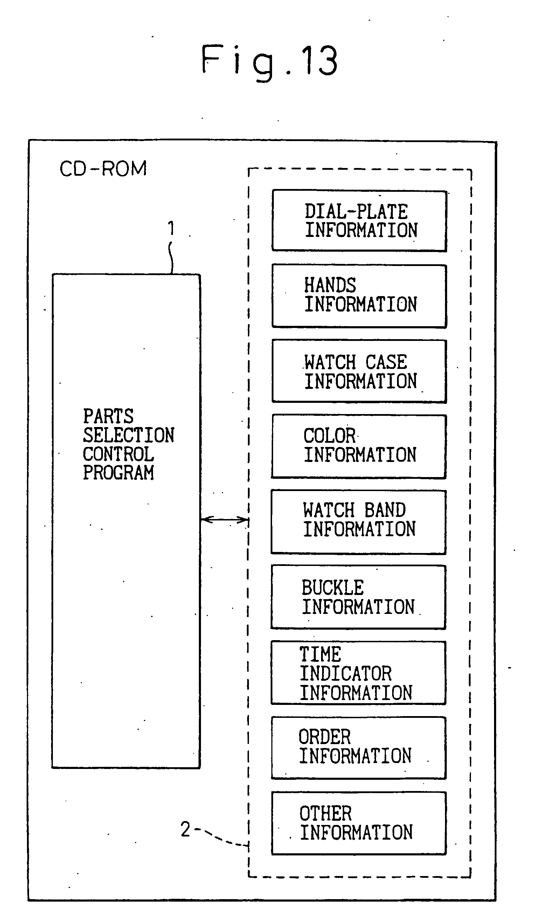

Figure 3 is a flowchart of basic operation at the consumer who received the storage medium from the watch maker in the first aspect. That is, this flowchart shows concretely the above step S14. The following steps are executed based on a control program (see number 1 in Fig. 13) within the CD-ROM as the storage medium provided from the watch maker. As mentioned below, the CD-ROM records the following information (see number 2 in Fig. 13), i.e., dial-plate information, hour and minute hands information, watch case information, color information, wrist band information, buckle information, time indicators information, order information, and other information (for example, message information), as the parts design information which can be selected by the consumer.

In this case, the order information includes the information relevant to the consumer himself, such as consumer's name, residence, telephone number, etc., and the order information, regarding "which watch" and "how many watches" within several wrist watches which were originally-designed and held by the following means. The recorded name and telephone number are used as an address to check production situation of the wrist watch which was ordered by the consumer.

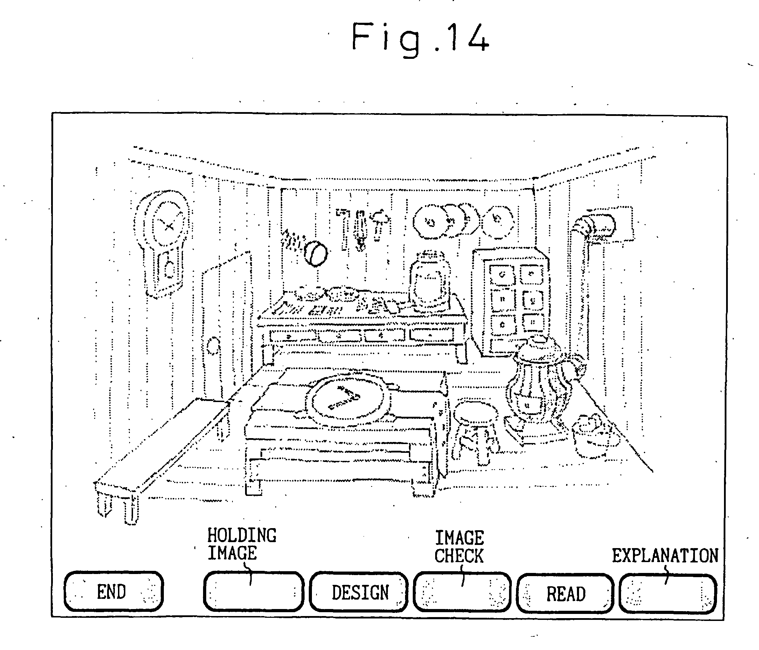

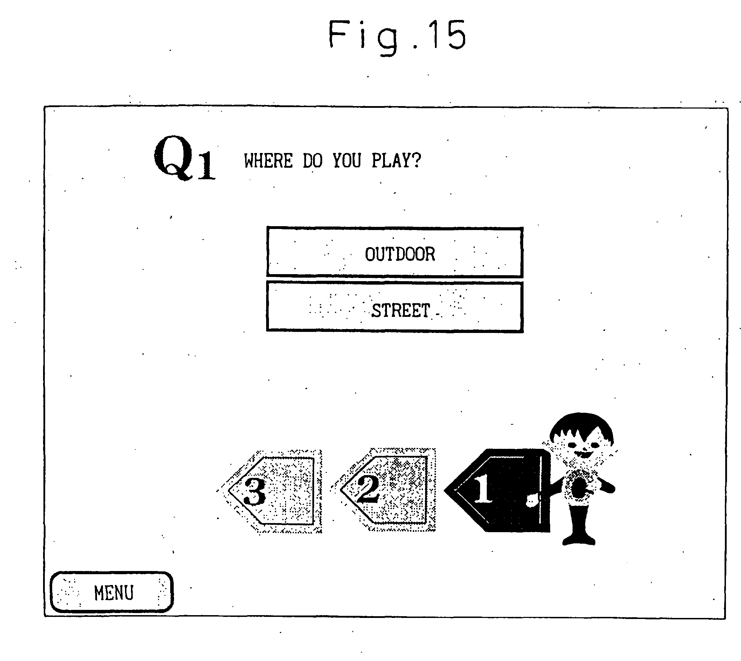

In Fig. 3, first, an image "TOKEI KOBOU" (i.e., a watch studio) is displayed on the screen (see Fig. 14), and the main menu is displayed (S21). Next, the image check is executed (S22). In the image check, three questions are displayed. For example, when the question "Where do you play?" is displayed, the consumer selects either "outdoor" or "street" (see Fig. 15).

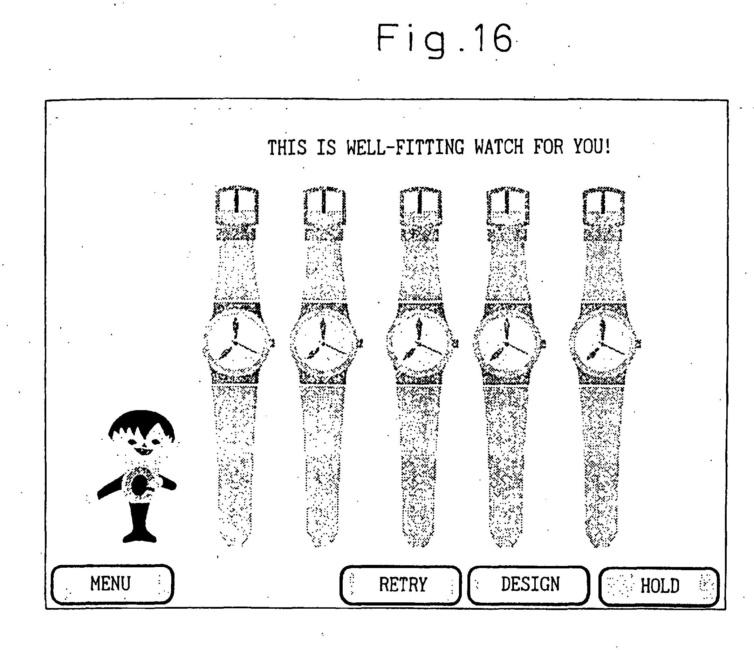

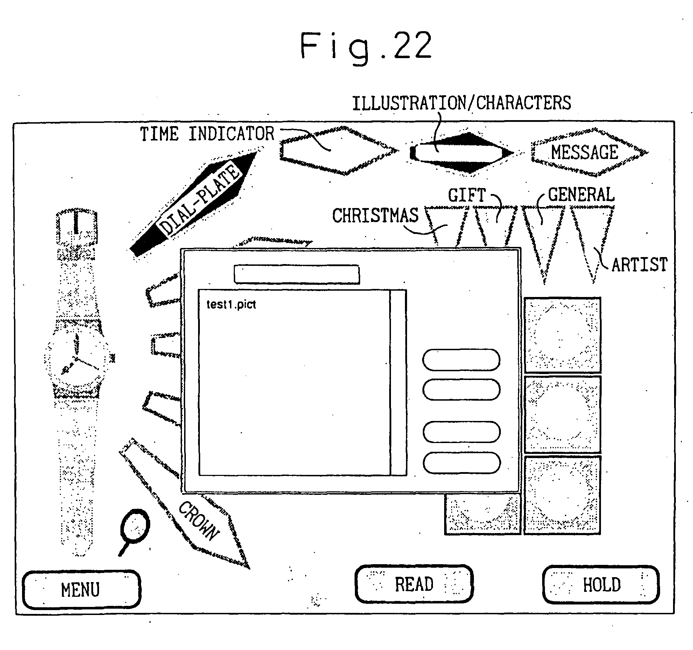

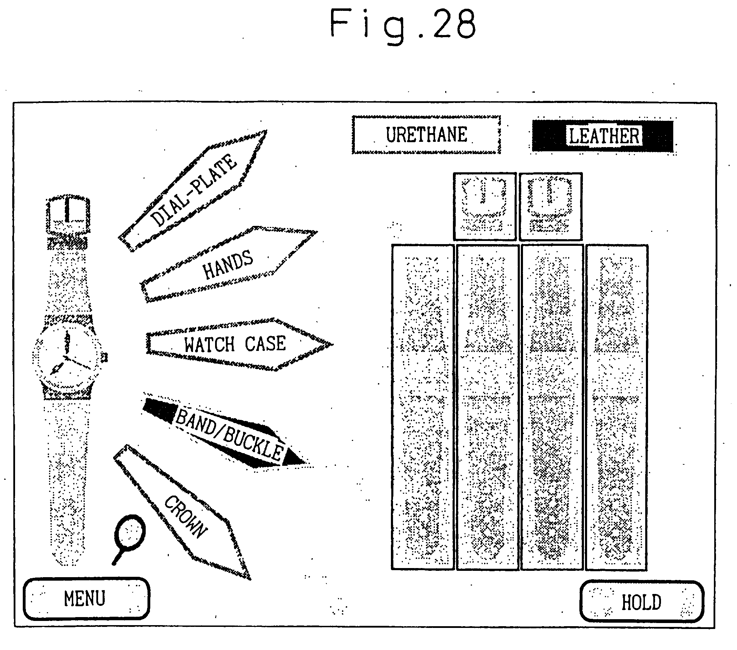

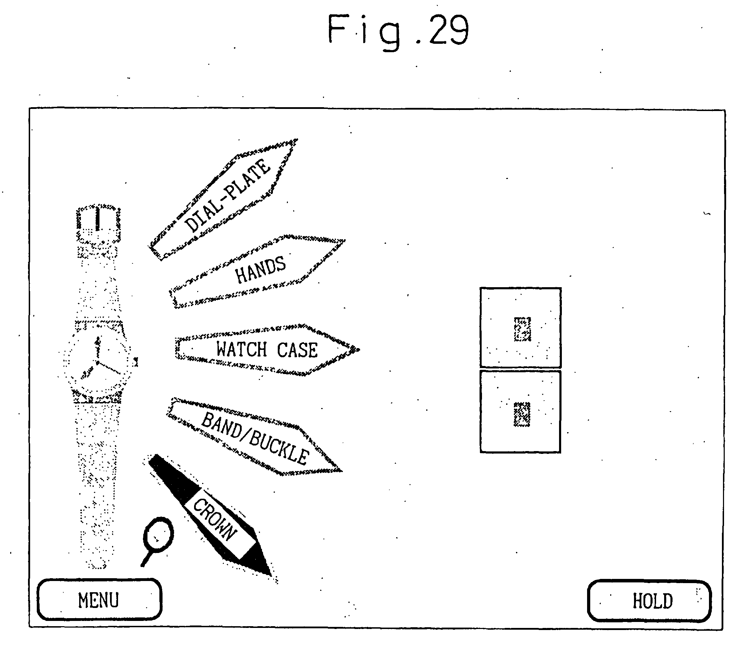

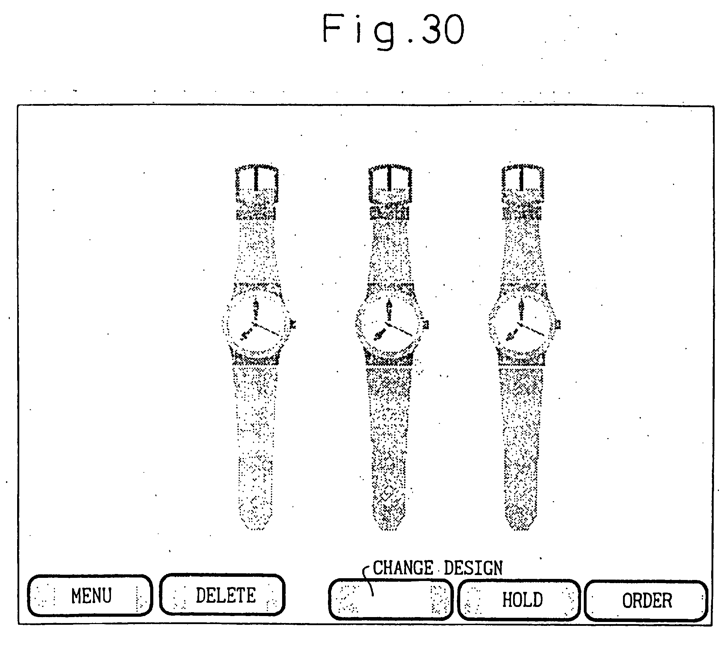

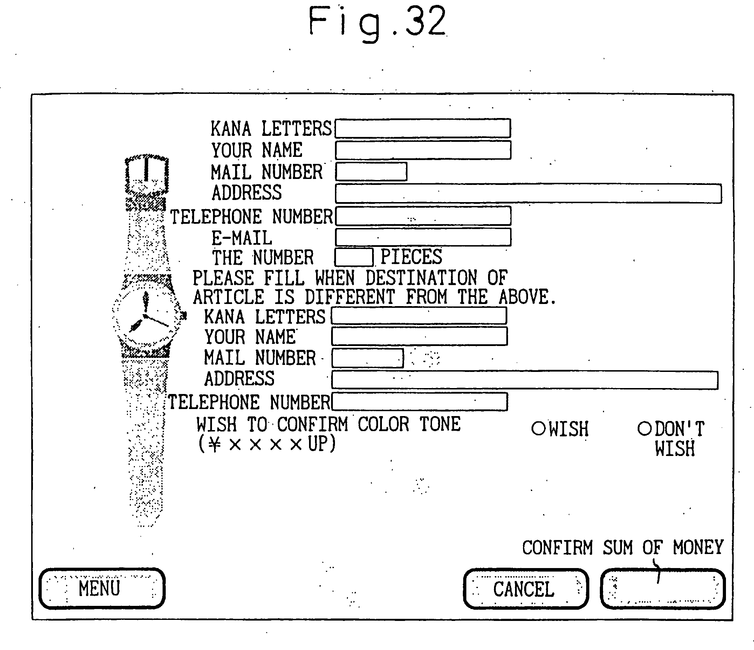

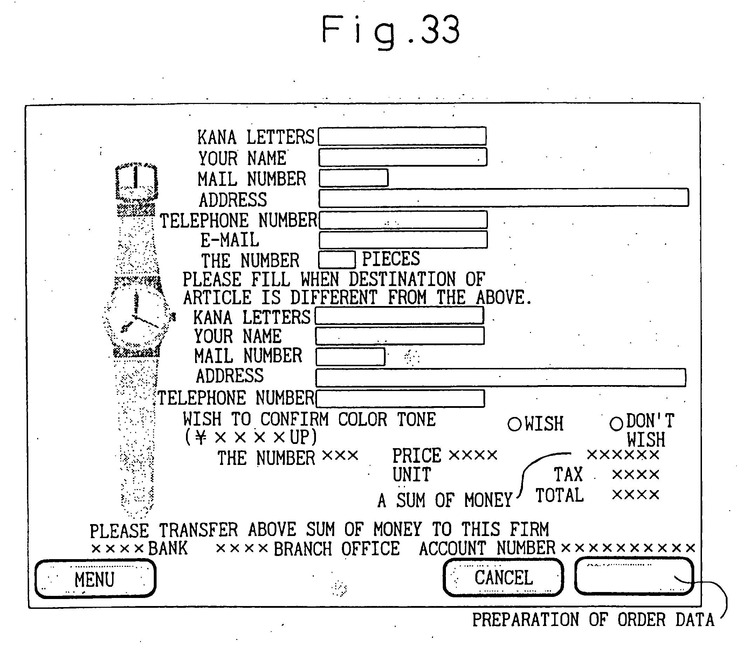

Next, the consumer selects the custom sample (S23). That is, the consumer selects the dial-plate, hands, the watch case, the color, etc., to create the original watch in accordance with the following steps. That is, the consumer designs the original watch in the "TOKEI KOBOU" (see Figs. 16 to 29). Next, the watch created on the custom image is held (S24). A maximum of three watches can be held in this embodiment (see Fig. 30). Conservation of the image is executed by clicking "HOLD". Further, an order data preparing image is displayed on the screen (Figs. 32 and 33).

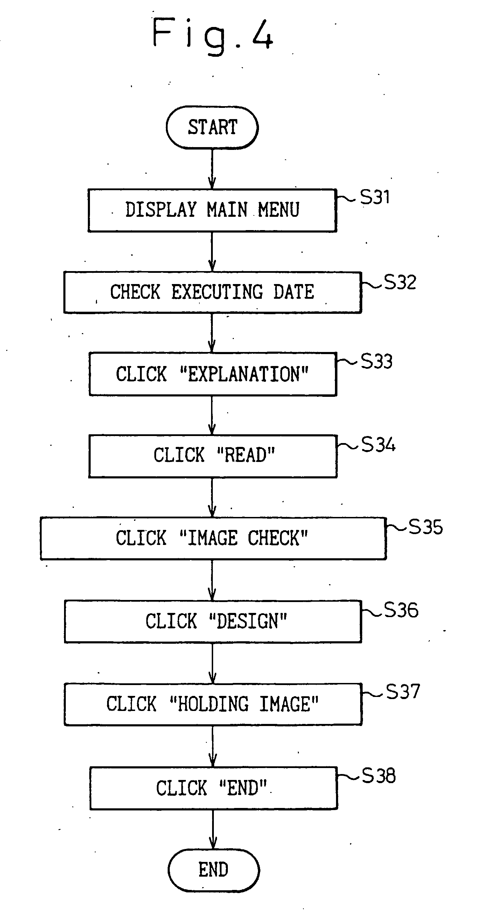

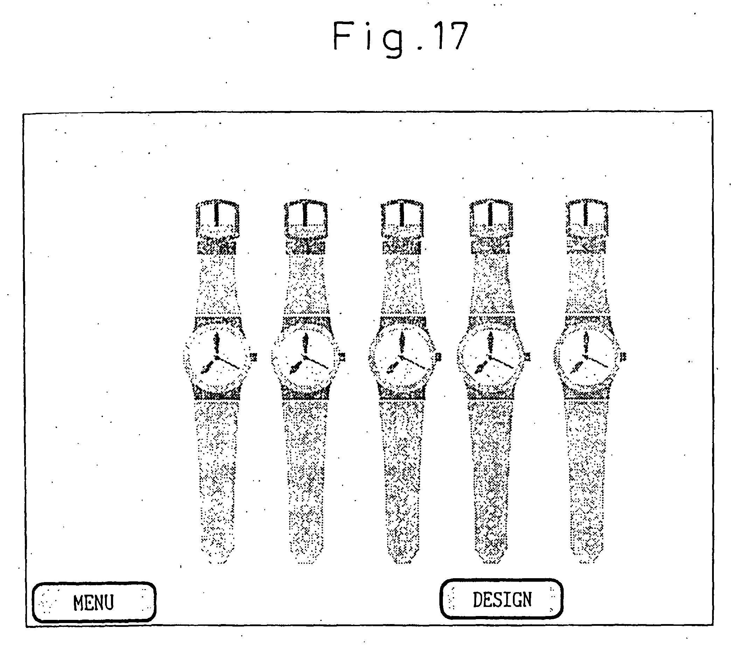

Figure 4 shows concrete steps of the main menu display in step S21 (see Fig. 14). First, as the main menu, "EXPLANATION", "READ", "IMAGE CHECK", " DESIGN", "HOLD IMAGE" and "END" are displayed on the screen (S31). Next, the date for executing the system is checked (S32). Next, when "EXPLANATION" is clicked, the image is moved to the abstract of the present invention (S33). Next, when "READ" is clicked, the order data created by the consumer are read and the image is moved to the custom display (S34). Next, "IMAGE CHECK" is clicked, the image is moved to the display of the image check (see Fig. 15 and step S35). Next, "DESIGN" is clicked, the image is moved to the display of the custom sample pattern representing the sample pattern (see Fig. 17 and step S36). Next, "HOLD IMAGE" is clicked, the image is moved to the display of the holding image (see Fig. 30 and step S37). Next, "END" is clicked, the current program is finished (S38).

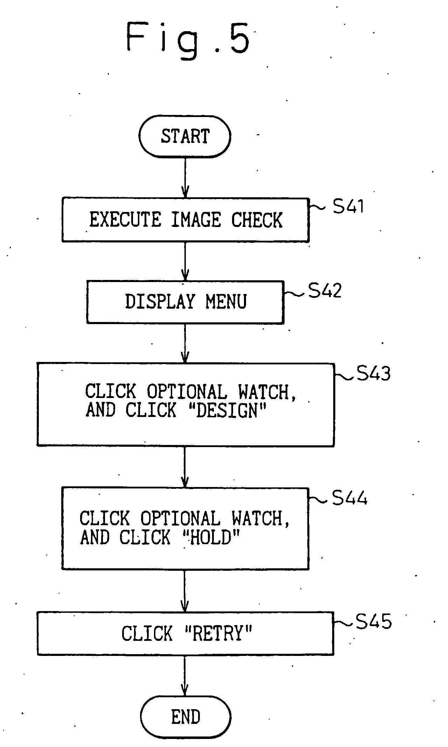

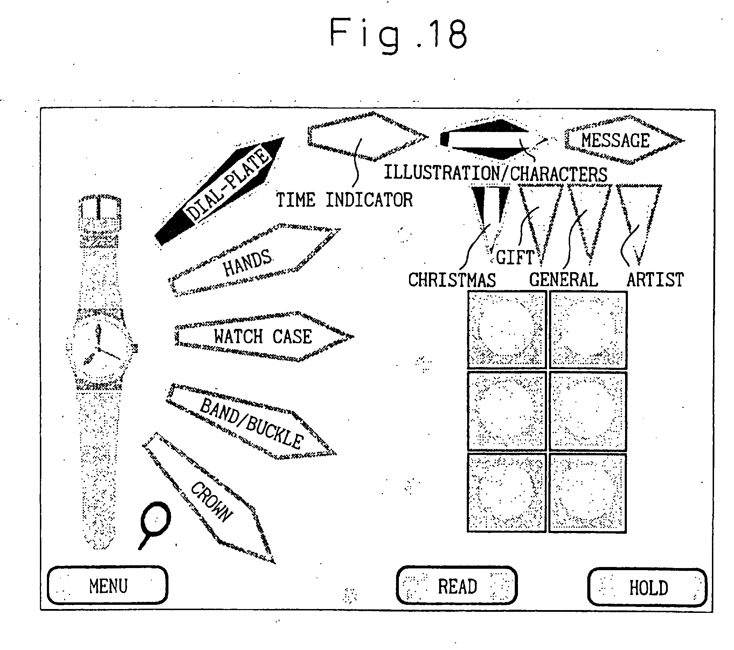

Figure 5 shows concrete steps of the image check in step S22 shown in Fig. 3. First, three questions are displayed in order to execute the image check. When all questions are answered, the result of the image check is displayed (see Fig. 16 and step S41). Next, the menu of "HOLD", "DESIGN" and "RETRY" are displayed, and, for example, the image of five watches is displayed (S42). Next, when the image of an optional watch is clicked, and when "DESIGN" is clicked, the image is moved to the display of the custom selection (see Fig. 18 and step S43). Next, when the image of the optional watch is clicked, and when "IMAGE" is clicked, the image is moved to the holding image (see Fig. 30 and step S44). Next, when "RETRY" is clicked, the image is returned to the display of the image check, and the image check is retried (S45).

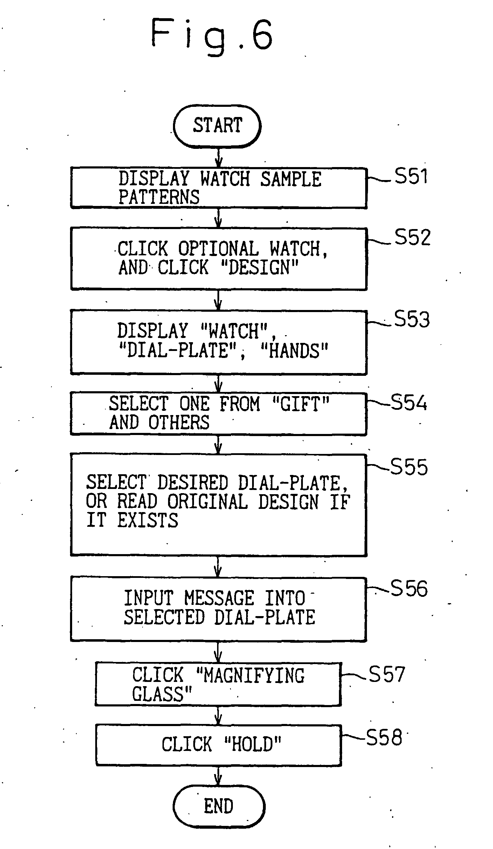

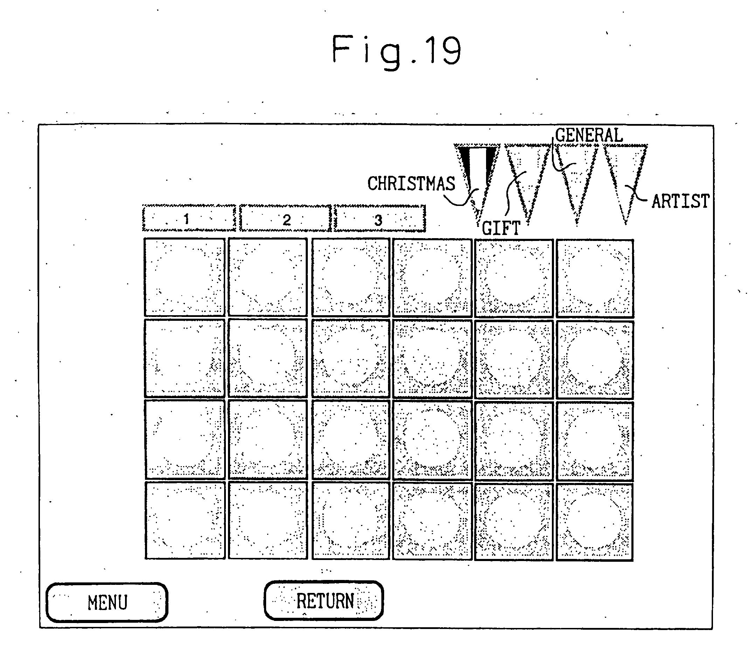

Figure 6 shows concrete steps of selection of the custom sample in step S23 shown in Fig. 3 (No. 1). First, before sampling, five sample patterns of watches are displayed as the large group (see Fig. 17 and step S51). Next, when the image of the desired watch is clicked, and when "DESIGN" is clicked, the image is moved to the display of the custom selection (see Fig. 18 and step S52). Next, as shown in Fig. 18, as the small group, indication marks, such as, "WHOLE OF IMAGE", "DIAL-PLATE", "HANDS", "WATCH CASE", "BAND/BUCKLE", "CROWN", etc., are displayed on the screen. Further, "TIME INDICATORS", "ILLUSTRATION/CHARACTERS", "MESSAGE", "MAGNIFYING GLASS", etc., are displayed on the screen. Further, the sample of the constituent parts selected using the indication mark is displayed on the screen (S53). Further, one of categories is selected from "CHRISTMAS", "GIFT", "GENERAL", etc., and the image is moved to the display (Fig. 19) in order to display a list of dial-plates sorted so as to fit his purpose (step S54).

Next, as shown in Fig. 18, when "DIAL-PLATE" is selected as the part, and when the desired dial-plate is selected from six samples of the sample dial-plate, the dial-plate in the whole of the image of the watch is replaced by the selected dial-plate. Similarly, other parts, such as the watch case, the band, etc., are selected by the indication mark so that the parts are displayed on the sample display section. As a result, these parts are replaced to the whole of the image of the watch so that it is possible to design the desired watch. Further, it is possible to revise each part, such as dial-plate, etc., any number of times, by confirming the whole of design coordinate. Further, it is possible to see the original design (step S55).

In this case, the "original design" means the parts digital information which are designed by the consumer himself. As the parts digital information, there are computer graphics created by the consumer, a digital image taken by a digital camera by the consumer, and another digital image scanned by a scanner from an illustration which was drawn by the consumer, or a picture which was taken by the consumer. The design software is stored in the CD-ROM sent from the watch maker in order to execute "trimming" of the digital image which can be freely enlarged, reduced, moved and overlapped.

The watch maker arranges the original design to the front of the dial-plate, bonds the printed original design to the surface, and provides the dial-plate having the original design created by the customer himself as unique dial-plate.

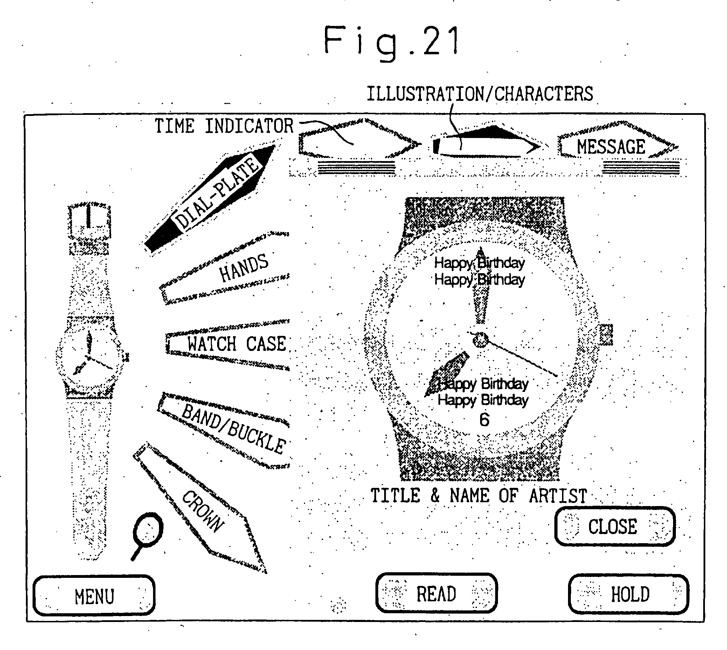

Next, the message is input to the selected dial-plate (S56). The consumer can freely input his favorite words or sentences as the message. As shown in Fig. 21, for example, "Happy Birthday" can be input as the message. In this embodiment, it is possible to optionally arrange the message to four locations as shown in the drawing. In four locations, the customer can freely select the message to either any one favorite location or all locations. In this case, the number of messages is optional in four locations. Further, although the length of the message may be limited in accordance with the space on the dial-plate, it is possible to optionally set the length in the predetermined extent. Further, it is possible to optionally set font and color of characters in the predetermined extent.

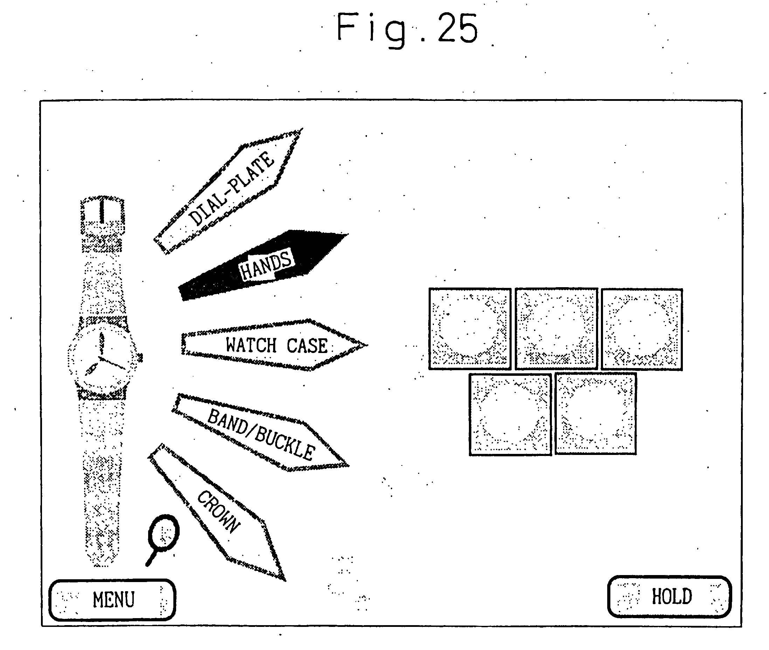

Next, when "MAGNIFYING GLASS" is clicked, the image of the dial-plate is enlarged (see Fig. 21 and step S57). In the case, "ILLUSTRATION/CHARACTERS" is shown instead of "MESSAGE" in Fig. 21. Finally, when "HOLD" is clicked, the image is moved to the holding of the image (Fig. 30) in order to hold the custom watch which is currently created (S58). Further, when "READ" is clicked, the dial-plate created by the consumer is read out from the file, and it is displayed on a vacant space in any location within six spaces (see Fig. 25).

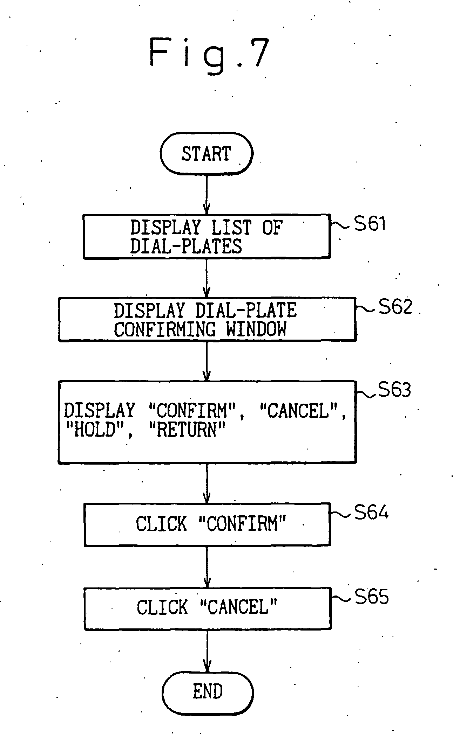

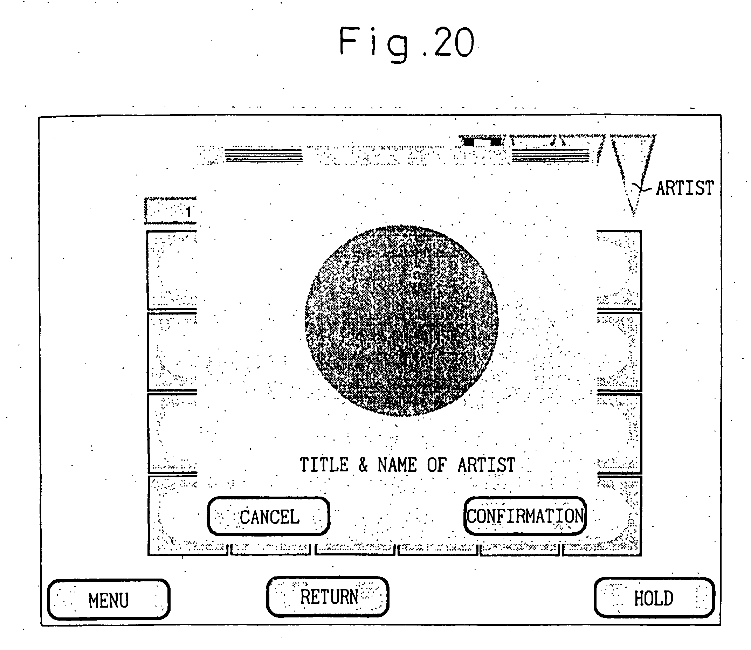

Figure 7 shows concrete steps of selection of the custom sample in step S23 shown in Fig. 3. First, a list of dial-plate is displayed (S61). In this case, it is possible to display twenty-four dial-plates, at a maximum, within one screen. The consumer selects one favorite dial-plate from twenty-four dial-plates, and the selected dial-plate is enlarged (see Fig. 20). When "CONFIRM" is clicked on the enlarged image, the image is returned to the image of Fig. 18, the dial-plate is displayed on each of six spaces. Further, a title and a name of artist are displayed on the enlarged window.

Next, the window for confirming the dial-plate is displayed (see Fig. 20 and step S62). Further, "CONFIRM", "CANCEL", "HOLD" and "RETURN" are displayed on the screen (S63). When "CONFIRM" is clicked, the image of Fig. 18 is displayed and the selected dial-plate is displayed on the vacant space. When "CANCEL" is clicked, the confirmation window is closed (S65), and the image of Fig. 19 is displayed.

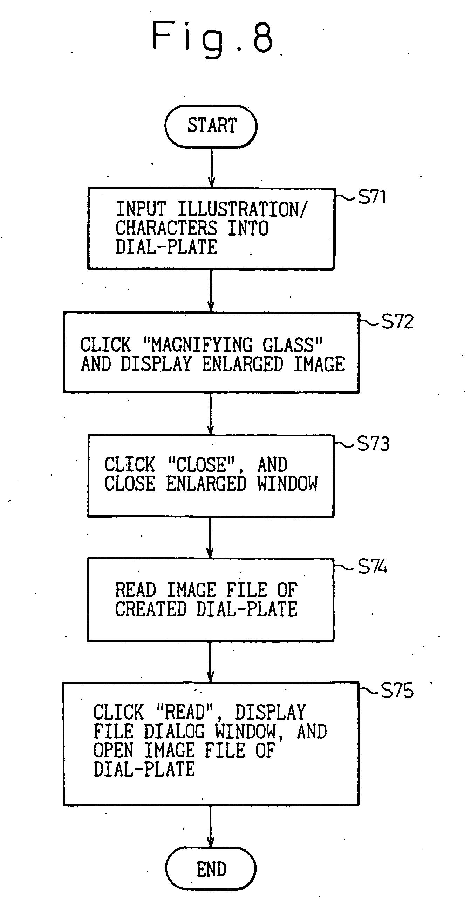

Figure 8 shows concrete steps of selection of another custom sample in step S23 shown in Fig. 3. First, the illustration/characters (for example, "Happy Birthday" ) is input on the dial-plate (S71). Next, when "MAGNIFYING GLASS" is clicked, watch case, time indicators, hands, dial-plate, crown, message, etc., are enlarged and displayed (S72). Next, an image file of the created dial-plate is read into the computer (S74).

Next, when "READ" is clicked, a file dialog window is displayed and the image file of the dial-plate is opened (S75). The image is displayed on each of eight spaces located at right side. In this case, other than the dial-plate, for time indicators, hands, watch case, band, crown, etc., the flowchart for design samples is omitted, and only the explanation of the display is given below.

The concrete steps after step S75 are explained below.
(1) The read image is displayed within each of six circles at the right side of the image.
(2) The above steps are repeated by the consumer, and the selected dial-plate is sequentially put on each of vacant circles within six circles.
(3) Next, the most favorite dial-plate is clicked in the selected six dial-plates. As a result, the clicked dial-plate is displayed into the watch case of the wrist watch displayed on the left side of the image in Fig. 18.
(4) Again, when another dial-plate is clicked in the selected six dial-plates, the newly clicked dial-plate is displayed on the left side of the image in Fig. 18.
(5) After above steps, the message input processes shown in steps S71 to S75 are executed.
(6) Finally, the consumer can freely create his favorite dial-plate.

If the dial-plate is unfavorable for the consumer, the above steps are simply repeated by the consumer so that he can select another dial-plate, or another message.

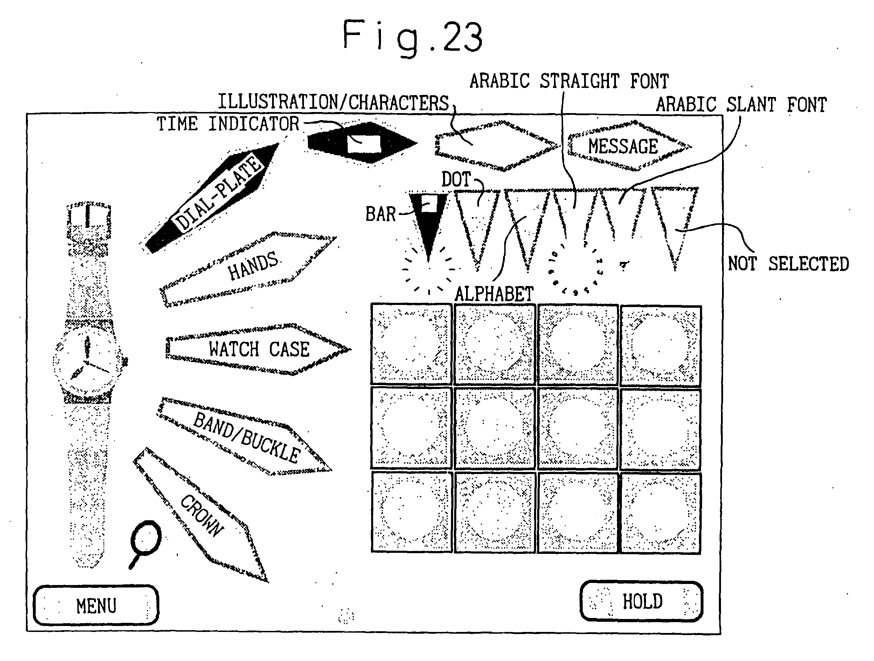

First, selection of time indicators is explained in Fig. 23. First, when "TIME INDICATOR" is clicked, changeable time indicators are displayed. When a bar, a dot, an alphabet, etc., is clicked, twelve time indicators at maximum which are displayed by different colors on the screen, and one indicator is selected. Then, the image is changed to the selected time indicator. Further, when "HOLD" is clicked, the image is moved to the holding image of the custom watch which is created currently.

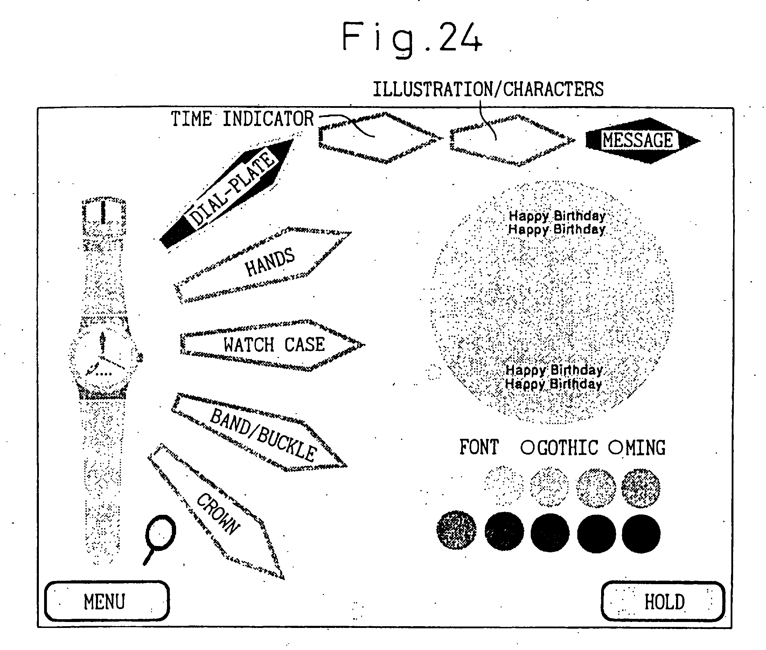

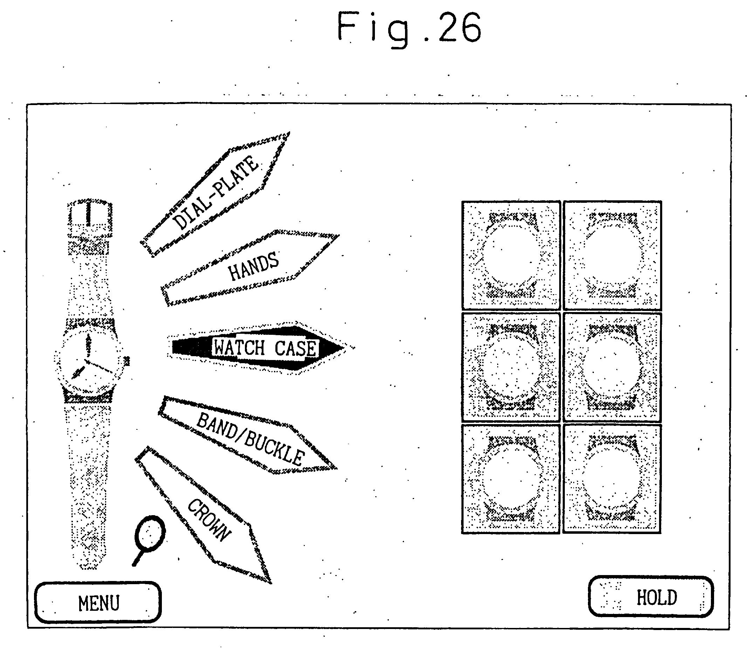

Next, the input of the message is explained with reference to Fig. 24. First, a favorite font (for example, Gothic font, Ming font, etc.,) is selected from different fonts. The color of character is selected from ten colors displayed on the right side in the screen. Next, the hands are selected on the image of Fig. 25. When "HANDS" is clicked, one favorite hand is selected from five kinds of hands. When "HOLD" is clicked, the image is moved to the holding image. Next, the watch case is selected on the image of Fig. 26. When "WATCH CASE" is clicked, changeable watch cases are displayed, and the desirable watch case is selected therefrom. When the desirable watch case is selected, the color of the watch case is changed. When "HOLD" is clicked, the image is moved to the holding image.

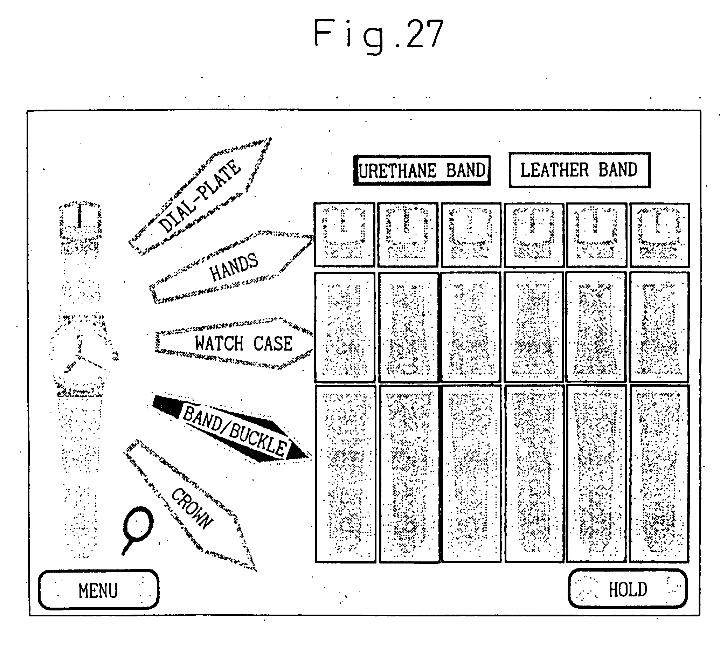

As shown in Figs. 27, 28 and 29, the band, the buckle, the crown, etc., are selected in accordance with steps similar to the above.

In this case, as shown in step S4' of Fig. 1 and in step S14' of Fig. 2, for example, it is possible to select the constituent material of the watch case when selecting the same. That is, it is possible to select either the watch case made of resin, such as plastic, or made of a metal.

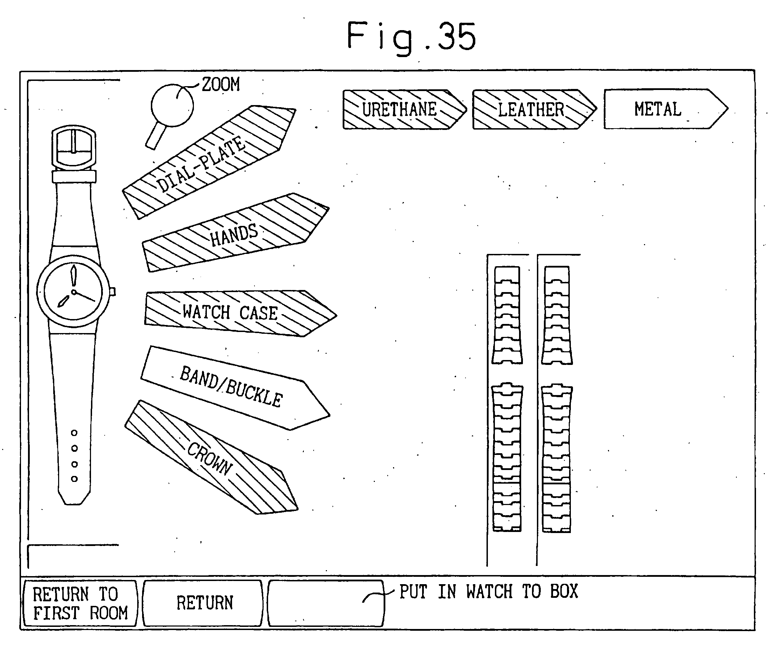

Further, as shown in Fig. 35, it is possible to select the constituent material of the watch band when selecting the same. That is, it is possible to select the watch band having favorite material from a group of the band made of an urethane foam, leather, or metal. The metal band is selected in Fig. 35. When "BAND/BUCKLE", which is indicated to the left side of the display, is selected, "METAL" is selected on the right upper side. In Fig. 35, two kinds of metal bands are shown in different colors.

Further, when the watch case or watch band is selected, it is possible to read the original design (i.e., parts digital information) created by the consumer himself. The watch maker arranges the original design on, for example, the front surface of the band, and provides it to the customer as the customer's originally-designed band. When the band is made of resin, such as urethane foam, the original design is printed. The watch case also has the same steps as the above.

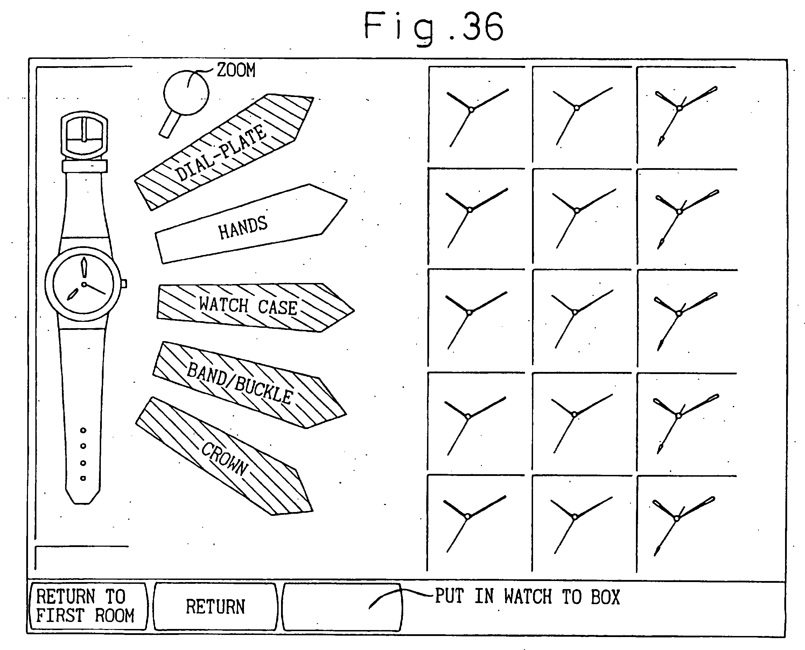

As shown in Fig. 36, it is possible to select whether the function to light up the hands is added as additional function. That is, if the light-up function is required, it is possible to select the hands having luminous material, for example, fluorescent material or noctilucent coating. The noctilucent material is provided to, for example, a tip of the hand as shown in the right upper portion of the drawing.

Further, for example, several kinds of modules are provided to drive the hands, and it may be possible to optionally select the favorite hands, by the consumer. As a result, the consumer can select the counting function which is one of functions provided in the watch. Further, it is possible to select a module for measuring external environment, for example, a module having the pressure measuring function by a pressure sensor, and a module having the temperature measuring function by a temperature sensor.

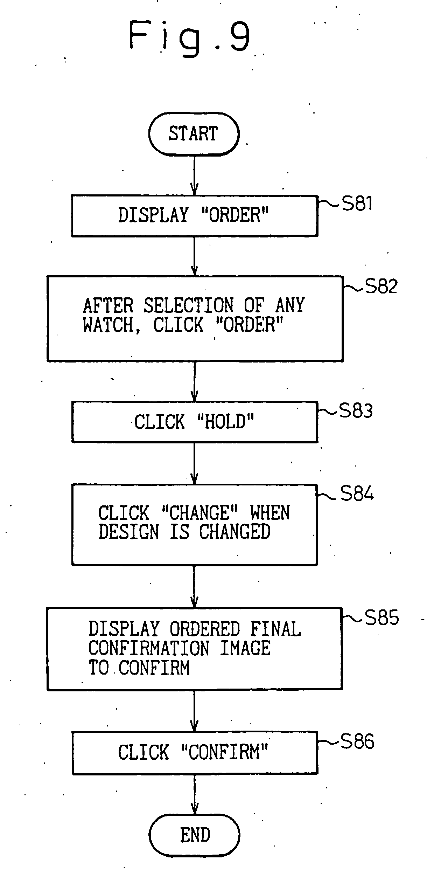

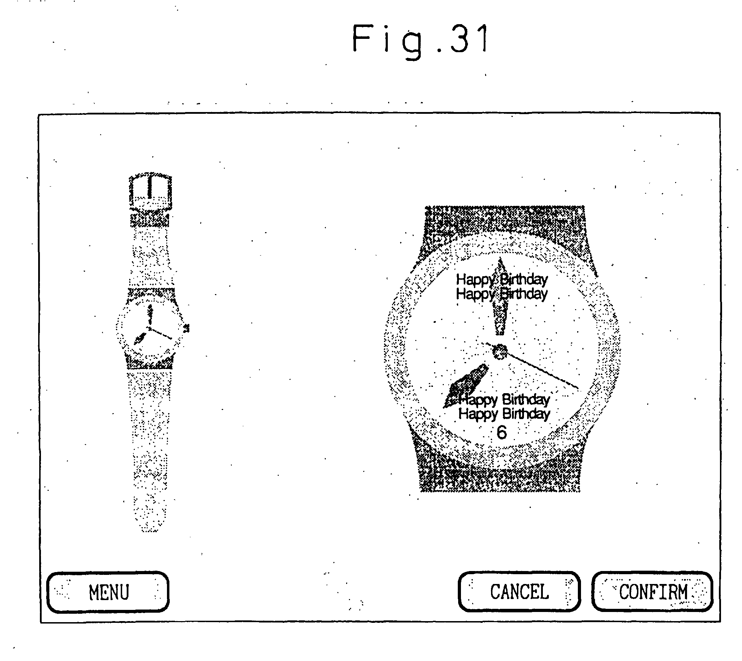

Figure 9 shows concrete steps of display of the holding image of the order confirmation in step S24 shown in Fig. 3. First, as shown in Fig. 30, the holding image is displayed, and "ORDER", "HOLD", "CHANGE OF DESIGN", "DELETE", etc., are displayed (S81). Any one of watches is selected when the customer orders next, and "ORDER" is clicked (see Fig. 31, step S82). Further, when the image is held, any one of watch is selected and "HOLD" is clicked (see Fig. 31 and step S83). Next, when the design is changed after selection of optional watch, "CHANGE" is clicked (S84). Further, the image is moved to the custom image so as to change the design coordinate. When "DELETE" is clicked, the selected watch is erased on the screen. As shown in Fig. 31, the final confirmation image is displayed in order to confirm the ordered watch (S85). Further, "CONFIRM" is clicked (S86), and the display is moved to the image of Fig. 32. When "CANCEL" is clicked, the display is moved to three holding image (see Fig. 30).

Figure 10 is a flowchart for confirming color tone. First, the watch maker asks the consumer whether confirmation of color tone is necessary or not (see Figs. 32 and 33, step S91). The consumer requests the confirmation of the color tone to the watch maker (S92). The watch maker prints some samples which some sample colors are combined with peripheral color tones in accordance with the request, and sends them to the consumer (S93).

The consumer selects either the sample color or a color close thereto in accordance with the sample information, and returns them to the watch maker (S94). The watch maker produces the dial-plate based on the color selected by the consumer in accordance with the answer of the consumer (step S95).

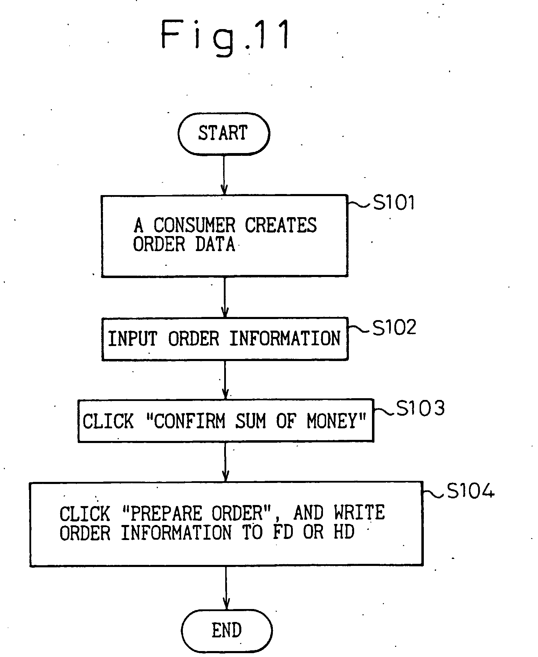

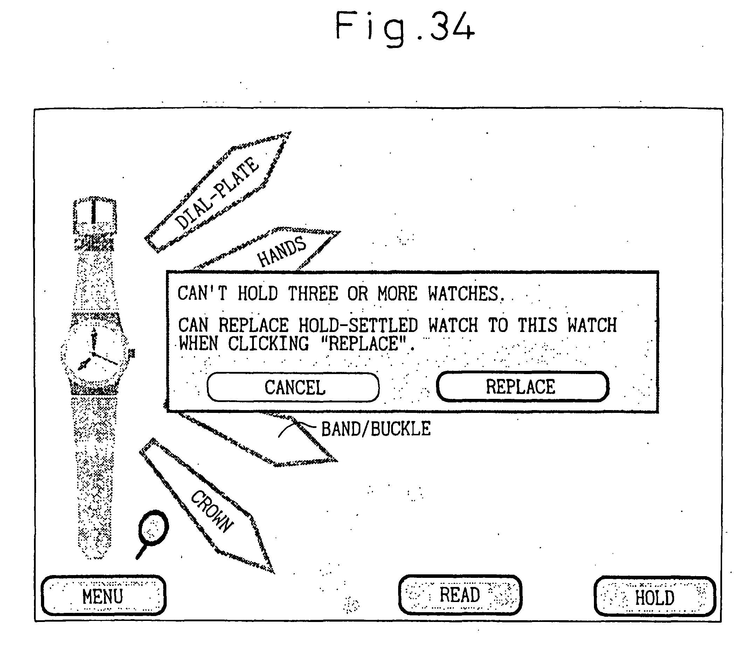

Figure 11 shows concrete steps of preparation of an order data in step S25 of Fig. 3. First, the consumer prepares the order data (S101). Next, the order information is input to the predetermined vacant column on the display (S102). Next, when "CONFIRM SUM OF MONEY" is clicked (step S103), the image of Fig. 33 is displayed. Further, "PREPARE ORDER" is clicked, and the order information is recorded on a hard disk or a floppy disk (S104). In this case, the image of Fig. 34 is in the case that three watches were already held and the fourth watch is added. When the fourth watch is held, the watch which was already held is replaced by the fourth watch.

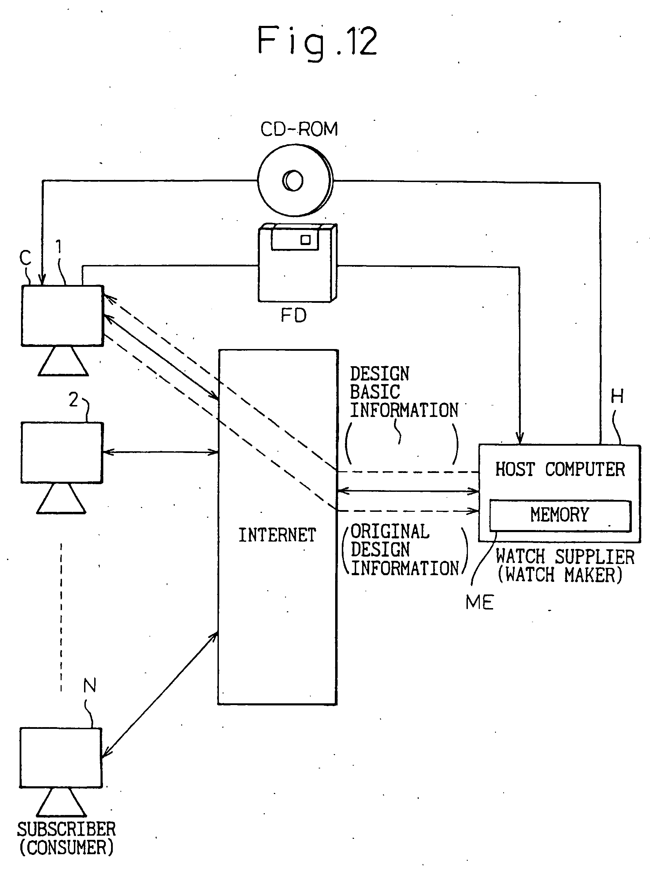

Figure 12 shows a system structure according to the first aspect of the present invention. The internet is utilized as the information communication network. In subscribers (1 to N) as consumers, for example, when the consumer 1 accesses a host computer H provided in the watch maker, which is provided as a watch supplier, through the internet, a CD-ROM is provided from the watch maker to the consumer 1. The consumer 1 creates the original design watch in accordance with the steps stored in the CD-ROM, records the originally-design watch into the floppy disk (FD) and sends it to the watch maker.

The watch maker produces the original watch and sends the completed watch to the consumer. In the drawing, ME represents an internal memory provided in the host computer, but it may be possible to utilize an external memory. A control program, which is used for operating the watch design creating system in the computer, is stored in the memory.

In Fig. 12, as shown by dotted line, the watch maker can provide the design software (or the design basic information based on the design software) having the same contents as the CD-ROM instead of the CD-ROM by utilizing the internet, or another way, to the consumer. Further, it is possible to send the original design information from the consumer to the watch maker by utilizing the internet without use of the floppy disk.

Figure 13 is an explanatory view for explaining contents of storage medium used in the first aspect of the present invention. The storage medium is provided from the watch maker to the consumer, and the CD-ROM in Fig. 12 corresponds to this storage medium. The reference number 2 represents the parts digital information. As the parts digital information, dial-plate information (dial-plate graphics information), hands information, watch case information, color information, wrist band information, buckle information, time indicators information, frame information, order information, message information, etc., are recorded in the CD-ROM. The reference number 1 represents another control program required for parts selection and trimming steps.

Concretely, other than the parts digital information, the following contents, i.e., the design software for selecting the design information provided by the watch maker, and another design software for originally creating a frame (i.e., one point drawing) and graphics (i.e.; basic drawing on the dial-plate) and for executing the trimming, i.e., enlarging, reducing, moving, overlapping of the image on the display based on the size of the dial-plate, are further stored in the CD-ROM. After trimming, the consumer records the above contents into the floppy disk, and send it to the watch maker.

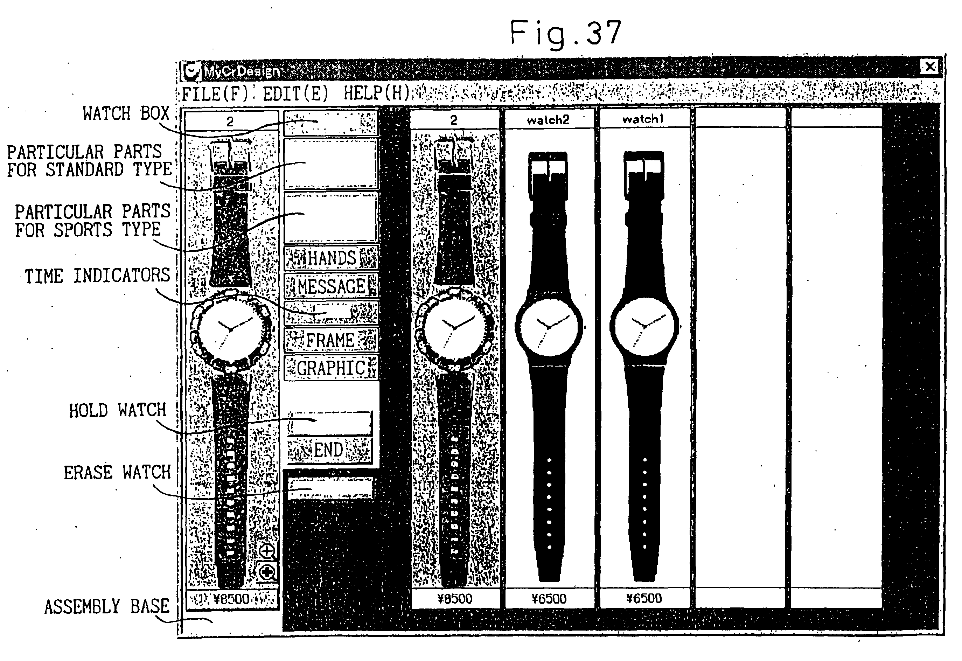

Figure 37 shows a display of a basic pattern of hands. This drawing shows three kinds of basic watch patterns which are selectable by the consumer (customer). Each indicates the difference in design, the difference in watch case material, the difference in cost, etc. The number of the basic pattern can be increased or decreased although three kinds of patterns are shown in this example. In this display, since the watch No. 2 was selected by the customer, the watch No. 2 is displayed on "assembly base" at the left side of the screen.

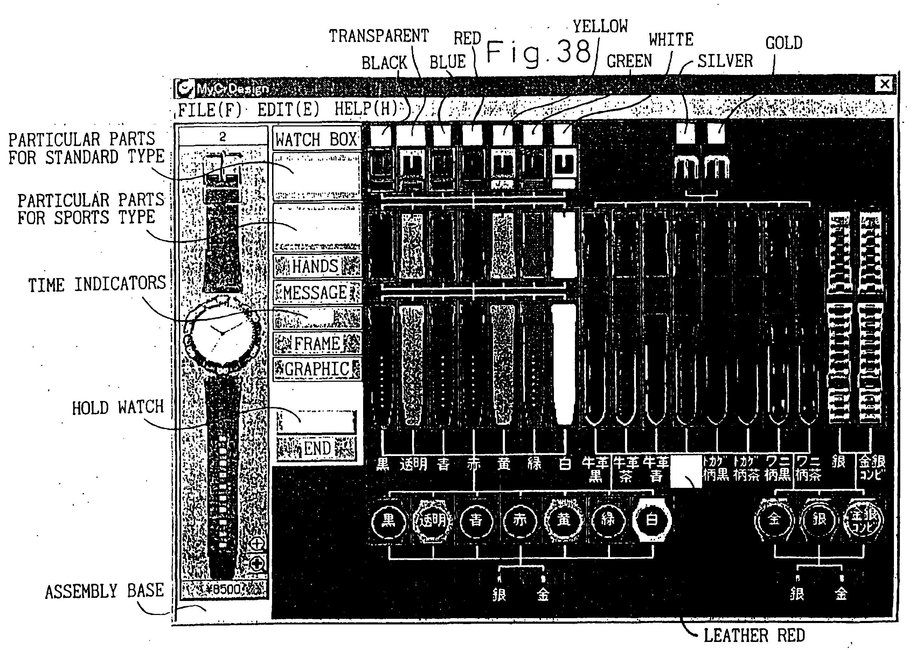

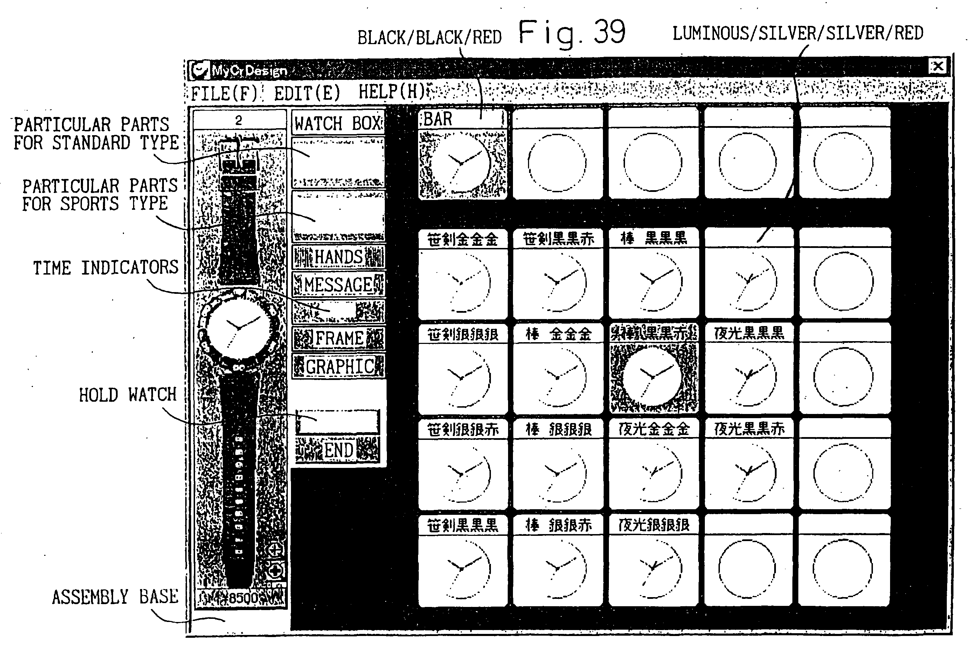

Figure 38 shows a display of watch constituent parts. Each constituent part of the watch which is selected in Fig. 37 is selected in this drawing. The color of the wrist band, the material of the wrist band, the color of the material of the metal wrist band, the color and material of the watch case, etc., are selected in this drawing. Figure 39 shows a display of design of hands. The color and shape of the hour hand, the minute hand and the second hand, and the presence or absence of the luminous paint, are displayed on the screen.

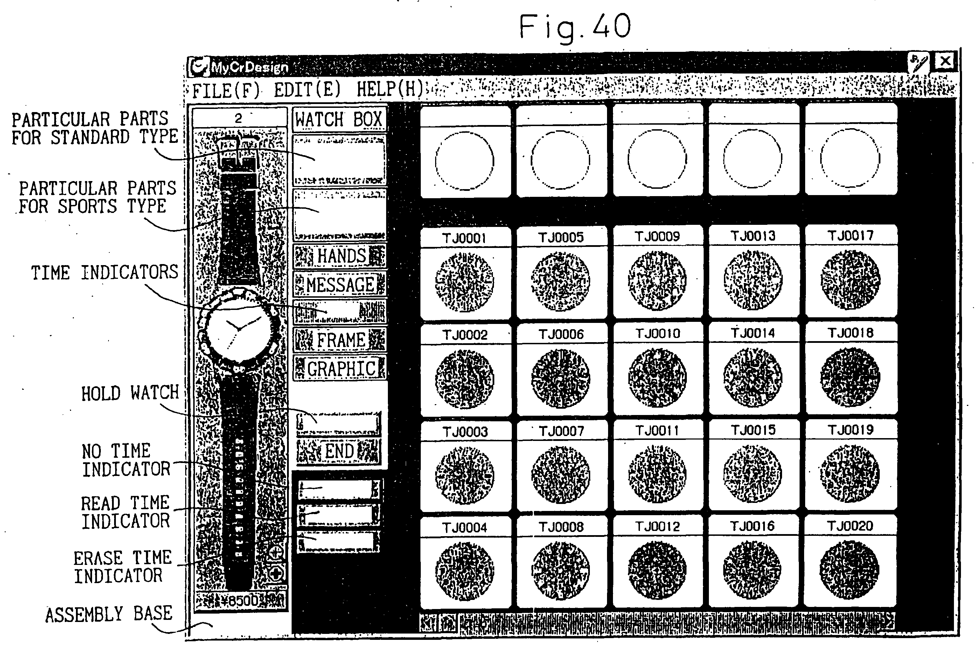

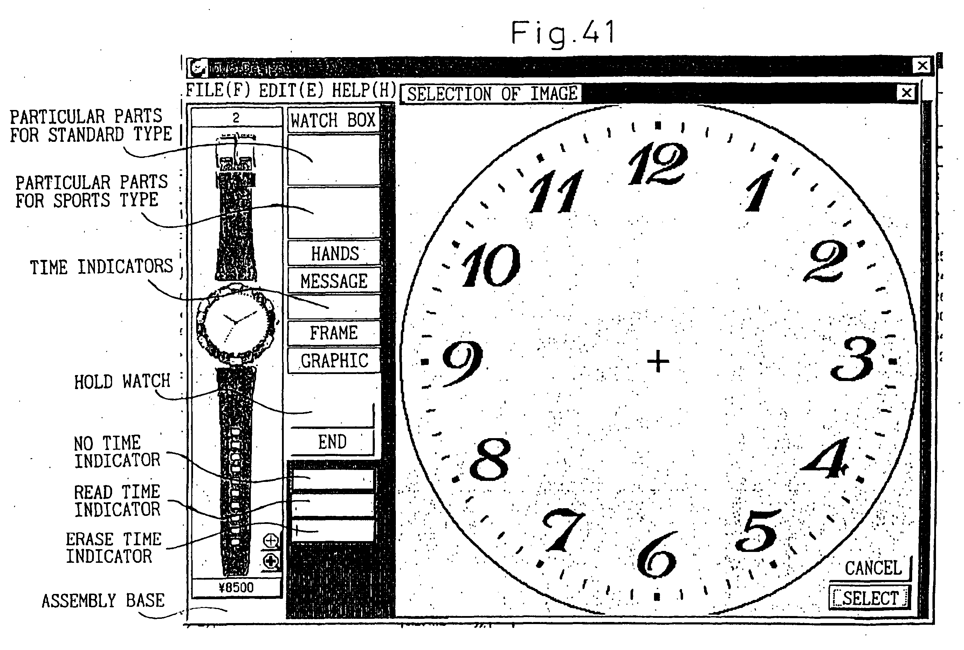

Figure 40 shows a display of time indicators. The presence or absence of the time indicators is selectable by the customer. Further, there are the time indicators either displayed by the numeral, or not displayed by the numeral. Figure 41 shows a display of selected and enlarged time indicators. The customer can confirm the watch design through this enlarged display.

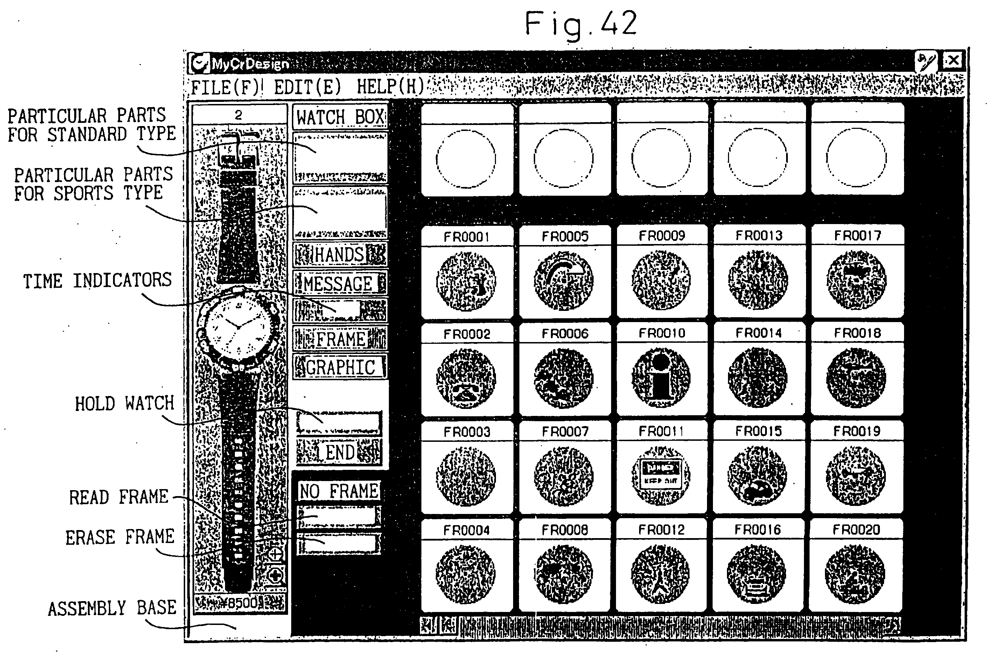

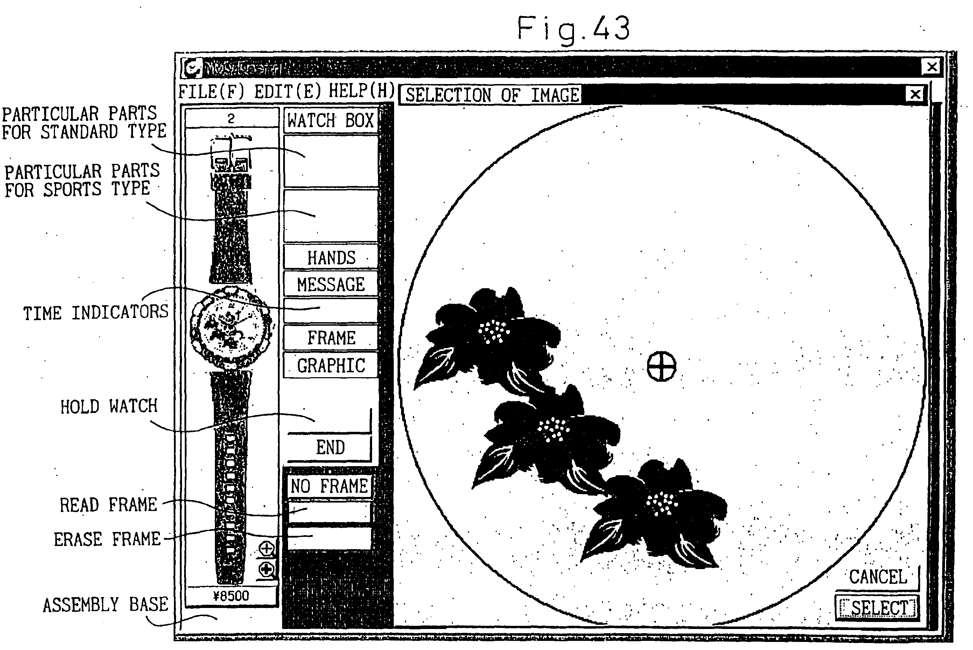

Figure 42 shows a display of frames. The "frame" means one point picture patterns which can be added by the consumer on the dial-plate. These picture patterns are not only provided by the watch maker, but also can be created independently by the customer. Further, whether the picture patterns are selected or not is optional in the customer. Figure 43 shows a display of selected and enlarged frame. The consumer confirms the selected and enlarged frame. The watch including the watch case, the wrist band, the time indicators, and the frame, which were already selected, are displayed on the "assembly base" at the left side of the screen.

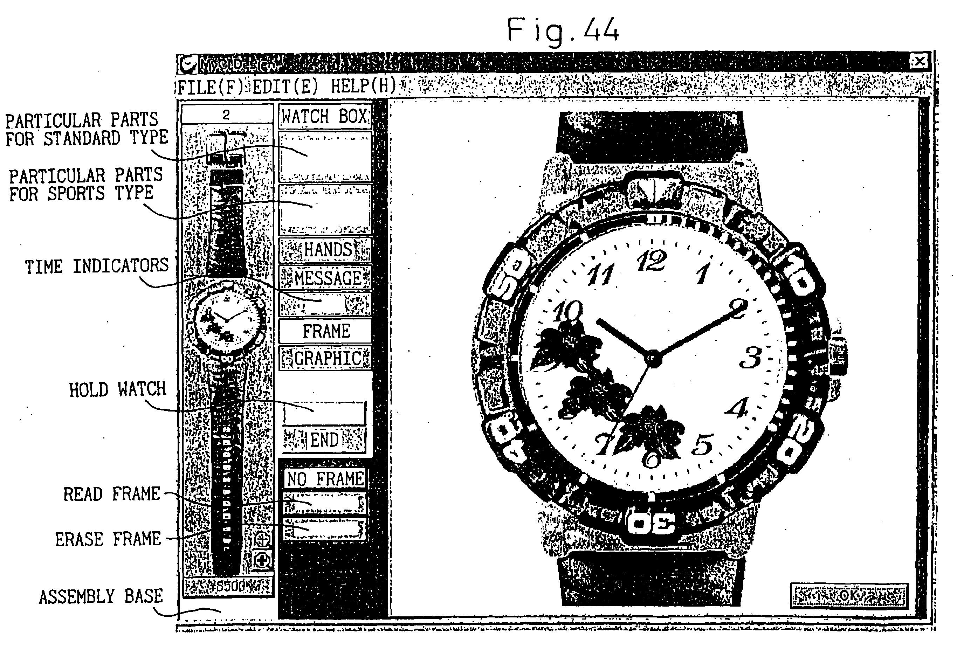

Figure 44 shows a display of already selected and enlarged watch case, time indicators, and the frame. The customer can confirm the selected and enlarged assembly of the watch.

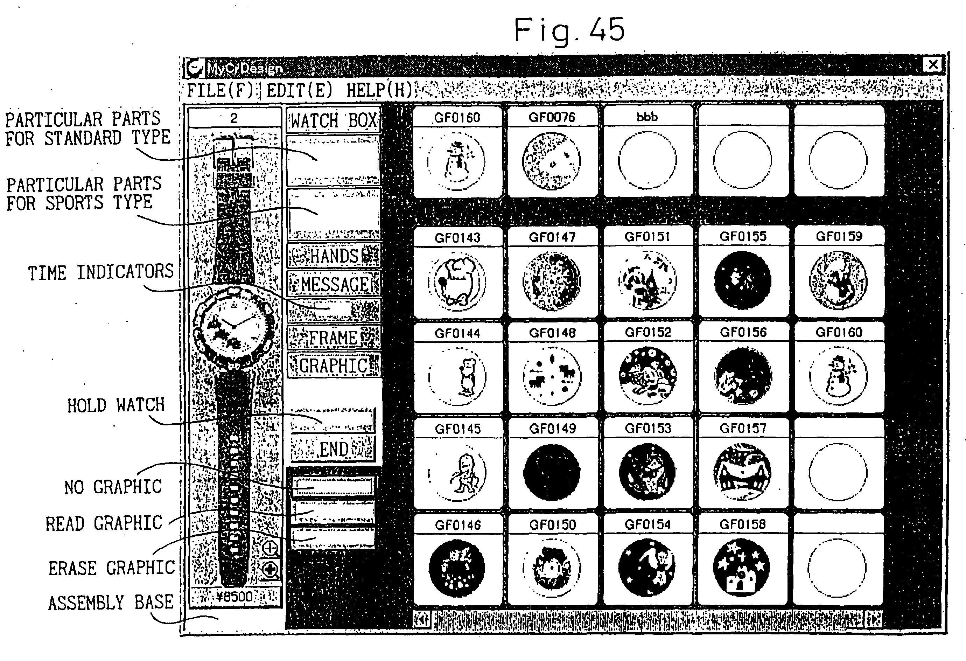

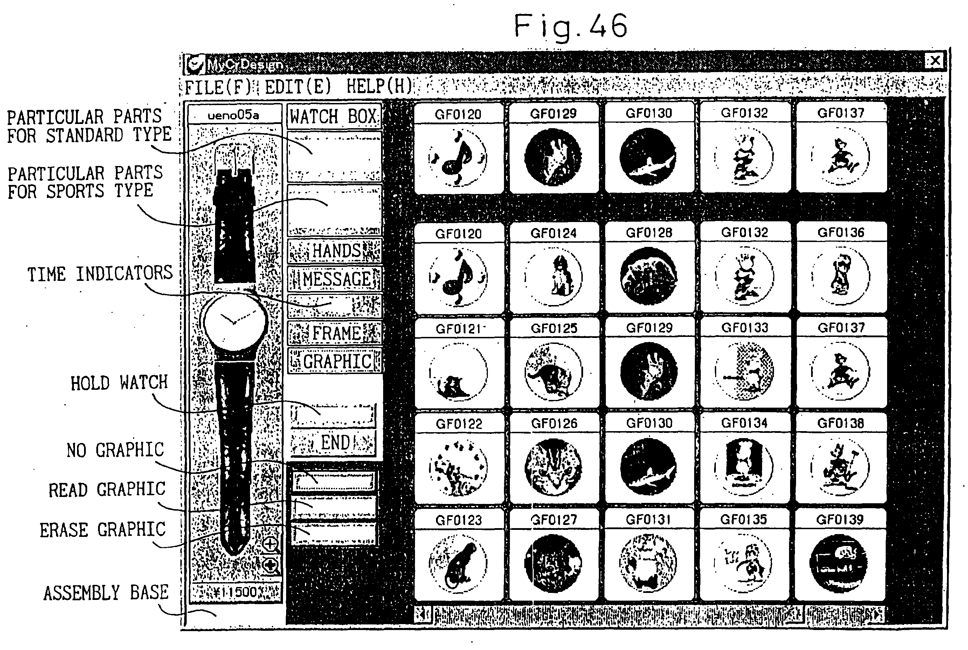

Figure 45 shows a display of graphics (the picture pattern selected for the dial-plate). The picture pattern is used as a basic picture which is used as a main design of the dial-plate. When the customer clicks the scroll button at the lower side of the screen, the list of the graphics can be moved toward left and right. As a result, the different graphics can be displayed as shown in Fig. 46. Figure 46 shows a display of graphics when selecting a different watch from the above in Fig. 37.

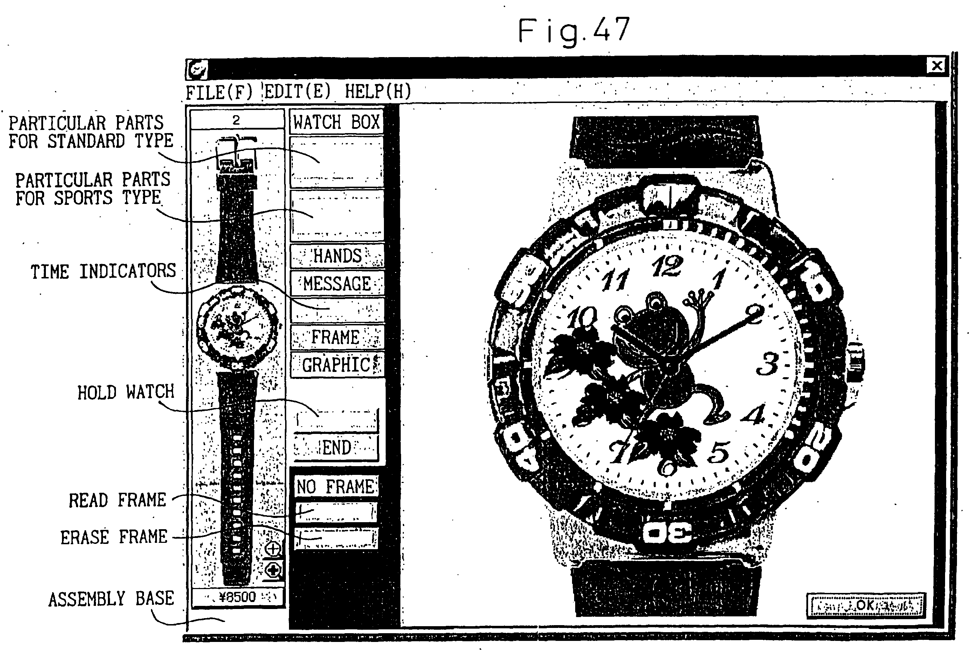

Figure 47 shows an enlarged display of the watch designed by combining already selected watch case, hands, time indicators, frame and graphics. The customer can confirm the watch which was combined by already selected constituent parts. In the case of Fig. 47, the picture pattern of a frog is selected as the graphics, and a flower is selected as the frame. As mentioned above, the customer can create various kinds of the picture patterns as the dial-plate by combining various kinds of graphics and frames. On the other hand, the customer can select only graphics without selection of the frame, and determine the graphics as the picture pattern of the dial-plate. Contrary, as shown in Fig. 44, the customer can select the frame without selection of the graphics, and determines the frame as the dial-plate.

Further, the frame is put on the graphics, the time indicators are put on the frame, and the message is put on the time indicators. That is, the graphics/frame/time indicators/message are overlapped in order from the bottom.

In this case, it is not necessary for the customer to select all of the graphics, the frame, the time indicators, and the message. The customer can freely omit one or more of them.

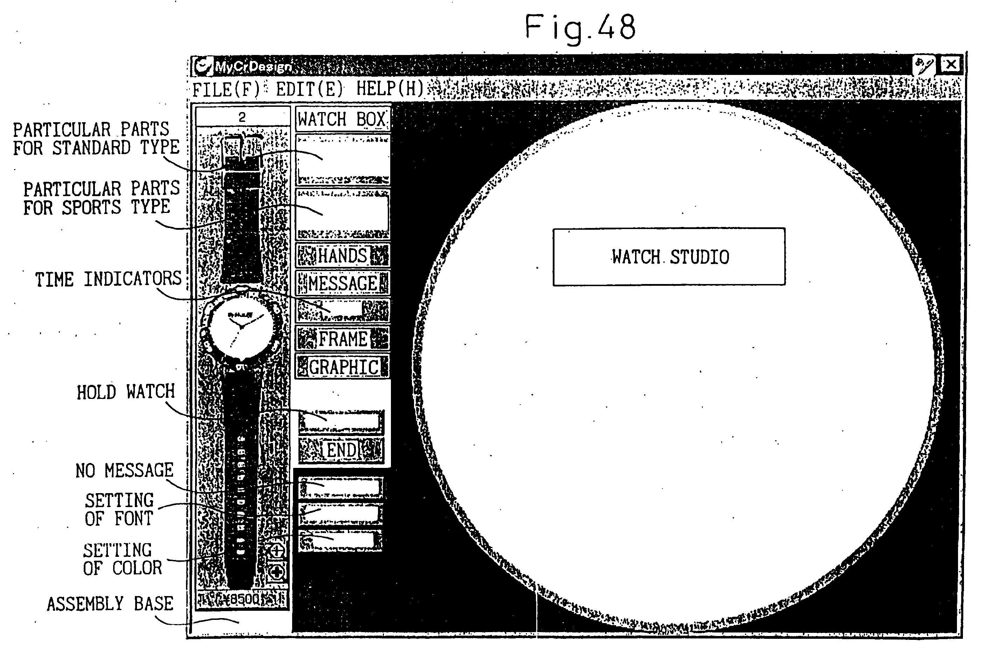

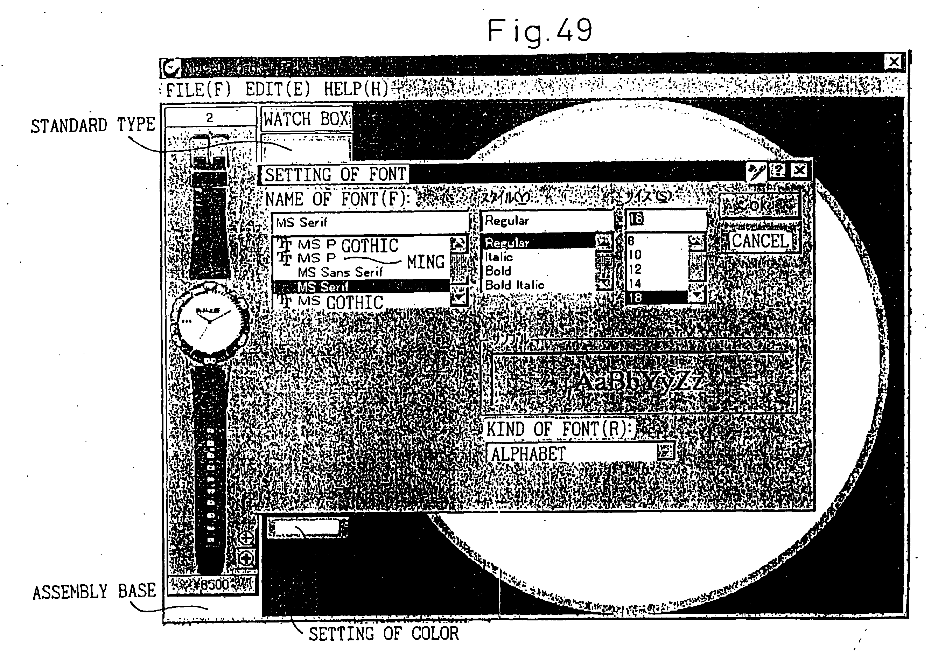

Figure 48 shows a display of a message, it is possible to select a location, number and size of the message on the dial-plate. In particular, it is possible to freely select the location and font of the message in this embodiment. Figure 49 shows a display of selected font, size and color of the message.

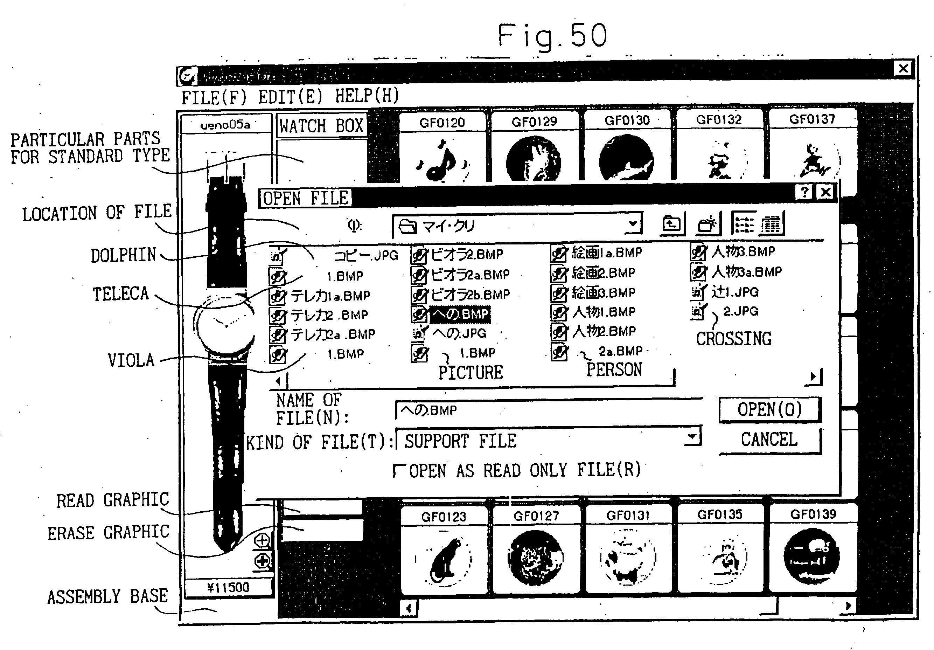

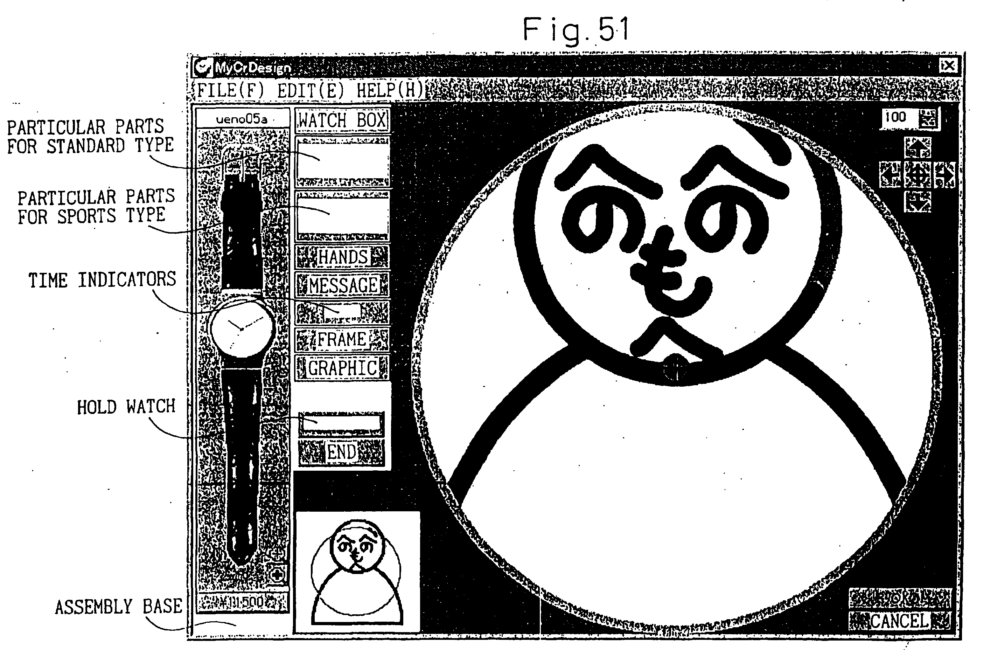

Figure 50 shows a display of graphics created by the customer. The customer reads the graphics created by himself based on the design software stored in the CD-ROM which was provided by the watch maker. The customer selects a "snowman" in this embodiment. The customer reads a file " ... BMP" in which the "snowman" is stored. Then, the image is moved to "trimming page" shown in Figs. 51 to 54.

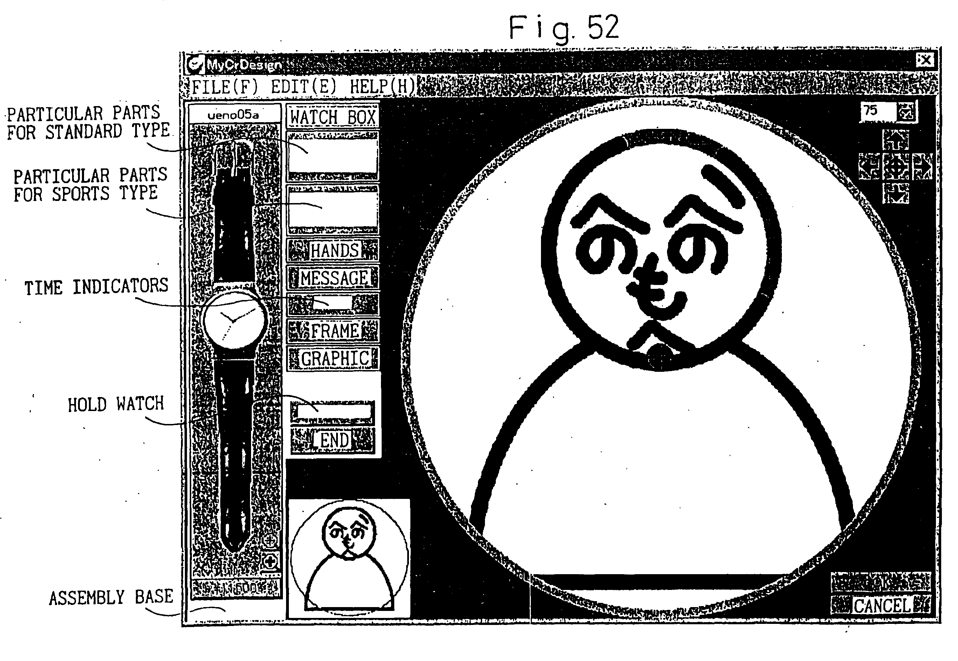

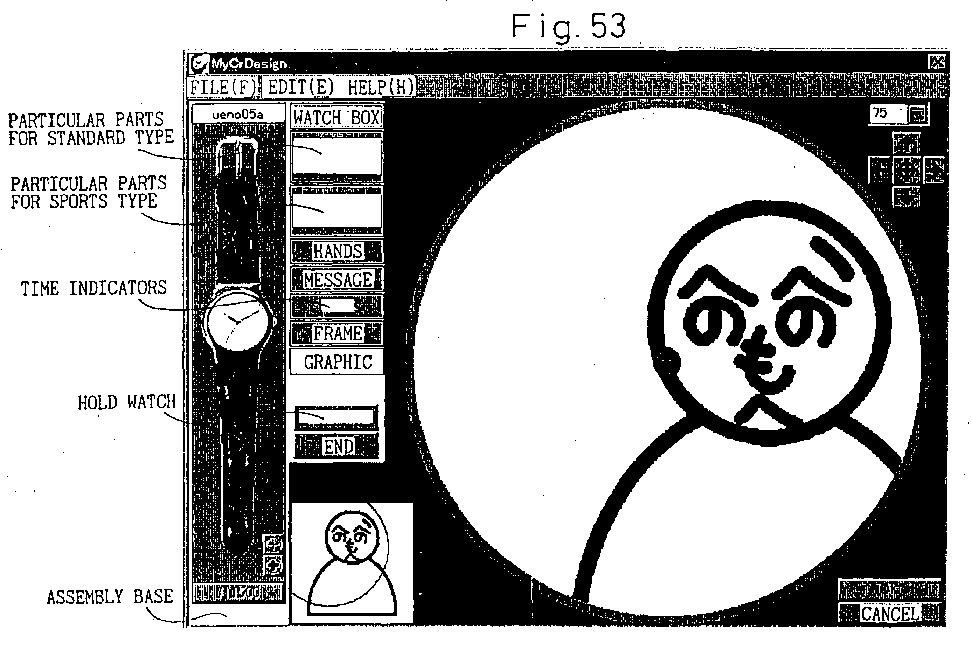

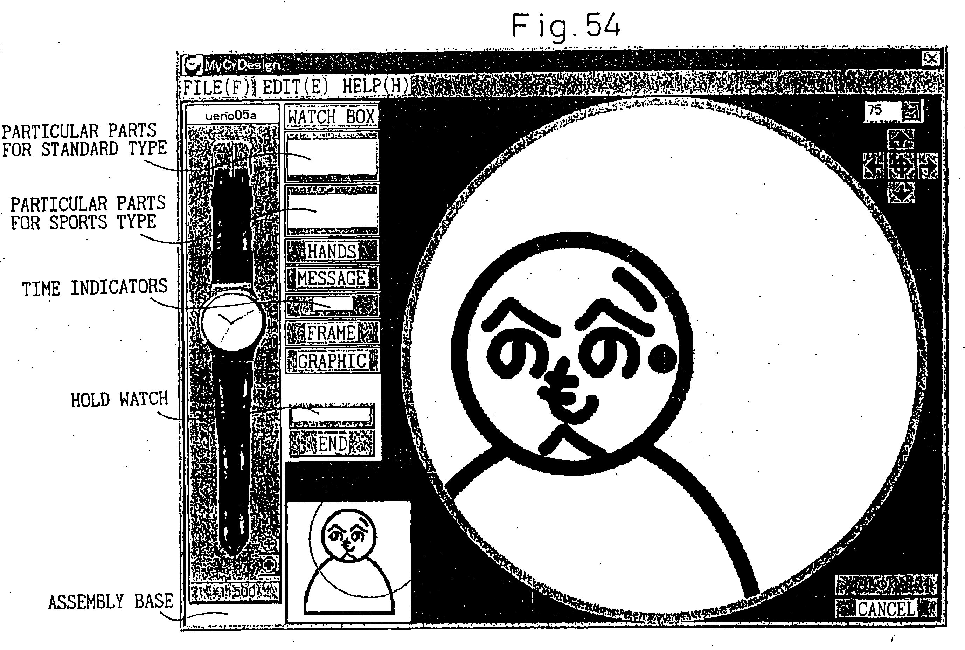

Figures 51 to 54 show displays of "trimming" by the customer. In Fig. 51, the graphic created by himself is displayed by one-to-one (100%) without reduction. "100%" is displayed at the upper and right on the screen. Further, as shown at the lower and right, when displaying the "snowman" at 100%, a part of the head of the snowman is cut off on the graphic. In Fig. 52, the graphic created by himself is reduced by "75%". When the graphic is reduced to "75%", almost all of graphic can be contained in the dial-plate. The "movement" of the graphic is shown in. Figs. 53 and 54. That is, the graphic reduced to "75%" can be moved to appropriate location on the dial-plate. The graphic is moved to the left side in Fig. 53, and to the right side in Fig. 54. The movement of the graphic is executed in relation of the time indicators, the message and a center hand hole. Further, when the "OK" button is clicked, the image is moved to Fig. 46. The design of the "snowman" is displayed as one list of the graphics (i.e., picture patterns previously stored in the CD-ROM) shown in Fig. 46. As well as "selection of the dial-plate" mentioned above, when the picture pattern of the "snowman" is clicked, the "snowman" can be selected as the picture pattern of the dial-plate. Further, instead of the "snowman" created by the customer himself, it is possible to utilize a digital image taken by an image scanner, a digital image taken by a digital camera, an image taken from a photo CD, with trimming, as the graphics of the dial-plate.

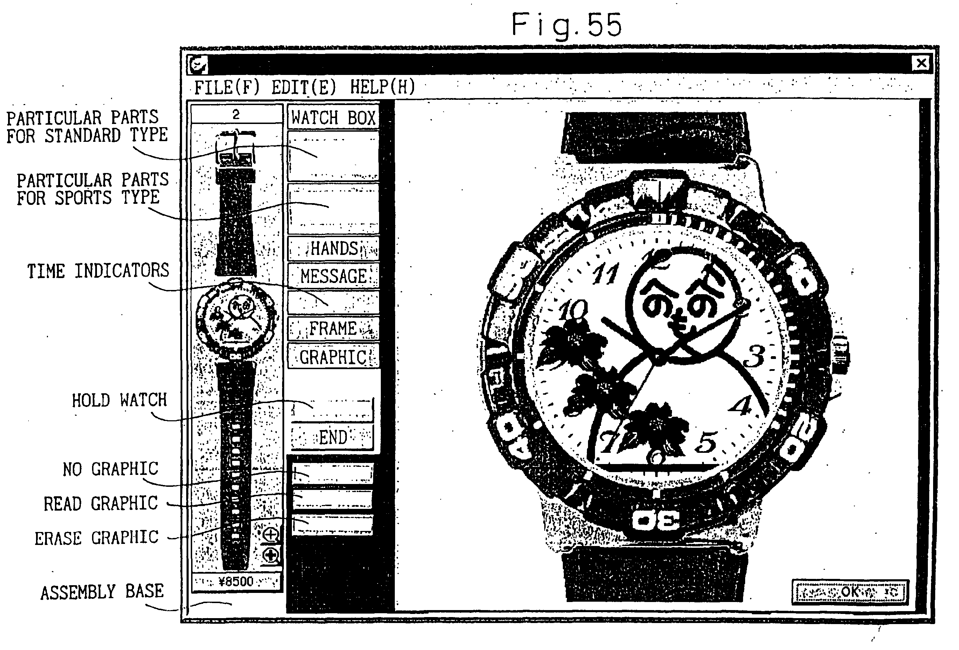

Figure 55 shows a display of enlarged watch design created by combining the graphics, the hands, the frame, the time indicators. The whole of the watch design is displayed at the left side of the screen.

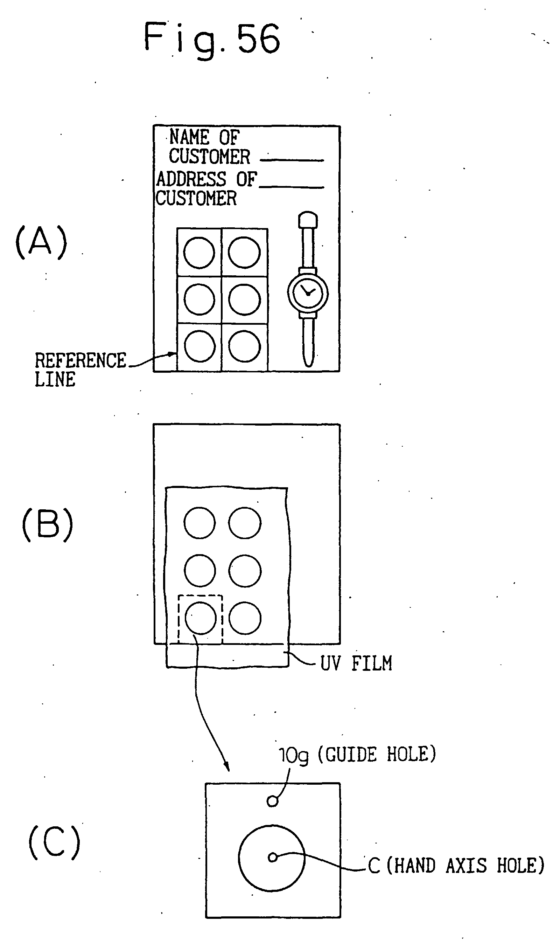

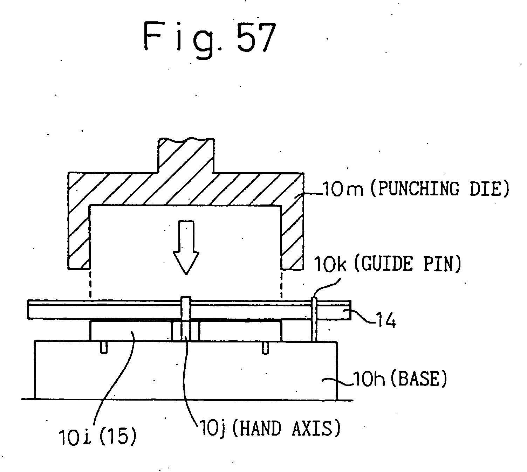

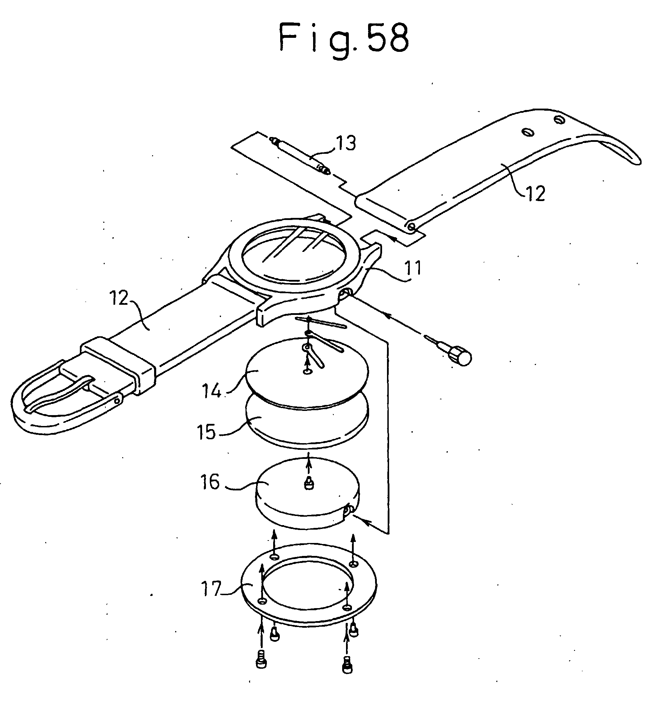

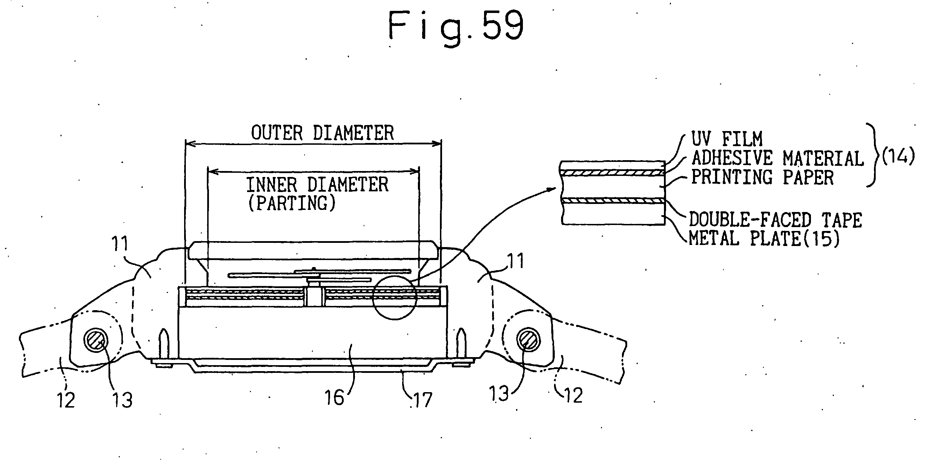

Figures 56 to 59 are explanatory views of production steps of the original design watch at the watch maker. Fig. 56(A) shows one example of a production sheet, Fig. 56(B) is an explanatory view of an ultra-violet sheet, and Fig. 56(C) is an explanatory view of a hand guide hole. Fig. 57 is an explanatory view of punching of the dial-plate. Fig. 58 is an exploded and perspective view of assembly of the original design watch. Figure 59 is a detailed cross-sectional view after assembling processes shown in Fig. 58.

In Fig. 56(A), after various image processes mentioned above are completed on the display, a photographic paper is printed out by a color printer as a production sheet. As shown in the drawing, the image on the color printer is close to a picture. On the production sheet printed by the color printer, a plurality of designs, each of which is the same as the design actually drawn on the dial-plate, are arranged, and an outer view of the completed watch is drawn on the production sheet. Further, an address, a name, etc., of the customer, are printed. Although a plurality of dial-plates are arranged on the sheet, this is because, some dial-plates are used as an auxiliary plate if an operator fails to punch the dial-plate on the punching process. Further, remaining dial-plates are stocked as service parts.

Further, by drawing the outer view of the completed watch on the production sheet, there is an effect in which the operator can correctly assemble the dial-plate, the watch case and the wrist band in accordance with the order of the customer. Accordingly, it is possible to avoid incorrect selection and assembly of the dial-plate, the watch case and the wrist band, which are different from the order of the customer.

As shown in Fig. 56(A), four reference lines are provided around each dial-plate. The reference line surrounds the dial-plate with a square. As another example, the reference lines are drawn with mesh-like form, and in each mesh, the dial-plate is located. This production sheet is applicable to accessories, such as a T shirt, and ornaments, such as a necklace, a finger ring, etc.

The production sheet is delivered to a manufacturing division in the watch maker. In the manufacturing division, first, as shown in Fig. 56(B), an ultra-violet cutting film (i.e., UV film) is bonded, or bonded with pressure, on the production sheet in order to prevent color fading of the dial-plate. Further, as shown in Figs. 56(A) and 56(C), one dial-plate is cut off with a rectangular shape along the reference line (This is called "image sheet" below.), and at least two continuous sides of the image sheet (an outer shape of the image sheet) are determined as a reference. Further, based on this reference, a center hole (a hand axis hole) is provided in the center of the dial-plate, and a guide hole 10g is provided in the upper side of the dial-plate. The guide hole 10g is used for positioning the dial-plate when punching the same as mentioned below.

Figure 57 is a schematic view for explaining a fixing method of the image sheet on the metal board after positioning, and a punching operation of the dial-plate for punching the image sheet with a predetermined size and bonded on the metal sheet.

First, the explanation is given to the fixing method of the image sheet on the metal board after positioning. Two legs (both made of copper) are fixed by spot-welding or blazing to the predetermined position in order to fix a drive unit (i.e., a movement) 16 on the back of the metal board 10i made of a brass consisting of a copper arroy. Next, a nickel film is coated by a wet-plating method or a dry-plating method on the surface of the metal board 10i in order to prevent occurrence of rust.

Next, a leg of the metal board 10i and the center hole (the hand axis hole) are inserted to a leg hole of a work base 10h (a base) and a center pin 10j, the metal board 10i is positioned on the work base 10h (i.e., the base). Next, the center hole (the hand axis hole) of the image sheet 14 and the guide hole 10g are inserted to the center pin 10i of the work base 10h (the base) and a guide pin 10k provided outside of the base, and the image sheet 14 is positioned to the metal board 10i through a double-faced tape (a double-faced adhesive tape) or an adhesive.

Next, a method of punching the dial-plate (the image sheet bonded to the metal board 10i) is explained below. The center hole (the hand axis hole) of the image sheet 14 fixed to the metal board 10i and the guide hole 10g are inserted to the center pin 10j of the work base 10h (the base) and the guide pin 10k provided outside of the work base, after the above steps, the image sheet 14 is punched by a punching die 10m of which inner diameter is fitted to an outer shape of the metal board 10i.

In this case, the positioning methods at the steps of punching the center hole (the hand axis hole) and the guide hole 10g on the dial-plate, bonding the image sheet 14 on the metal board 10i, and punching the outer shape of the image sheet 14, can be executed by image processing, other than the above tools. Further, the punching method of the outer shape of the image sheet 14 can be executed in relation to the image processing.

Figure 58 is an exploded and perspective view of assembly of the original design watch, as shown in the drawing, a metal board 15 is put on the hand axis which is provided at a center of a drive unit 16 of the watch, and the image sheet 14, which is cut off in Fig. 56, is put thereon. Further, the hour hand, the minute hand, and the second hand are mounted on the dial-plate, a watch case 11 having a windowscreen is mounted thereon, a back lid 17 is provided, and each of four holes are fixed by a screw. In this case, the wrist band 12 is engaged to the watch case 11 by a spring bar 13.

Figure 59 is a detailed cross-sectional view after assembling processes shown in Fig. 58. As shown by enlarged view in a circle, the double-faced tape is bonded on the metal board 15, and the image sheet 14 having the UV cutting film bonded by the adhesive is provided thereon.

The original watch completed by the above processes is delivered to the customer, or another person (a friend) as requested by the customer.

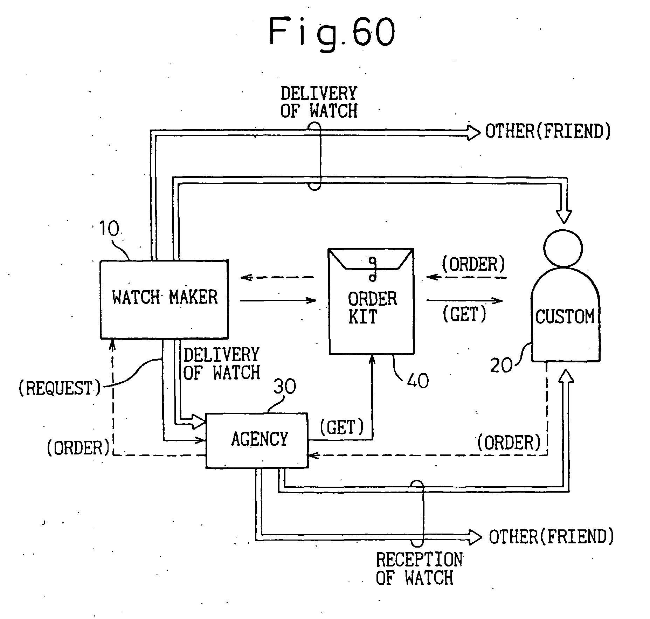

Figure 60 is a system structural view of the watch design creating system in the second aspect of the present invention. The reference number 10 is a watch maker, 20 is a consumer (called "customer"), and 30 is an agency (for example, a convenience store, a department store, a watch shop, etc.). Further, 40 is an "order kit" which is sent from the watch maker to the customer. The contents of the order kit is formed by an "explanation sheet", an "order sheet", a "transfer sheet", and a "reply envelope". The order kit is available in such a way that the customer 20 directly buys the order kit 40 from the watch maker (for example, the customer can buy it at an opportunity of any "event" by the watch maker), or buys it in the agency 30.

The customer directly returns the reply envelope by enclosing the order sheet and the transfer sheet in which the predetermined matters are filled up, and the picture is bonded on the order sheet. The watch maker makes the original design watch, and delivers it to the customer. Further, when the customer sends it to the friend as a "gift", the watch can be delivered to another person (the friend) by the watch maker, if the destination of the friend can be clarified. Further, the customer can order the watch to the watch maker through the agency, and the completed watch can be delivered from the watch maker to the customer through the agency.

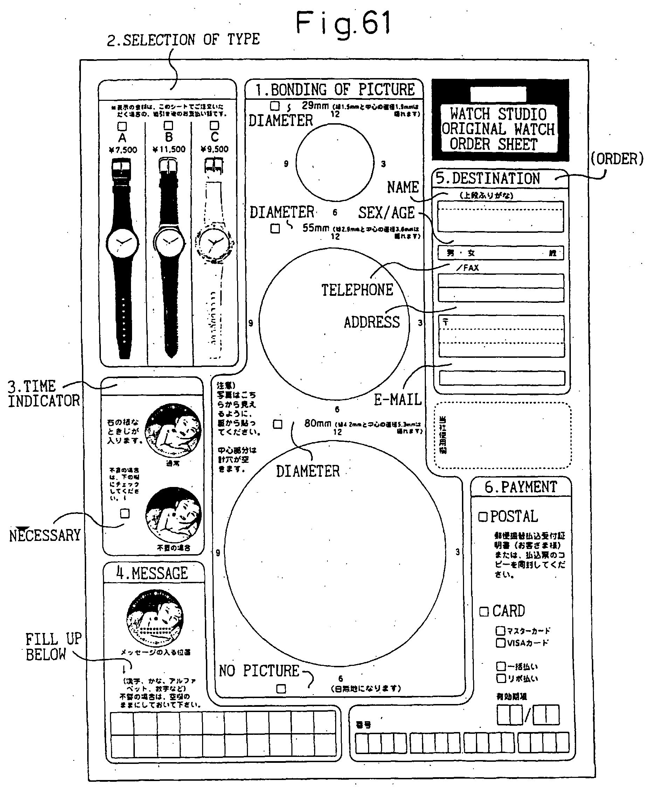

Figure 61 shows one example of an order sheet according to the second aspect. Briefly, reference number 1 is a photo bonding column which has three holes each having different sizes. The customer bonds the photograph or picture which is intended to be used as the design of the dial-plate, from the back of the dial-plate by using, for example an adhesive tape. In this case, since the size of the dial-plate corresponds to the upper most small hole when actually using as the watch, when the photograph or picture is bonded to the middle hole or the largest hole so that the photograph or picture is reduced. Further, as mentioned below, the customer bonds (fixes) the picture from the back of the order sheet by using the adhesive tape. In this case, it is possible to color the dial-plate with white, yellow or red colors, without use of the picture, and to print only the message on the colored dial-plate.

Reference number 2 is a type selecting column for selecting a type of the watch. The customer selects the desirable type from three kinds of watches based on the cost and design (the watch case, the wrist band, etc.). For example, in the case of the watch case, A is in the case of a watch case made of a resin, B is in the case of the watch case made of the metal, and C is in the case of a sport type. In this embodiment, when the type of the watch is determined, the cost can be also determined.

Reference number 3 is a time indicator column, and the customer can select whether the time indicators are required. That is, some customers require only the hour and minute hands, and do not require the time indicators.

Reference number 4 is a message column, and the message can be provided within ten characters per one row and within two rows, on the dial-plate. The customer can freely select whether the message should be provided or not. When the customer requires the message, and when the customer fill ups the favorite massage by handwritten characters, after "centering", the message is printed at the center of the dial-plate.

Reference number 5 is a destination column for filling up an address, a name, a telephone number, etc. Further, reference number 6 is a payment column for explaining customer's payment method to the watch maker. In this embodiment, in accordance with the customer's requirement, it is possible to pay the money by using "postal transfer" or "card".

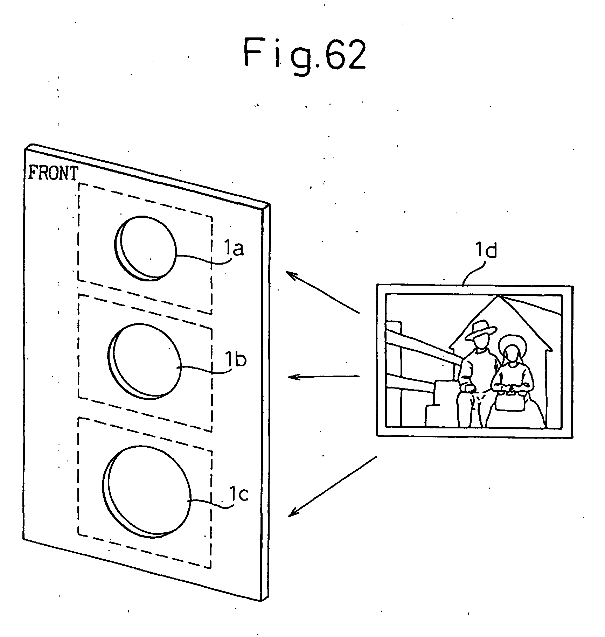

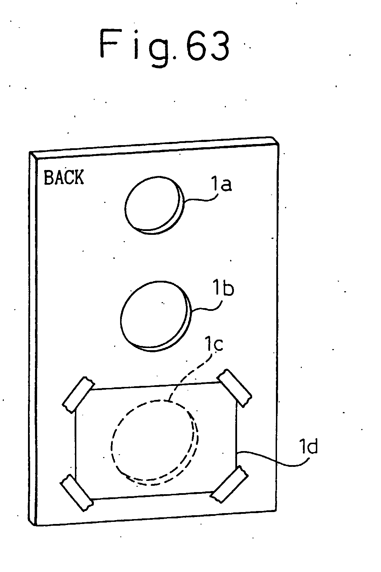

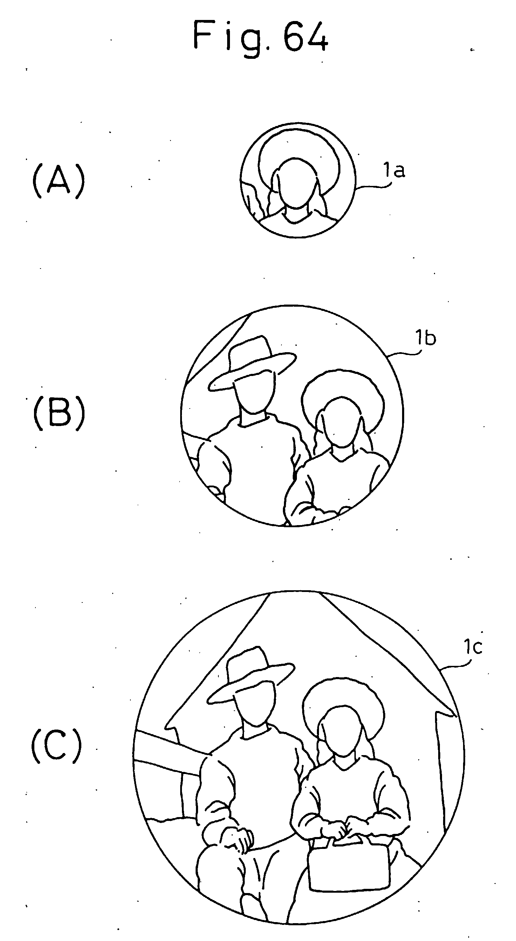

Figures 62 to 64 are detailed explanatory views for bonding of the picture on the picture bonding column 1. As shown in Fig. 62, the favorite picture 1d, or others is bonded by the customer to any one of the small hole 1a, the middle hole 1b and the large hole 1c, from the back of the column as shown in Fig. 63. Figs. 64 (A), (B) and (C) show the picture bonded from the front.

Since the small hole 1a represents an actual size of the dial-plate, when using this hole 1a, the picture is used on the dial-plate without change. Accordingly, for example, in the case of the picture 1d formed of many members, the most important portion must be selected by the customer (i.e., the picture is trimmed). On the other hand, since the hole 1c is large, when bonding the picture here, almost all of the picture 1d formed of the many members can be used for this hole 1c, but the picture is reduced in the actual watch. Further, the hole 1b has the middle size, when the picture is bonded here, although the customer can freely select the desirable range which he intends to use as the dial-plate, the picture is reduced in the completed watch.

In this embodiment, three holes 1a to 1c are provided on the order sheet as a compartment means for determining the desirable range of the photograph or picture on the dial-plate, the size of the hole is not limited to three size. That is, by increasing the number of holes each having different size, the customer can perform more detail trimming for the photograph or picture. Further, it is possible to provide another hole smaller than the actual size of the dial-plate. When the photograph or picture is bonded on such another hole, the photograph or picture compared range of the hole is enlarged in an actual use so that the enlarged photograph or picture is used on the completed watch.

Further, as the material of the order sheet, it is preferable not to change the size of the sheet depending on the humiddleity or temperature. This is because, when each size of the small hole 1a, the middle hole 1b and the large hole 1c is changed, the size of the image scanned by the image scanner is also changed so that the pattern of the dial-plate is slightly changed. In general, it is preferable to utilize a paper used for a block copy, as the order sheet.

Further, in the back of the order sheet, for example, when bonding the photograph or picture by using the adhesive tape, it is preferable to provide the coating so as to be able to bond the adhesive tape again so that the customer can repeatedly try positioning of the photograph or the picture. As one example of the coating, it is possible to provide laminated resin, for example, a bonded PP (polypropylene). This is provided by coating the adhesive to the polypropylene film, and by bonding it with pressure at the back of the order sheet.

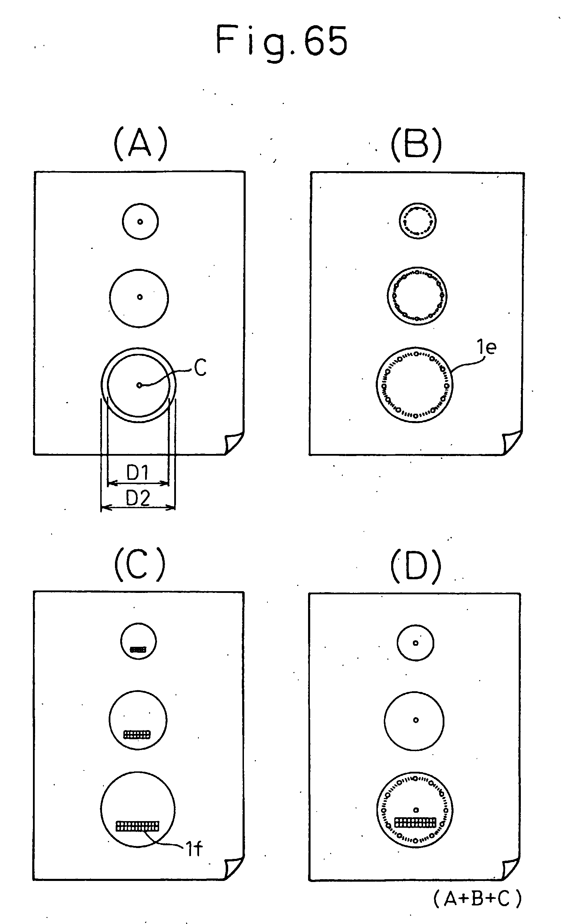

Figure 65 (A to D) shows examples of guide sheets (transparent sheets). (A) shows a guide sheet of the hand axis hole indicating the center position of the dial-plate and an effective range of the dial-plate. Since the hand axis hole C is always provided at the center of the dial-plate in the completed watch, the hand axis hole is always utilized when bonding the photograph. In particular, the guide sheet is utilized for bonding the picture in such a way as, when bonding the photograph of the face, the center of the face is not positioned to the hand axis hole. That is, when bonding the photograph or picture on the order sheet, this guide sheet is provided on the order sheet in order to position the photograph or picture so that it is possible to realize the positioning without trouble.

Further, the range of the inner diameter D1 is an effective range of the dial-plate which can be actually observed, and it is called a "parting portion". On the other hand, the outer diameter D2 corresponds to the size of the hole 1a, 1b and 1c of the order sheet. Accordingly, it is necessary to notice the range shaded by the outer portion of the inner diameter D1, i.e., the outer portion of the effective range when bonding the photograph, as is obvious from the assembly of the watch mentioned below.

Fig. 65(B) shows a guide sheet for indicating the position of the time indicators. Although the time indicators 1e can be omitted in accordance with requirement of the customer, when providing the time indicators, it is necessary to notice the range shaded by the time indicators so as not to shade the important portion of the photograph, particularly, the photograph of the face. Fig. 65(C) is a message guide sheet for indicating the position of the message on the dial-plate. The message 1f can be provided on the dial-plate within 10 characters per one row and within two rows-using the font desired by the customer. In this case, since the message is positioned at the center of the dial-plate, it is necessary to notice the range of the photograph shaded by the message when bonding the photograph.

Fig. 65(D) shows a collective guide sheet in which the above guide sheets (A) to (C) are collected. As shown in the drawing, this guide sheet shows various positions, i.e., the hand axis hole of the center, the time indicators of at peripheral portion, the message at the lower portion of the center, etc. Accordingly, the role of the guide sheet can be sufficiently filled by only one sheet.

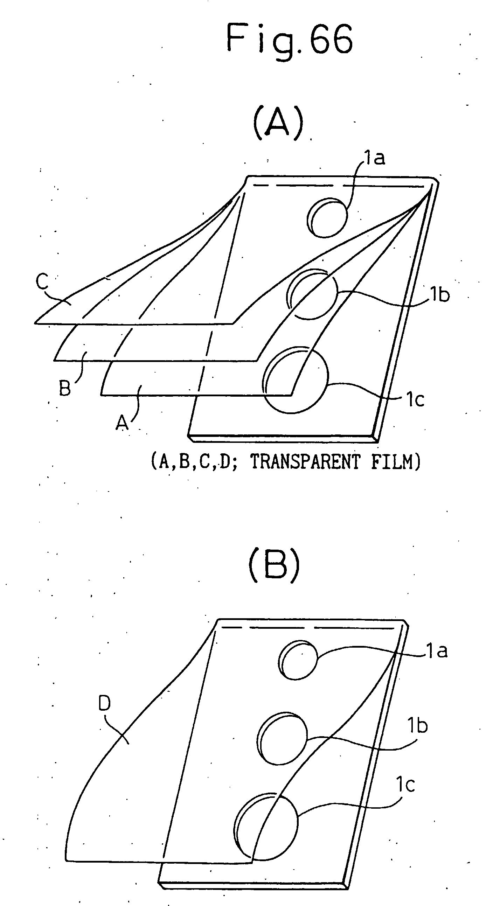

Figures 66(A) and (B) show another example of the guide sheet. As shown in Fig. 66(A), the guide sheets (A) to (C) shown in Fig. 65 is collectively bonded on the upper portion of the order sheet in which the small hole 1a, the middle hole 1b and large holes 1c are provided so that the positioning of the hand axis hole of the center, the time indicators and the message of the lower portion of the center, can be easily realized in the photograph. Further, in Fig. 66(D), the guide sheet shown in Fig. 65(D) is bonded to the order sheet having the small hole 1a, the middle hole 1b and large holes 1c.

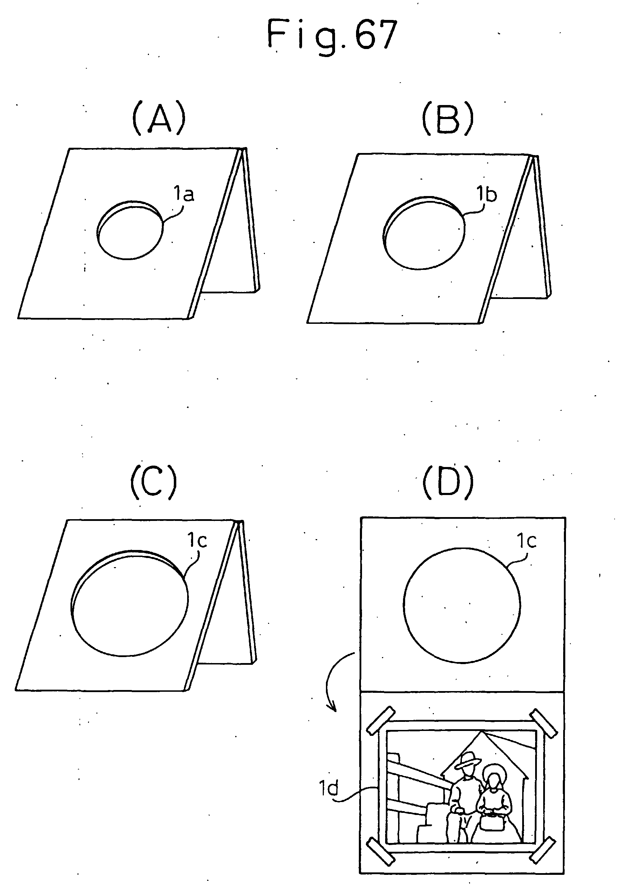

Figure 67 (A to D) shows another example of the picture bonding column in the order sheet. A separate sheet (A) to (C) is provided for each hole of the small/middle/large hole. By providing the picture bonding column for each hole, the customer can easily realize the positioning when bonding the picture 1d as shown in (D). Further, as mentioned below, when taking the image into the computer in the watch maker, there is a merit in which the process becomes easy.

That is, in the case of the order sheet shown in Figs. 62 and 63, although the photograph must be bonded from back side, in this embodiment, since the picture 1d is bonded to the second base paper as shown in (D), the positioning can be easily performed by covering the first paper. Further, when the picture is taken into the image scanner, a lot of time is required for positioning depending on the location of the picture in the type of Figs. 62 and 63. On the other hand, since the picture can be set separately to each base paper in the case of Fig. 67, the positioning becomes easy so that it is possible to realize effective entering of the image.

In this case, it is not necessary to bond the guide sheet to the order sheet. That is, the guide sheet can be previously enclosed in the order kit. Further, if the outer diameter of the guide sheet is set so as to be approximately equal to the outer diameter of the order sheet, it is possible to guide the photograph or picture by only overlapping the guide sheet with the order sheet.

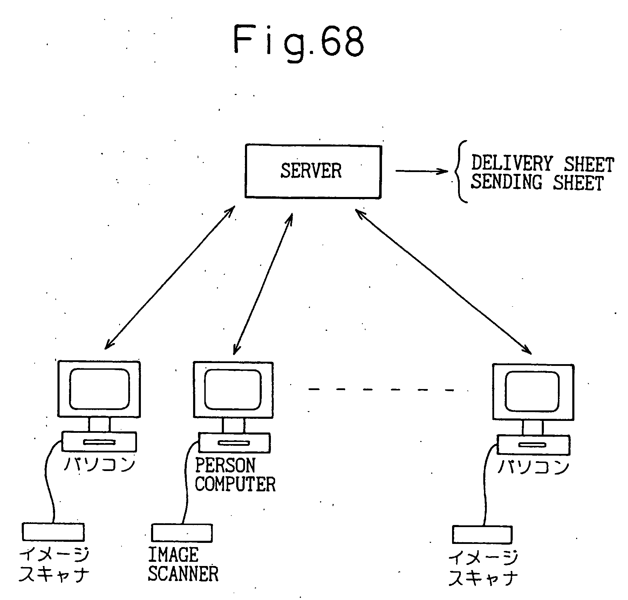

Figure 68 shows a system structure at the watch maker in the second aspect of the present invention. As shown in the drawing, in the watch maker, the system is constituted by a plurality of personal computers each of which creates the original design watch on the display in accordance with the order sheet from the customer, and a server connected to the plural personal computers each managing delivery to the customer and payment from the customer. The personal computers are arranged based on the number of operators, and each personal computer is connected to an image scanner having high resolution and a CD-ROM drive. Concretely, a "delivering sheet" is printed out from the server.

First, when the operator in the watch maker receives the order sheet from the customer, the photograph or picture used as the dial-plate is taken by the image scanner, and the image is input to the personal computer by the digital image. The reduction rate of the photograph is previously set when the photograph is taken into the image scanner. In this case, the reduction rate can be determined based on the resolution value (DPT: Dot Per Inch) of the image scanner. Further, after the photograph was taken into the personal computer, it is possible to reduce the digital image in the personal computer.

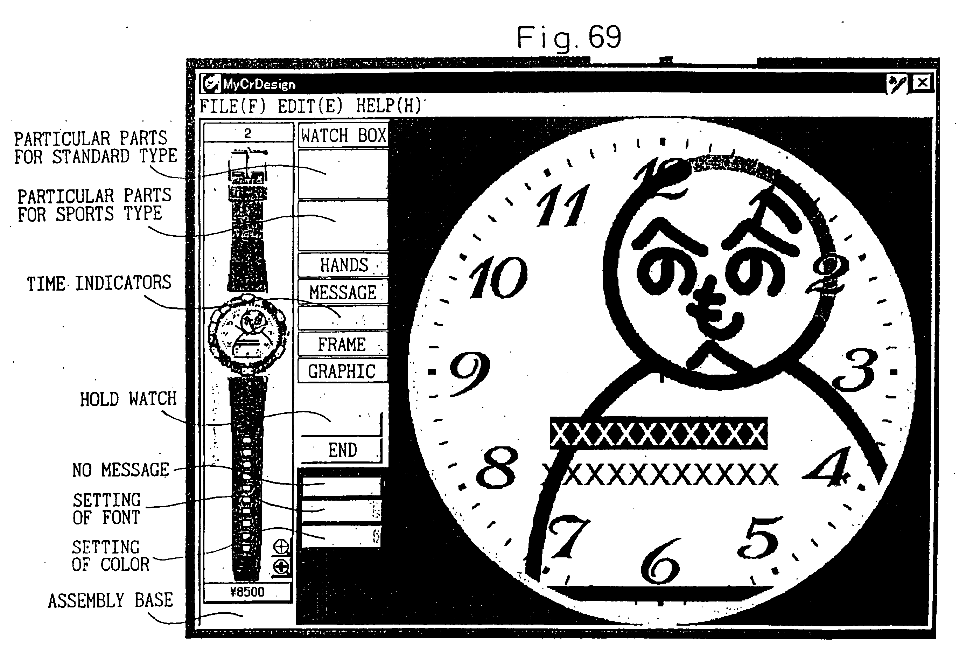

Figure 69 shows a display after the picture was input as the image into the computer. As mentioned above, when the reduction rate of the image is previously set, in the image scanner, it is possible to automatically obtain the digital image having one-to-one size for the dial-plate. For example, when the picture is bonded to the middle hole 1b or the large hole 1c, it is necessary to reduce the photograph to the size of the dial-plate. However, when the reduction rate is previously set, it is possible to automatically obtain the reduced image.

First, the operator clicks "graphic" on the display by using a mouse, and takes the photograph which is required by the customer (in this embodiment, "snowman") on the display. Next, when the customer requires the time indicators, "time indicator" is clicked so that the time indicators are written on the dial-plate based on the digital image. Further, the operator clicks "message" by using the mouse, as shown in Fig. 69, the message input portion on the dial-plate is displayed on the screen, and an actual message is input. Further, after input of the message, the "centering" is executed on the image. Further, the address, the name, etc., of the customer are input on the screen.

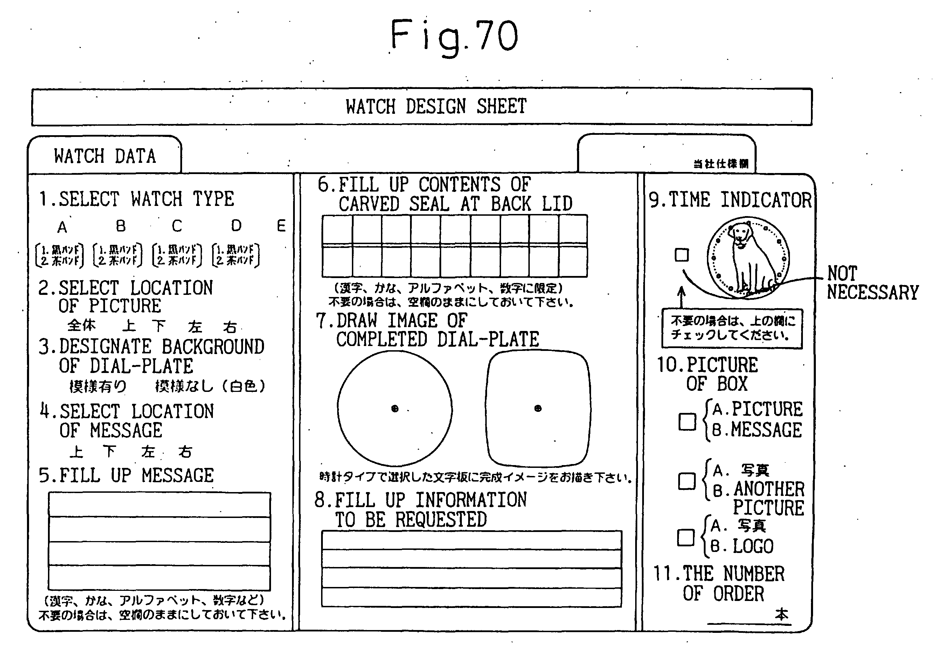

Figure 70 shows one example of a watch design sheet according to the third embodiment of the present invention. The favorite watch specification is filled up into each column of the watch design sheet by the customer.

In the drawing, reference number 1 represents the watch type selecting column. For example, any watche is selected by considering men's watch, women's watch, cost, color of wrist band, from five types of A to E.

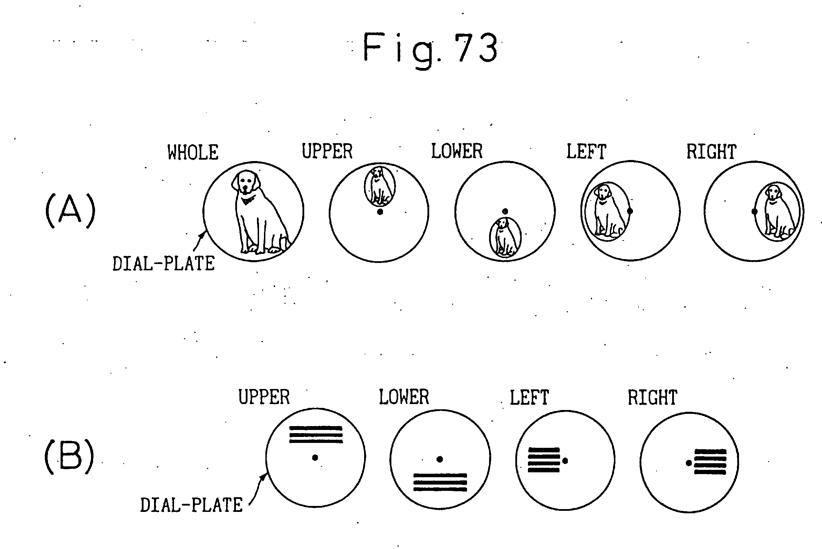

Reference number 2 represents the watch location selecting column for selecting the location of the photograph on the dial-plate. For example, as shown in Fig. 73(A) below, the location of the photograph is designated for the left/right/upper/lower position on the whole of the dial-plate. Further, the customer can arrange a plurality of pictures on the dial-plate. For example, when the picture A is combined with the picture B, the location of the pictures A and B on the dial-plate is designated on the "watch design sheet", and this "watch design sheet" is sent to the watch maker by enclosing the pictures A and B. In this case, the location of the picture is optional. For example, the picture A can be arranged at the left side of the dial-plate, and the picture B can be arranged at the right of the dial-plate. Further, the picture A can be arranged at the upper side of the dial-plate, and the picture B can be arranged at the lower of the dial-plate. In this case, both pictures A and B are not always arranged line-symmetrically or point-symmetrically for the dial-plate. For example, when the picture includes one person, it is possible to provide a composite picture as the dial-plate by providing the picture of another person having important relationship with one person and by combining one person with another person.

Reference number 3 is a dial-plate background designating column for designating the background of the dial-plate. The user can select either "picture pattern" or "no picture pattern". In this case, the user can prepare not only "picture pattern", but also a plurality of backgrounds so that the user can select one of his favorite backgrounds from the background 1, background 2, the background 3, ... .

Reference number 4 is a message location selecting column. For example, as shown in Fig. 73(B), the location is designated for the upper/lower/left/right on the dial-plate.

Reference number 5 is a message contents column for filling up the contents of the message. For example, "HAPPY BIRTHDAY TARO" is filled in on this column.

Reference number 6 is a carved seal column for a back lid for filling up the contents of the carved seal provided to the back lid of the watch. For example, the laser is used for obtaining the carved seal so that it is possible to carve the user's favorite contents on the back lid. The laser is preferable because the content of the carved seal is different for an individual user. In this case, it is preferable to use the laser type carved seal since the laser can be operated based on a predetermined program.

The message on the dial-plate is always located to the front side of the ornament, and the message on the back lid is always located to the back side of the ornament. That is, when the wrist watch is put on an arm, the message on the dial-plate can be always observed, and the message on the back lid cannot be observed. Accordingly, in actual use, it is possible to carve an important day, for example, a wedding anniversary, at the front side of the dial-plate, and to carve another important message on the back lid.

Reference number 7 is an image drawing column for drawing the completed image on the dial-plate. The user can designate rough location of the picture and the background in this column.

Reference number 8 is a design request column for filling up the desirable design of the dial-plate. The user fills up the request when arranging the picture on the dial-plate (for example, "only face" is contained, the leg is not contained in the picture). The watch maker notices this request when designing the watch.

Reference number 9 is a time indicator column for designating "necessary" or "not necessary" of the time indicators. That is, there are requests from some users who want to provide only hour and minute hands, and do not intend to provide the time indicators because of the design.

Reference number 10 is a picture selecting column for designating the shape of the picture used in the front surface of a watch containing box which is used for receiving the completed watch. In the third aspect of the present invention, this box is used for delivering the completed watch to the user. In this case, the user can select the picture, the message, or the logo. In the watch maker, the picture from the user is used as the picture of the box as it is, or the picture is scanned by the image scanner and the image is modified and printed out, or the picture and message are printed out, in order to use as the picture of the box.

Reference number 11 is an order filling column for filling up the number of the order of the watch. The user fills up the number of order of the original design watch.

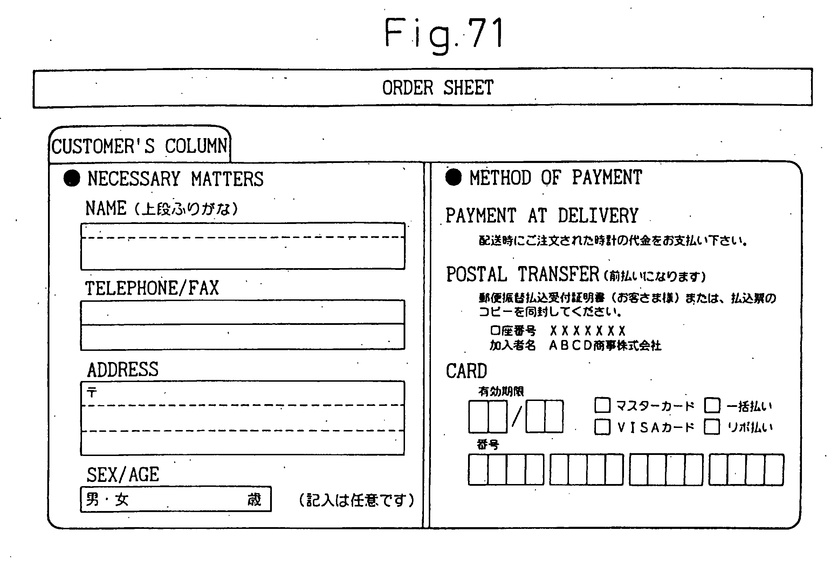

Figure 71 shows one example of an order sheet used in the third aspect. The order sheet is returned from the user to the watch maker with the above watch design sheet. As shown in the drawing, a name, a telephone/facsimile number, an address, sex and age, etc., are filled in the user side. Further, the payment method, such as "postal transfer" or "card", is designated in the user.

In this case, it is preferable to prepare a particular mark at an edge of the order sheet and the watch design sheet for defining a sales route. As the particular mark, for example, the message "the order sheet in which the user directly bought from the watch maker" or "the order sheet in which the user bought from the agency" is used as defined sales route. Further, it is preferable to define a kind of the agency, for example, a watch shop, a department store, or a convenience store, etc., based on the particular mark. Further, it is preferable to define the district of the shop.

Further, it is preferable to prepare a display form, for example, a bar code, which is readable by a computer. The watch maker reads the particular mark on the order sheet and the watch design sheet by the computer so that it is possible to collect an order route by the user. Accordingly, it is possible to utilizes such a order route as a material for determining a direction of next advertisement.

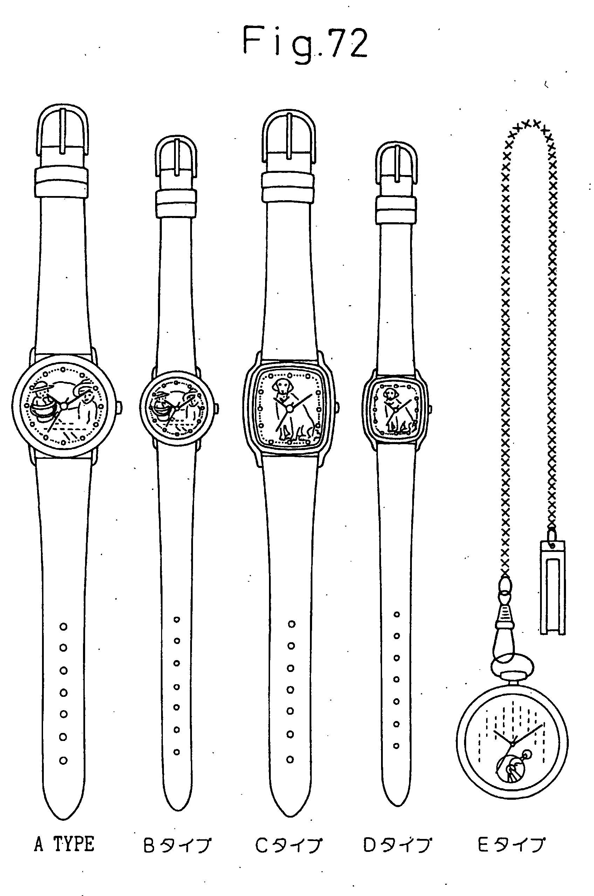

Figure 72 shows examples of watches in the third aspect. As shown in the drawing, the user can select any one of watches from five types, i.e., A to E, by considering men's use, women's use, cost, color of wrist band, etc. In the drawing, A is a circle type for men's use, B is a circle type for women's use, C is a square type for men's use, D is a square type for women's use, and E is a pocket type.

Figure 73 shows one example of location of the picture (A), and location of the message (B). As shown in (A), the user selects any one of locations from "whole", "upper", "lower", "left" and "right" on the dial-plate, using the "picture location selecting column". Further, as shown in (B), the user selects any one of locations of the message from "upper", "lower", "left" and "right" on the dial-plate, using the "message location selecting column".

In this case, as the user's attention, the number of characters at the first row of the message is different from in accordance with the place to be located. The optimum number of the characters is ten characters or less per one row at the "upper" and "lower", and is six characters or less per one row at the "left" and "right" on the dial-plate. Further, the user can designate the font of the message from the "character sample".

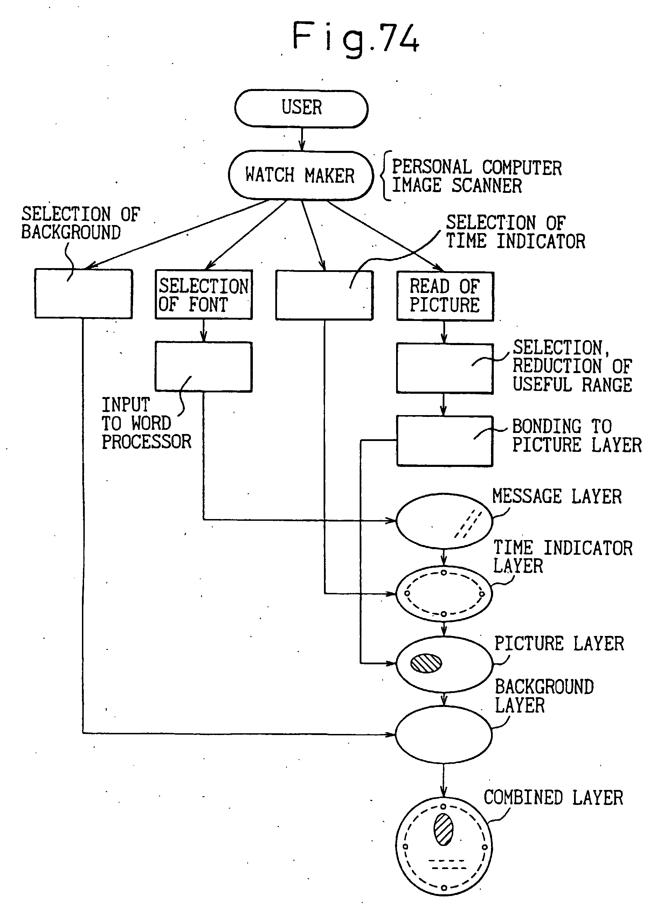

Figure 74 is a flow chart for explaining separated works at the watch maker in the third aspect. The user sends the "watch design sheet", the "order sheet" and the "picture" to the watch maker. In the watch maker, a plurality of personal computers are arranged in order to produce the original design watch on the display with the watch design sheet sent from the user. Each personal computer is connected to the image scanner with high resolution and the CD-ROM drive. Further, a server (not shown) is connected to the plural personal computers for managing the delivery and payment to the user which is input from each personal computer. A "delivery sheet" and a "sending sheet" are printed out by the server.

The operator of the personal computer performs, briefly, reading of the picture, selection of the time indicators, selection of the font, selection of the background, etc., using the personal computer and the image scanner. First, the operator reads the picture sent from the user, using the image scanner. Next, the user selects the useful range of the digital image of the picture; reduces the range so as to fit the range on the dial-plate; performs the trimming, for example, a rotation which moves the image to be predetermined place and directs the image to the front; and stores the trimmed image to a "picture layer" on the memory.

The operator performs selection of the time indicators, if the user wants to provide the time indicators, and stores the time indicators into a "time indicator layer" on the memory. Further, the operator selects the background of the dial-plate, and stores the background into a "background layer" on the memory. When completing the above all works, the operator reads the "picture layer", the "time indicator", the "message layer" and the "background layer", and combines these layers so that it is possible to complete the design of the dial-plate on the display. When preparing the design of the dial-plate, the operator must pay attention to the description of the "dial-plate design requesting column" in the "watch design sheet" in order to realize the user's request. In particular, it is necessary to sufficiently take care of the trimming of the picture when preparing the picture layer.

When taking the image into the image scanner, it may be possible to previously determine the reduction rate. The reduction rate can be determined based on the setting of the resolution rate value (DPT: Dot Per Inch) of the image scanner. Of course, it is possible to reduce the digital image after read-in the personal computer. For example, if the reduction rate of the image is previously set by the image scanner, it is possible to automatically obtain the digital image having one-to-one size for the dial-plate. The reduced digital image can be automatically obtained, if the reduction rate is previously set in the personal computer.

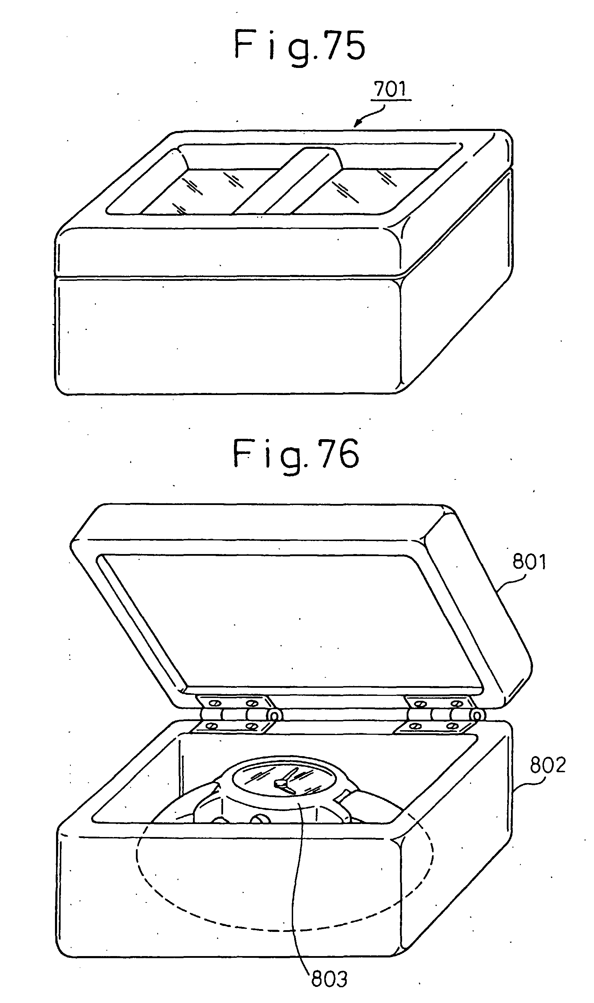

Figure 75 shows one example of a watch receiving box used in the third aspect. When the original design watch is completed, the watch maker delivers the completed watch by putting it into the watch receiving box 701. The watch receiving box is required by almost all users because the original design watch has a character as a memorable goods, and it is used as a gift.

Figure 76 is a perspective view of an inner side of the watch receiving box shown in Fig. 75. As shown in the, drawing, when opening a front lid, the original design watch 803 is contained in a body 802. In this case, it is preferable to make the front lid and the body of a "wood product" in order to appeal high quality, but a material of the box is not limited to the wood product.

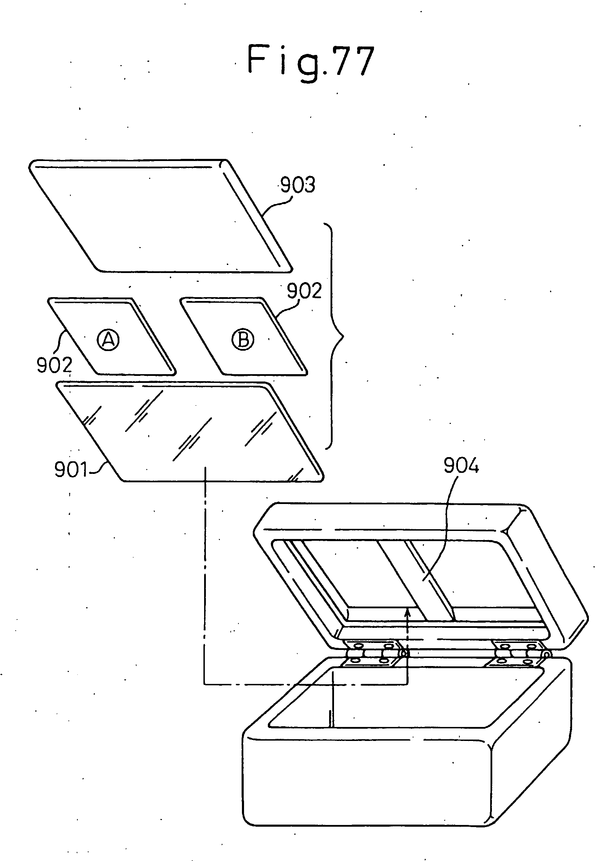

Figure 77 is an exploded and perspective view of the front lid of the watch receiving box shown in Fig. 76. First, a transparent board 901 made of a glass or acrylyl is mounted on the front lid 801 as shown by dotted line. Next, the pictures A and B of the picture 902 is arranged thereon, and fixed by a fixing board 903. The pictures A and B are arranged to A and B in accordance with selection from the "picture of box selecting column" on the watch design sheet. That is, any one set, i.e., a set of the picture and message, a set of two pictures, and a set of the picture and logo, is selected and arranged in accordance with the "picture of box selecting column". Of course, the user can observe the selected set through the transparent board.

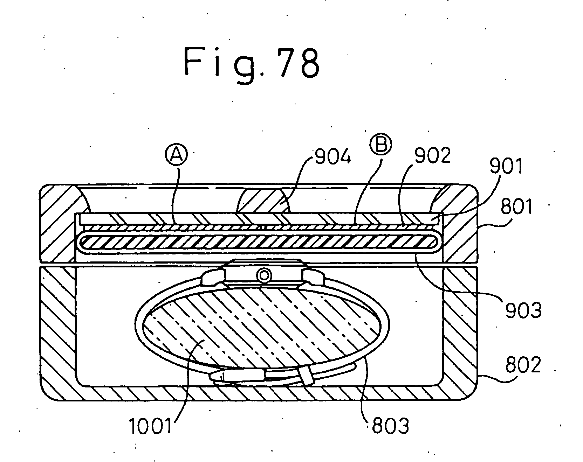

Figure 78 is a cross-sectional view of the watch receiving box shown in Fig. 75. As shown in the drawing, the watch 803 with a cushion 1001 is contained in the body 802. The fixing board 903 is made of a resin board, and all surfaces thereof are covered by a cloth, for example, velvet so that the fixing board 903 is fitted and mounted to the inner side of the front lid 801. The transparent board 901 is supported by a flange portion at a bridge 904 and the body 801 so that the pictures A and B are inserted between the transparent board 901 and the fixing board 903 in order to prevent slippage of the position.

As the picture 902, it may be possible to use the picture attached to the "watch design sheet" as it is. Further, in order to create the design of the dial-plate, it may be possible to use the digital image by the image scanner and printed on the paper. In this case, it is possible to easily modify the size of the digital image through the trimming, i.e., partially cutting off, reduction or enlargement, movement, or rotation of the image, on the personal computer.

For example, when the user sends two pictures A and B to the watch maker, it is possible to use the picture A as the dial-plate of the wrist watch, and to arrange two pictures A and B (or a printed digital image) on the front lid 801 of the watch receiving box. In this case, the wrist watch 803 and the watch receiving box become of value as memorable goods.

Further, instead of the picture B, it is possible to arrange the paper in which the same message on the dial-plate was printed, to the front lid 801. In this case, it may be possible to use the paper in which the image of the message layer was printed. Still further, it may be possible to perform trimming, such as reduction, enlargement, movement, or rotation, to the message of the message layer on the personal computer.

Still further, it may be possible to arrange the paper in which a particular logo was attached, to the front lid 801 instead of the picture B.

As a method of using the above picture, message, or logo, it is possible to instruct the above to the watch maker by filling the above into the "watch design sheet" by the user.

In this case, other than sets of "picture and picture", "picture and message", or "picture and logo", it is possible to provide a set of "message and logo". Further, any one of the picture, the message and the logo can be arranged to the front lid 801 by eliminating the bridge 901 of the front lid 801 of the watch receiving box. On the other hand, when changing the number of window which is used for the picture, the message or the logo, on the front lid 801, it may be possible to provide various, sets of pictures, messages, logos, for example, "parallel arrangement of three or more pictures", "parallel arrangement of plural pictures and messages", etc.

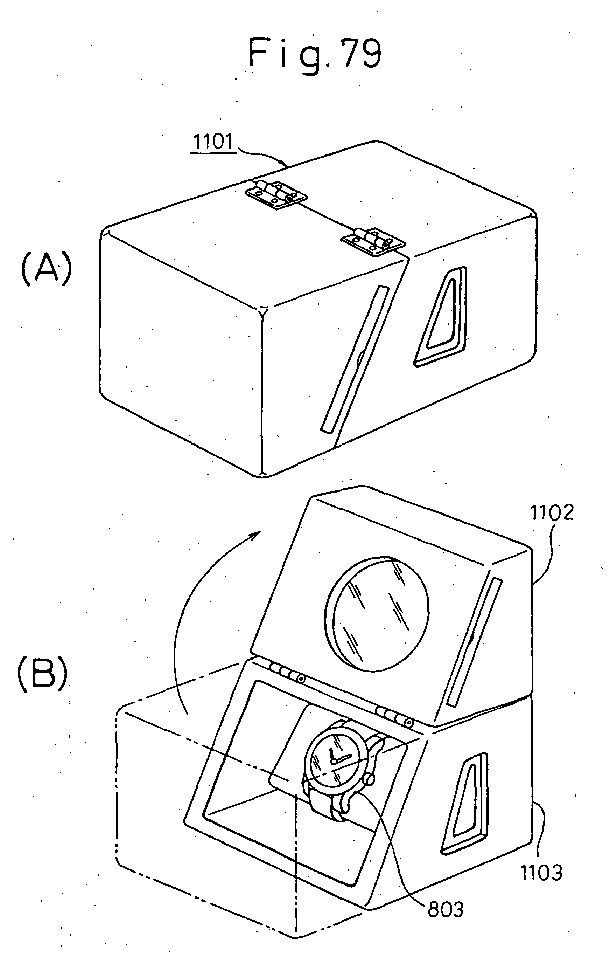

Figure 79 is an outer and perspective view of another example of the watch receiving box in the third aspect. (A) shows the lid being closed, and (B) shows the lid being opened. In this example, the picture cannot observe from the outside different from Fig. 75. As shown in the drawing, in a watch receiving box 1101 according to this embodiment, when an upper box 1102 is opened, it can be put on a lower box 1103 so that it is possible to observe the picture from the circle window of the upper box, and to observe the watch in the lower box.

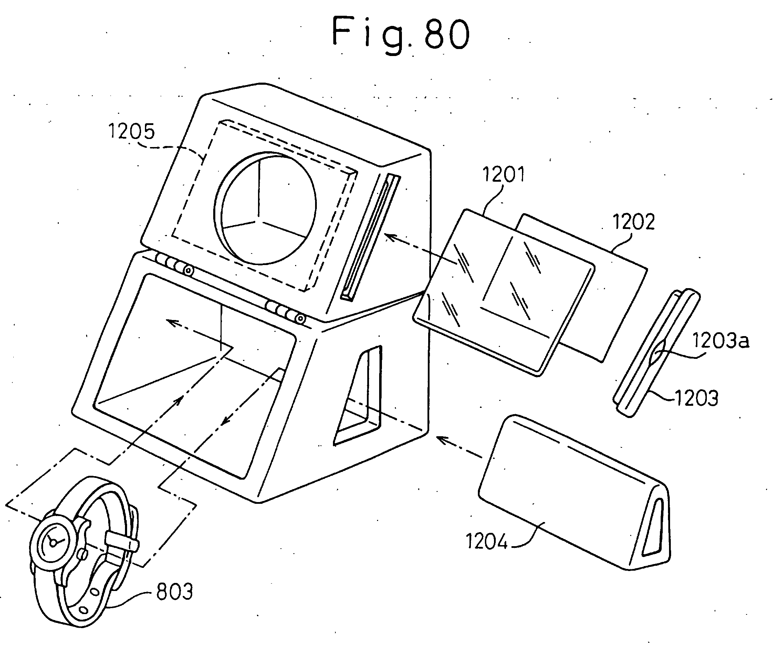

Figure 80 is an exploded and perspective view for explaining inner side of the watch receiving box shown in Fig. 79. In the upper box, a transparent board 1201 and the picture 1202 are inserted from a slit which is opened to the side of the upper box as shown by an arrow, and fixed by a fixing plate 1203. At that time, the transparent board 1201 is arranged to the side of the circle window of the upper box 1102, and the picture 1202 is arranged to the back (i.e., an inner side of the upper box 1102) of the transparent board 1201. In this case, it is preferable to arrange a holding plate 1205 for supporting the transparent board 1201 and the picture 1202 and positioning the back of the picture 1202 in the inner side of the upper box 1102.

Further, a groove 1203a is provided to the center of the fixing plate 1203 in order to engage a nail, used for mounting or removing the fixing plate 1203. Further, the cushion 1204 is inserted from the side hole of the lower box as shown by the arrow, and fixed to the opposite side after the watch was inserted to the cushion 1204. Further, when the number of the circle windows is increased, it is possible to arrange sets of the plural pictures, the messages or the logos as mentioned in the front lid 801.

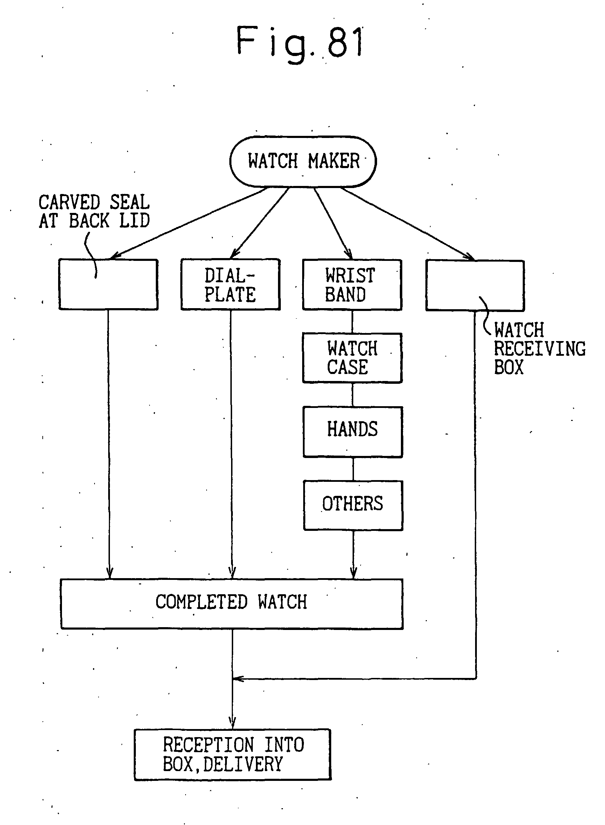

Figure 81 is a flow chart for explaining all processes at the watch maker in the third aspect. The following processes, i.e., a first process for carving the seal to the back lid by using the laser carved seal along with the contents; a second process for producing an actual dial-plate based on the design of the dial-plate which was completed on the personal computer as shown in Fig. 74; and a third process for producing various parts, such as the wrist band, the watch case, the hour hand, the minute hand, and others, based on the design selected by the user; are performed in the watch maker. As a result, the original design watch is completed by collecting these processes. Further, the watch receiving box which is required by the user, is prepared in another process. The completed watch is received into the box, and delivered to the user.

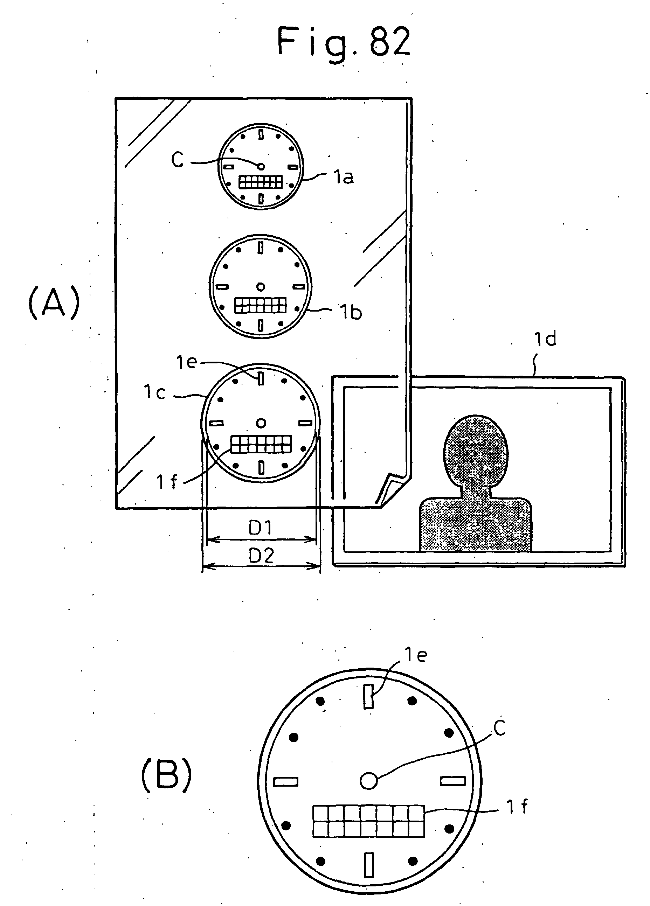

Figure 82 shows one example of the order sheet made of the transparent sheet in which the time indicators, the message and the hand hole are printed on the dial-plate, in the fourth aspect of the present invention. As shown in (A), the picture 1d is bonded to the circle 1a to 1c. Fig. 82(B) is an enlarged view of the dial-plate. The order sheet is formed of a light transparent sheet (for example, a transparent film, or plastic). At least the picture 1d can be seen when it is arranged at the back of the sheet, any material, for example, colored film (for example, a smoke film) can be used as the order sheet. As shown in the drawing, the small/middle/large circle of the order sheet corresponds to the small/middle/large hole of the picture boding column according to the second aspect. As shown by an enlarged view in (B), the basic positions of the time indicators 1e, the hand hole C, and the message 1f, are previously printed on the order sheet.

The customer determines the range of the picture by putting the picture at the back of the order sheet, and bonds the picture using the adhesive tape. As mentioned above, the range of the inner diameter D1 represents the effective range of the dial-plate which can observe in actual, and is called "parting portion". On the other hand, the outer diameter D2 corresponds to each hole 1a, 1b and 1c of the order sheet. Accordingly, the customer must take care of the cutting portion of the picture in which the outside of the effective range, i.e., the outside of the inner diameter D1 is cut off in the completed watch.

Further, for the hand hole, since the hand axis hole is always provided at the center of the dial-plate of the completed watch, when bonding the picture, the customer must take care of this hand axis hole so as not to locate the hand axis hole at the center of the face. According to this embodiment, since it is possible to position the picture with the "parting portion" by using one transparent film, it is possible to easily position the picture compared to use of three transparent films, and to achieve cost reduction of the order sheet.

Further, the time indicators 1e can be omitted in accordance with requirement from the customer. When providing the time indicators, the customer must take care of the positioning of the time indicators so as not to shade the important portions of the picture, in particular, the picture of the face.

Further, in the message column 1f, the message can be filled up within ten characters or less per one row and within two rows by using the favorite font. In this case, the customer must take care of the positioning of the message so as not to shade the important portions of the picture, in particular, the picture of the face, because the position of the message is always done by "centering" to the center of the dial-plate.

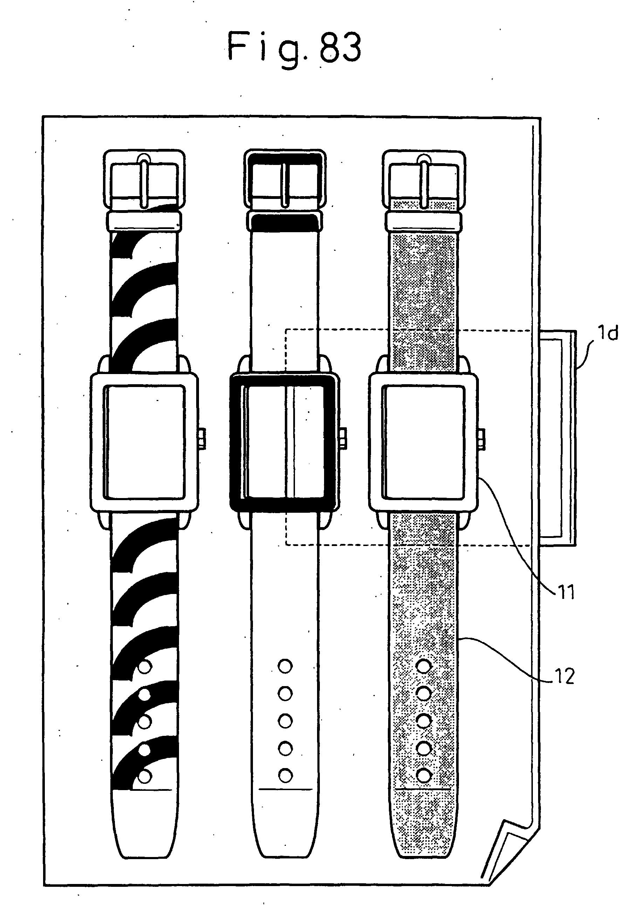

Figure 83 shows another example of the order sheet shown in Fig. 82, and plural kinds of watch cases and bands are printed on the order sheet. The plural kinds of completed watches (three kinds of watches in this embodiment) are previously printed on this order sheet. That is, various shapes, colors and patterns of plural kinds of watch cases 11 and wrist bands 12 are previously printed on the transparent film. In this embodiment, the watch case 11 is shown by one kind of the case, "parting portion" is shown by the range of the drawing. Of course, it is possible to prepare the order sheet in which the small/middle/large size was previously printed, to prepare the order sheet in which the circle case was printed, and to select the wrist band. The customer can easily select and determine the picture which is matched to the whole image of the watch by putting the picture from the back of the order sheet. That is, the merit of the embodiment lies in that the customer can easily consider the whole image of the completed watch.

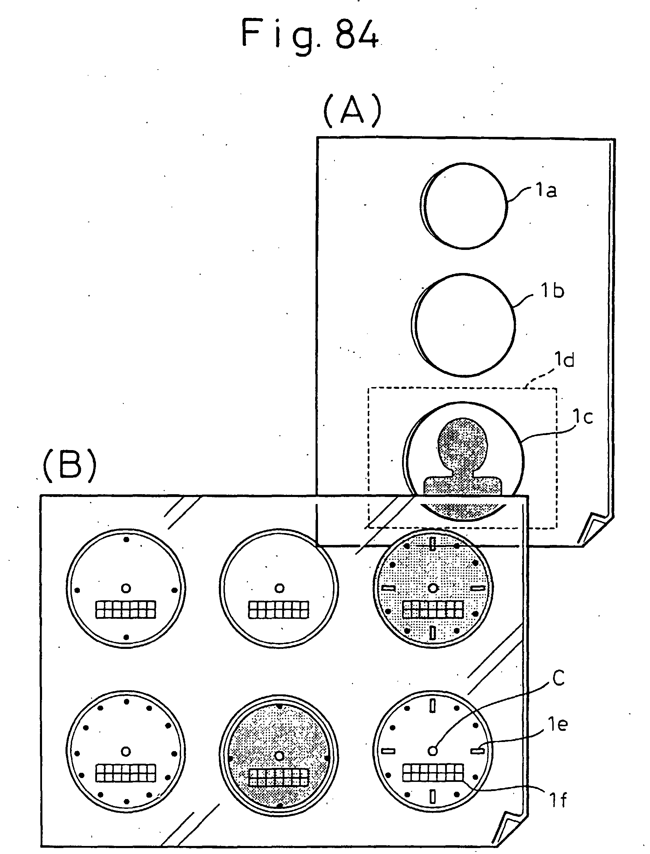

Figure 84 shows still another example of the order sheet shown in Fig. 82, and the transparent sheet printed by plural kinds of dial-plates are separately prepared on the transparent sheet. (A) is a view for explaining the picture 1d being bonded on the base sheet. In this example, as shown in (B), various kinds of dial-plates are previously printed to the transparent film of the light transparent sheet. The "parting portion" is shown by the inner range of each dial-plate. As shown in the drawing, various modifications, such as presence or absence of the time indicators, different color, etc., are previously printed on the sheet. The merit of this example lies in that the desirable dial-plate can be selected after the customer has determined the picture.

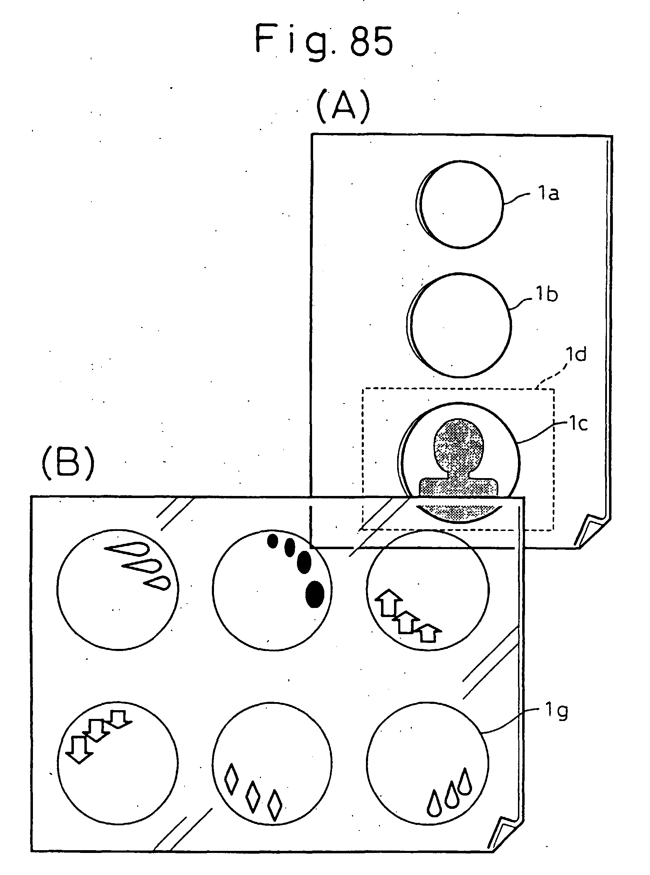

Figure 85 shows another example of the transparent sheet shown in Fig. 85(B), and a transparent film in which a plurality of frames, each having at least one of pictures, patterns and characters, is previously prepared. Various kinds of frames 1g are previously printed on the transparent film. In this case, it is possible to select one frame which is fit to the whole image of the watch, by putting each frame to the picture.

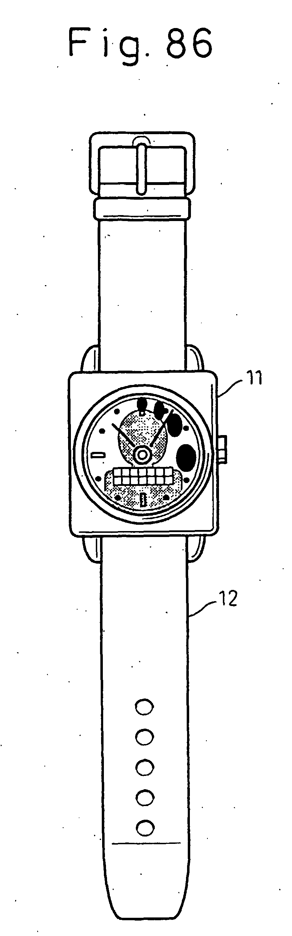

Figure 86 shows the whole view by combining the transparent film of Fig. 84 and the transparent film of Fig. 85. It is possible to easily create various designs by combining various dial-plates with frames.

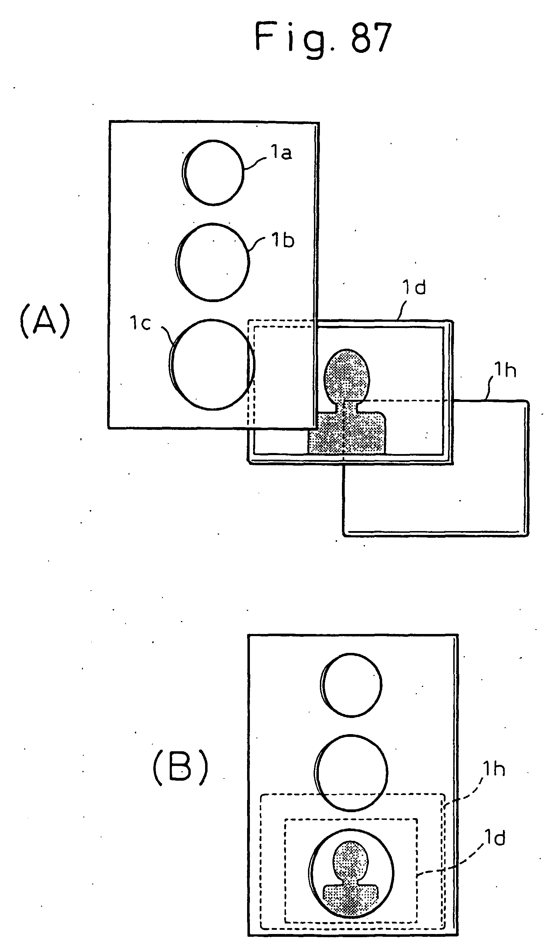

Figure 87 shows one example of the order sheet made of the magnetic sheet, and another magnetic sheet for holding the picture. In (A), the order sheet is formed of the magnetic sheet which can be attached by the magnetic body, i.e., a metal board or a laminated board of the plastic with the metal board. Further, 1h denotes a magnetic sheet. When the customer bonds the picture 1d on the dial-plate, the picture is held from the back of the order sheet using the magnetic sheet 1h as shown in (B). The merit of this example lies in that steps of bonding the picture is simplified for the customer so that it is possible to easily select and change the picture. As another modification, three kinds of base papers each of which is made of magnetic sheet, are prepared for each hole. Each paper is folded to two portions, and the picture is held between two portions with the magnetic sheet.

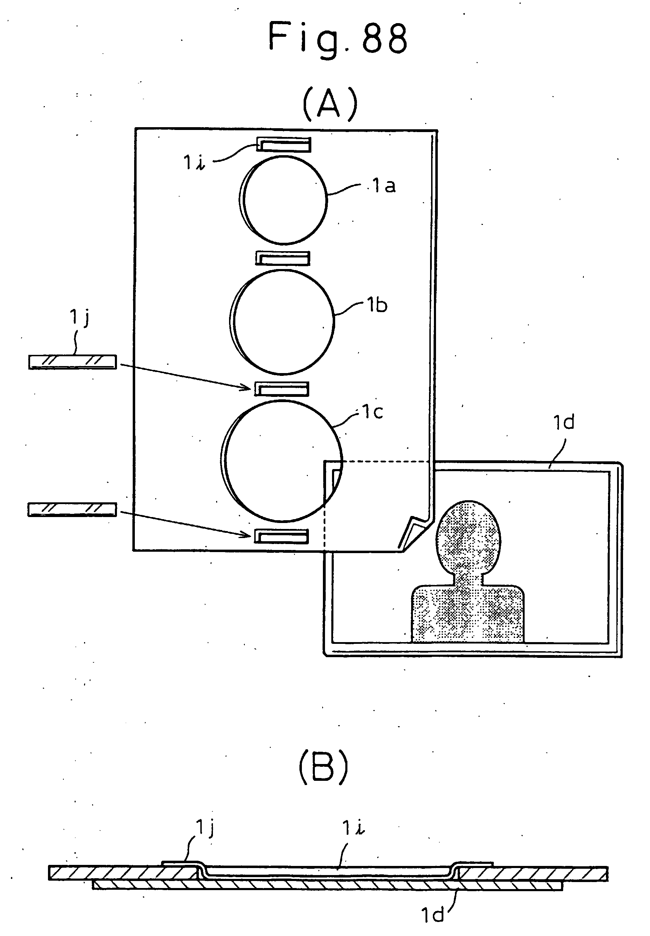

Figure 88 shows another example of the order sheet in Fig. 87, and long holes are provided on upper and lower sides of each hole so that it is possible to easily bond the picture in each hole. In shown in (A), a long hole 1i having the predetermined size, is provided to the upper and lower side of each hole. The customer puts the picture from the back of the sheet, and executes the positioning of the picture. Further, as shown by (B), the picture is fixed by the adhesive tape through each long hole from the front side. The merit of the example lies in that it is possible to easily bond the picture after the picture was positioned to the watch case.

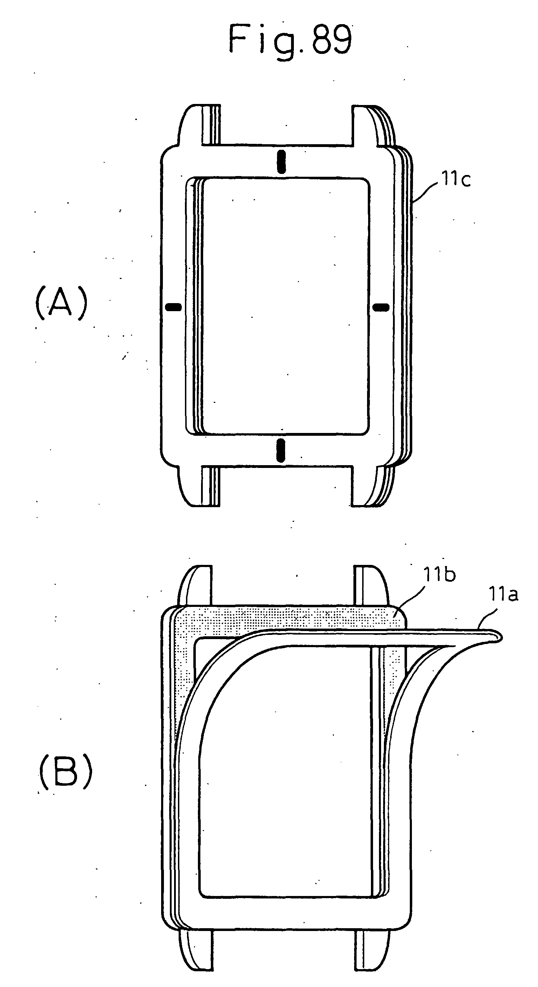

Figure 89 shows one example of a case frame (or a trimming sheet) for deciding the range of the picture. (A) shows the front of the case frame, and (B) shows the back of the case frame. The four black dots on the upper side of the case frame shown in (A) is used as the reference position of, twelve o'clock, third o'clock, six o'clock, and nine o'clock, respectively. Further, as shown in (B), when eliminating the paper 11a, the adhesive layer 11b is provided so that it is possible to easily fix the picture to the case frame.

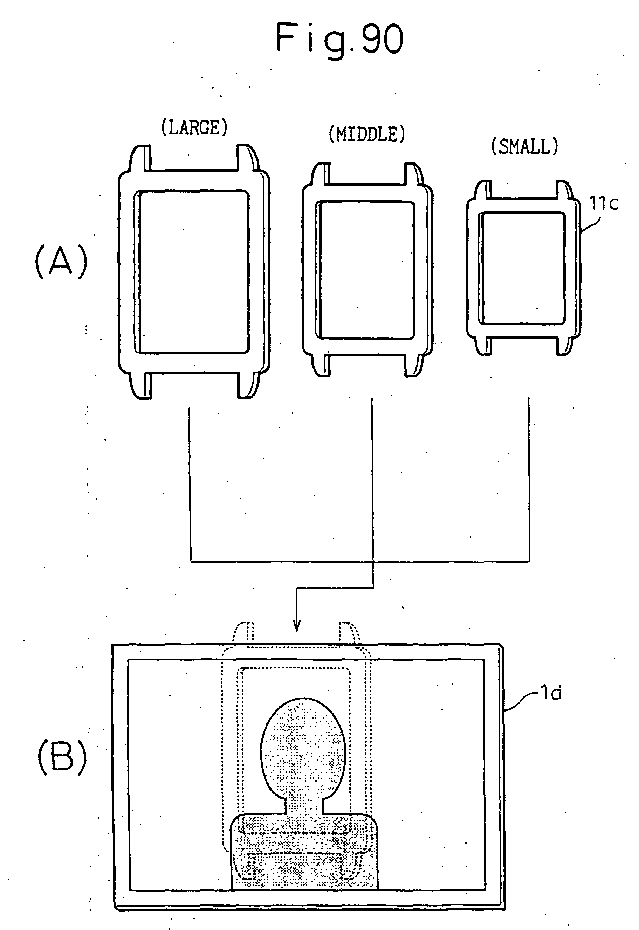

Figure 90 shows another example of the case frame, and shows the large/middle/large size of the "parting portion". The large/middle/large size of the "parting portion" is shown in (A), and the large/middle/large size of the case frame is sequentially put on the picture. The merit of this example lies in that the picture can be easily bonded, and the case frame can be easily selected. For example, the "parting portion" can be shaped by a oval.

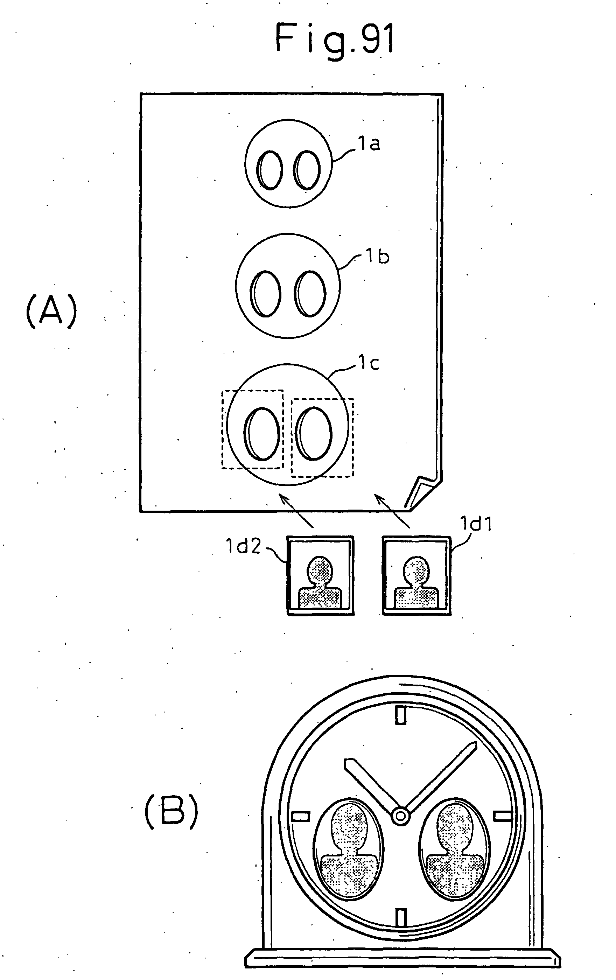

Figure 91 shows another example of the order sheet in the second aspect, and shows each pair of large holes, middle holes and small holes. In this example, two pair of holes (a long hole in this example) are prepared to each hole of the order sheet. Of course, two kinds of pictures 1d1 and 1d2 having one pair can be bonded on each hole, the dial-plate created by (B) may be applied to a standing watch.

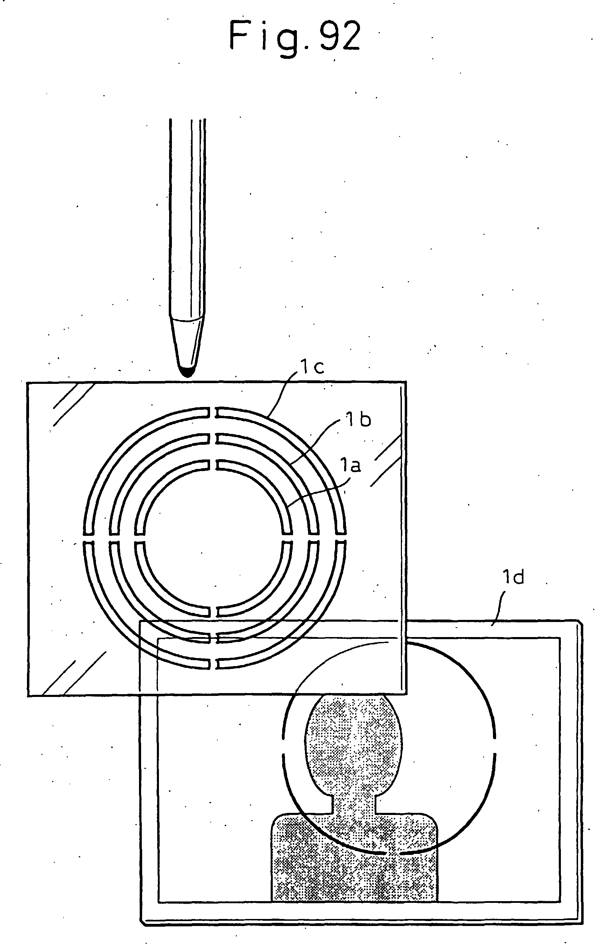

Figure 92 shows another example of trimming sheet for deciding the range of the picture in the fourth aspect, and a felt pencil is used for deciding the range. In this example, three kinds of circles are arranged coaxitially by cutting off surrounding portion with a predetermined width. The cut portion is traced with the felt pencil in order to determine the range of the picture. The sizes of three kinds of circles correspond to the holes 1a, 1b and 1c. In this example, it is possible to reduce the order sheet.

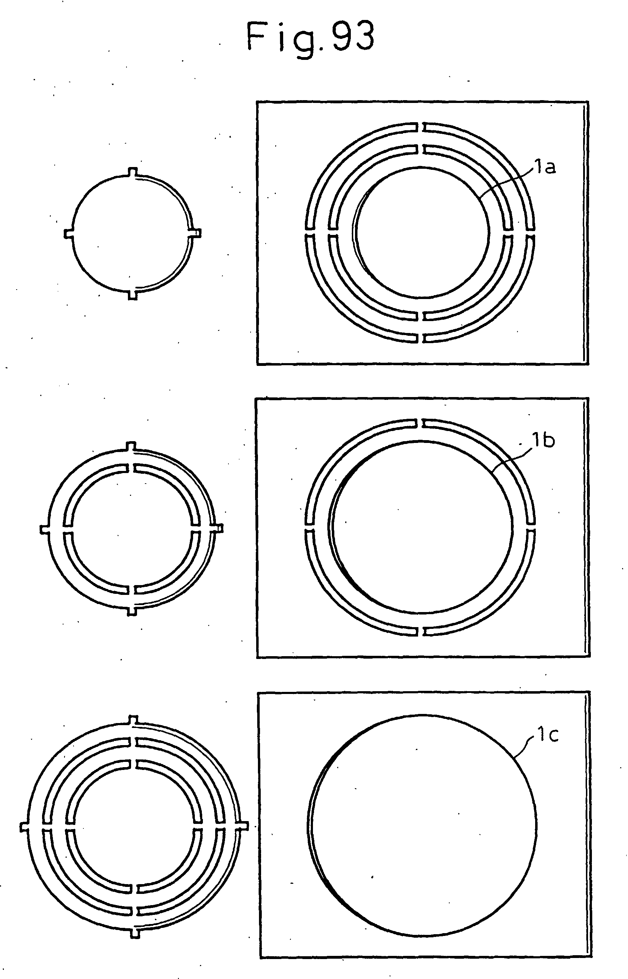

Figure 93 shows still another example of the trimming sheet. According to this example, it is possible to easily cut off an unnecessary range on the trimming sheet.

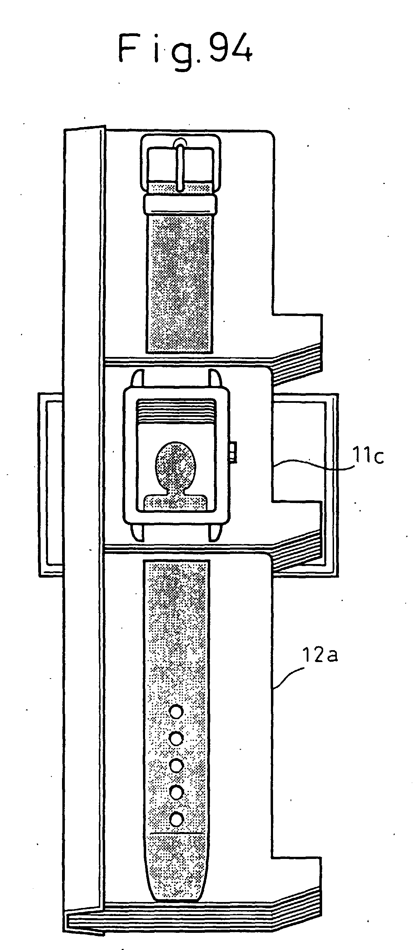

Figure 94 shows another example of the case frame. In this example, plural parting portions, plural case sheets, and plural band sheets, can be combined with each other. As shown in the drawing, plural kinds of case sheets 11c and the band sheets 12a can be seen in order. The "parting portion" is provided at the center of the case sheet 11c, the picture 1d is put to the back so that it is possible to combine the favorite case with the favorite wrist band and the picture. Only this case frame may be provided in the agency.

### CAPABILITY OF UTILIZATION IN INDUSTRY

As explained above, according to the first aspect of the present invention, in the watch design creation, the consumer can create the specification of his own original watch by communicating with a substitute of the watch maker, i.e., parts design information and design software. Further, by communicating between the watch maker and the consumer through the predetermined information communication means, it is possible to perfectly reflect the constituent parts (for example, the dial-plate) originally designed by the consumer on the watch. Further, in the first aspect, by displaying a plurality of completed wrist watches on the same screen, the consumer can easily compare a plurality of wrist watches created by the consumer himself, and can evaluate them. Accordingly, if evaluation by himself is poor, the consumer recreates the watch. Still further, if the consumer requests, he can check situation of creation of the watch so that the consumer can wait for delivery of the watch without any problems. Accordingly, it is possible to establish an order-sale system in which the consumer can order without any problems.

According to the second/third/fourth aspects, it is possible to easily order the original design watch to the watch maker even if the consumer is not skilled in the use of the personal computer, or if the consumer has no personal computer.

### A LIST OF REFERENCE CODES

- 1:: PICTURE BONDING COLUMN
- 2:: WATCH TYPE SELECTING COLUMN
- 3:: TIME INDICATOR SELECTING COLUMN
- 4:: MESSAGE COLUMN
- 5:: DESTINATION COLUMN
- 6:: PAYMENT COLUMN
- 1a, 1b, 1c:: PICTURE BONDING HOLES
- 1d:: PICTURE
- 1e:: TIME INDICATOR
- 1f:: MESSAGE
- 1g:: FRAME
- 1H:: MAGNETIC SHEET
- 1i:: LONG HOLE
- 1j:: ADHESIVE TAPE
- 10:: WATCH MAKER
- 20:: CONSUMER (CUSTOMER)
- 30:: AGENCY
- 40:: ORDER KIT
- 11:: CASE
- 12:: WATCH BAND
- 14:: IMAGE SHEET
- 15:: METAL PLATE
- 16:: MOVEMENT
- 17:: BACK LID
- 701:: WATCH RECEIVING BOX

## Claims

1. A watch design creating system comprising:
means for announcing a creation service for watch design from a watch maker through an information communication means;
means for receiving parts digital information representing design software and watch constituent parts for the watch design, which was requested by a consumer through the communication means, in the watch maker;
means for providing the parts digital information which can be provided from the watch maker to the consumer, and the design software for combining the parts digital information, from the watch maker to the consumer through the information communication means;
means for receiving the original watch design information which was created by the consumer by combining the parts digital information, using the design software and the parts digital information which were provided from the consumer to the watch maker;
means for receiving a request for production of a watch which was requested by the customer to the watch maker based on the original watch design information, in the watch maker; and
means for producing the watch based on the original watch design information provided from the consumer to the watch maker, and delivering a completed watch from the watch maker to the consumer.

2. A watch design creating system as claimed in claim 1, further comprising means for providing a design basic information based on the design software from the watch maker to the consumer.

3. A watch design creating system comprising:
means for announcing creation service of watch design from a watch maker through an information communication means;
means for receiving parts digital information representing design software and watch constituent parts for the watch design, which was requested by a consumer through the communication means, in the watch maker;
means for providing a storage medium storing the parts digital information which can be provided from the watch maker to the consumer, and the design software for combining the parts digital information, from the watch maker to the consumer;
means for receiving the original watch design information which was created by the consumer by combining the parts digital information with an original parts digital information, by setting the storage medium on the consumer's apparatus and using the design software stored in the storage medium, in the watch maker;
means for receiving a request of production of a watch which was requested by the customer, by recording the watch original design information into a predetermined storage medium and sending the predetermined storage medium to the watch maker, in the watch maker; and
means for producing the watch based on the original watch design information recorded in the predetermined storage medium and provided from the consumer to the watch maker, and delivering a completed watch from the watch maker to the consumer.

4. A watch design creating system as claimed in claim 1 or 3, wherein the information communication means is an information communication network.

5. A watch design creating system as claimed in claim 4, wherein the information communication network is the internet.

6. A watch design creating system as claimed in claim 1 or 3, wherein means for creating the original watch design information further comprises means for combining the parts digital information originally created by the consumer.

7. A watch design creating method comprising the steps of:
announcing a creation service for watch design from a watch maker through an information communication means;
receiving parts digital information representing design software and watch constituent parts for the watch design, which was requested by a consumer through the communication means, in the watch maker;
providing the parts digital information which can be provided from the watch maker to the consumer, and the design software for combining the parts digital information, from the watch maker to the consumer through the information communication means;
receiving the original watch design information which was created by the consumer by combining the parts digital information, using the design software and the parts digital information which were provided from the consumer to the watch maker;
receiving a request for production of a watch which was requested by the customer to the watch maker based on the watch original design information, in the watch maker; and
producing the watch based on the original watch design information provided from the consumer to the watch maker, and delivering a completed watch from the watch maker to the consumer.

8. A watch design creating method as claimed in claim 7, further comprising a step for providing design basic information based on design software from the watch maker to the consumer.

9. A watch design creating method comprising the steps of:
announcing creation service of watch design from a watch maker through an information communication means;
receiving parts digital information representing design software and watch constituent parts for the watch design, which was requested by a consumer through the communication means, in the watch maker;
providing a storage medium storing the parts digital information which can be provided from the watch maker to the consumer, and the design software for combining the parts digital information, from the watch maker to the consumer;
receiving the original watch design information which was created by the consumer by combining the parts digital information with an original parts digital information, by setting the storage medium on the consumer's apparatus and using the design software stored in the storage medium, in the watch maker;
receiving a request for production of a watch which was requested by the customer, by recording the original watch design information into a predetermined storage medium and sending the predetermined storage medium to the watch maker, in the watch maker; and
producing the watch based on the original watch design information recorded in the predetermined storage medium and provided from the consumer to the watch maker, and delivering a completed watch from the watch maker to the consumer.

10. A watch design creating method as claimed in claim 7 or 9, wherein means for creating the original watch design information further comprises means for combining the parts digital information originally created by the consumer.

11. A watch design creating method as claimed in claim 7 or 9, wherein means for creating the original watch design information further comprises means for selecting material of the watch constituent parts by the consumer.

12. A watch design creating method as claimed in claim 7 or 9, wherein means for creating the original watch design information further comprises means for selecting an additional function which is added to the watch constituent parts by the consumer.

13. A watch design creating method as claimed in claim 7 or 9, wherein means for creating the original watch design information further comprises means for selecting a function which should be added to the watch.

14. A watch design creating method as claimed in claim 7 or 9, wherein the consumer who requests the production of the watch can check situation of the production at the watch maker through the information communication network.

15. A watch design creating method as claimed in claim 7 or 9, wherein the watch maker can confirm color tone between the color designated by the consumer and the color of an actually completed watch, in accordance with request from the consumer.

16. A watch design creating method as claimed in claim 7 or 9, wherein, in the step of creating the original watch design information by the consumer, a completed figure of the watch, a pattern group of the watch constituent parts, and a designation of the watch, are displayed in layers on a screen.

17. A watch design creating method as claimed in claim 16, wherein in the step of creating the original watch design information by the consumer, the watch constituent parts are selectively and sequentially displayed from a large group to a small group on the screen.

18. A watch design creating method as claimed in claim 16, wherein, in the step of creating the original watch design information by the consumer, an enlarged and completed watch is displayed on the screen.

19. A watch design creating method as claimed in claim 15, wherein, in the step of creating the original watch design information by the consumer, the watch maker receives a color designated by the consumer, prints a plurality of colors similar to the designated color, and delivers printed confirmation material to the consumer.

20. A watch design creating method as claimed in claim 16, wherein, in the step of creating the original watch design information by the consumer, a plurality of completed watches are displayed on the same screen to compare them each other.

21. A watch design creating method as claimed in claim 7 or 9, wherein, in the step of creating the original watch design information by the consumer, a message is input from a keyboard onto the dial-plate on the display.

22. A watch design creating method as claimed in claim 7 or 9, wherein, in the step of creating the original watch design information by the consumer, a position, the number, a length, a size, a font and a color of the message on the dial-plate are designated on the display.

23. A watch design creating method as claimed in claim 7 or 9, wherein, in the step of creating the original watch design information by the consumer, a plurality of watch basic patterns are displayed on the same screen.

24. A watch design creating method as claimed in claim 7 or 9, wherein, in the step of creating the original watch design information by the consumer, the consumer selects a frame indicating a one point picture pattern on the dial-plate from the design provided from the watch maker, or creates an original frame by processing the picture pattern by himself, and moves the frame to a suitable position on the dial-plate.

25. A watch design creating method as claimed in claim 22, wherein, in the step of creating the original watch design information by the consumer, the consumer selects a graphic indicating a basic picture pattern on the dial-plate from the design provided from the watch maker, or creates an original graphic by processing the picture pattern by himself, and enlarges, reduces and moves the graphic, in accordance with position, on the dial-plate.

26. A watch design creating method as claimed in claim 24 or 25, wherein, in the step of creating the original watch design information by the consumer, a total design of the watch is confirmed by superposing the frame and graphic created by the consumer.

27. A computer readable storage medium storing a program to execute the following steps which include:
a step for announcing a creation service for watch design from a watch maker through an information communication means;
a step for receiving parts digital information representing design software and watch constituent parts for the watch design, which was requested by a consumer through the communication means, in the watch maker;
a step for providing the parts digital information which can be provided from the watch maker to the consumer, and the design software for combining the parts digital information, from the watch maker to the consumer through the information communication means;
a step for receiving the original watch design information which was created by the consumer by combining the parts digital information, using the design software and the parts digital information which were provided from the consumer to the watch maker;
a step for receiving a request for production of a watch which was requested by the customer to the watch maker based on the watch original design information, in the watch maker; and
a step for producing the watch based on the original watch design information provided from the consumer to the watch maker, and delivering a completed watch from the watch maker to the consumer.

28. A computer readable storage medium as claimed in claim 27, further comprising a step for providing design basic information based on the design software from the watch maker to the consumer.

29. A computer readable storage medium storing a program to execute the following steps which include:
a step for announcing a creation service for watch design from a watch maker through an information communication means;
a step for receiving parts digital information representing design software and watch constituent parts for the watch design, which was requested by a consumer through the communication means, in the watch maker;
a step for providing a storage medium storing the parts digital information which can be provided from the watch maker to the consumer, and the design software for combining the parts digital information, from the watch maker to the consumer;
a step for receiving the original watch design information which was created by the consumer by combining the parts digital information with an original parts digital information, by setting the storage medium on the consumer's apparatus and using the design software stored in the storage medium, in the watch maker;
a step for receiving a request for production of a watch which was requested by the customer, by recording the original watch design information into a predetermined storage medium and sending the predetermined storage medium to the watch maker, in the watch maker; and
a step for producing the watch based on the original watch design information recorded in the predetermined storage medium and provided from the consumer to the watch maker, and delivering a completed watch from the watch maker to the consumer.

30. A computer readable storage medium storing a program to execute the following steps which include:
a step for providing parts digital information indicating watch constituent parts in order to create the watch design, from a watch maker to a consumer;
a step for selecting the parts digital information corresponding to the watch design which is required by the customer in the provided parts digital information;
a step for selecting the parts digital information corresponding to the desirable watch design, or creating an original design in the consumer;
a step for superposing, enlarging or reducing, and moving the selected or original design; and
a step for recording the parts digital information selected by the consumer on the predetermined storage medium.

31. A computer readable storage medium as claimed in claim 30, wherein at least a dial-plate information, a hands information, a watch case information, a color information, a wrist band information, a crown information, a time indicator information, a message information, and a frame information, are recorded as the parts digital information.

32. A watch design creating method as claimed in claim 7 or 9, wherein the watch maker, which completed the original design watch, prepares a production sheet which has a column describing a consumer's address and name, a column showing a plurality of completed dial-plate designs, and an outer view of the original design watch, and prints out the production sheet from a color printer.

33. A watch design creating method as claimed in claim 32, wherein a transparent ultra-violet cutting film is bonded to the dial-plate portion of the production sheet which was printed out from the color printer, and creates an image sheet by cutting one dial-plate design.

34. A watch design creating method as claimed in claim 33, wherein a hand axis hole is provided on the dial-plate of the production sheet, and a guide hole is provided for punching an outer diameter, of the dial-plate at the outside of the dial-plate based on the hand axis hole.

35. A watch design creating system in which a predetermined order kit is sent to an consumer from a watch maker in accordance with request from the consumer, the consumer fills up predetermined matters in the order kit in order to create a desirable original design watch, sends the order kit to the watch maker, the watch maker produces an original design watch from the contents of the order kit, and delivers the completed watch to the consumer, wherein,
the order kit includes an order sheet filled up by the consumer; and the order sheet includes at least a picture bonding column for bonding the photograph or picture which are required as the dial-plate, and a watch type selecting column for selecting a type of the watch.

36. A watch design creating system as claimed in claim 35, wherein the order sheet further includes a time indicator column for selecting whether the time indicators are provided, a message column for entering the message to be printed on the dial-plate, a destination column for entering the consumer's address and name, and a payment column for entering a method of payment by the consumer.

37. A watch design creating system as claimed in claim 35, wherein the order kit further comprises a plurality of guide sheets each consisting of a transparent film in which a position of the hand axis hole at a center of the dial-plate, a position of the time indicators, and a position of the message, are printed on the dial-plate in order to use them when bonding the pictures on the picture bonding column of the order sheet.

38. A watch design creating system as claimed in claim 35, wherein the order kit further comprises a guide sheet consisting of a transparent film in which a position of the hand axis hole at a center of the dial-plate, a position of the time indicators, and a position of the message, are printed on the dial-plate in order to use them when bonding the pictures on the picture bonding column of the order sheet.

39. A watch design creating system as claimed in claim 37 or 38, wherein the guide sheet is previously bonded at an upper side of the front of the order sheet.

40. A watch design creating system as claimed in claim 35, wherein the order kit further comprises a bonding base paper for separately bonding the picture on the picture bonding column of the order sheet in accordance with a size of each hole.

41. A watch design creating system as claimed in claim 35, wherein the picture bonding column of the order sheet comprises a plurality of picture holes.

42. A watch design creating system as claimed in claim 35, wherein the watch maker, which received the order sheet, executes digital process for the photograph or picture which are required by the consumer as the dial-plate, creates an image data which is reduced or has the same size, and takes the image data into a computer.

43. A watch design creating system as claimed in claim 42, wherein the watch maker, which received the order sheet, creates a dial-plate by printing the image data which was taken into the computer.

44. A watch design creating system as claimed in claim 43, wherein the watch maker, which created the image data, displays the image data on the display; puts the photograph, the picture and time indicators, in accordance with the request by the consumer, into the position of the dial-plate; completes the design of the dial-plate after filling up the message; and, further, completes the original design watch on the display after adding the watch band and watch case which are requested by the consumer so that the original design watch is taken into the computer.

45. A watch design creating system as claimed in claim 44, wherein the watch maker, which completed the original design watch, prints out a production sheet, which is formed of a column which shows the address and name of the consumer, a column which prints a plurality of completed designs of the dial-plates, and an outer view of the original design watch, from a color printer.

46. A watch design creating system as claimed in claim 45, wherein a transparent ultra-violet cutting film is bonded to the dial-plate design of the production sheet which was printed out from the color printer, and one dial-plate design is cut off so that the image sheet is completed.

47. A watch design creating system as claimed in claim 46, wherein a hand axis hole is provided to the dial-plate of the image sheet, and a guide hole is provided to an outer portion of an outer diameter of the dial-plate based on the hand axis hole in order to punch out the outer diameter of the dial-plate.

48. A watch design creating system in which a predetermined order kit is sent from a watch maker to a consumer in accordance with a request of the consumer; the consumer fills up predetermined matters in order to design a desirable original design watch along with the contents of the order kit, and sends the photograph or picture used for the dial-plate to the watch maker; and the watch maker products an original design watch along with the contents of the order kit, and delivers the completed watch to the consumer; characterized in that;
the order kit includes a watch design sheet and an order sheet which are filled up by the consumer; and
the watch design sheet includes, at least, a watch type selecting column for selecting a type of the watch requested by the consumer, and a picture location column for selecting the location of the photograph or picture on the dial-plate.

49. A watch design creating system as claimed in claim 48, wherein the watch design sheet further includes a dial-plate background designating column for designating the background of the dial-plate; a message location selecting column for selecting the position of the message on the dial-plate; a message contents column for filling up the contents of the message; a carved seal column for entering the contents of the carved seal which is carved at the back lid of the watch; a completed image for drawing the completed image of the dial-plate; a dial-plate design column for filling up the request of the design of the dial-plate; a time indicator column for selecting whether the time indicators are necessary or not; a picture selecting column for selecting the picture used for the completed watch; and an order column for filling the number of the order.

50. A watch design creating system as claimed in claim 48, wherein the order sheet further includes a destination column for entering a name, telephone number, address and sex of a user; and a payment column for entering the method of payment by the user.

51. A watch design creating system as claimed in claim 48, wherein a watch receiving box is provided for receiving the completed original design watch.

52. A watch design creating system as claimed in claim 51, wherein the watch receiving box includes an arrangement of a picture, a message and a logo in accordance with the request of the user, with the original design watch.

53. A watch design creating system in which a predetermined order kit is sent from a watch maker to a consumer in accordance with a request of the consumer; the consumer fills up predetermined matters in order to design a desirable original design watch along with the contents of the order kit, and sends the photograph or picture used for the dial-plate to the watch maker; and the watch maker products an original design watch along with the contents of the order kit, and delivers the completed watch to the consumer; characterized in that;
the order kit includes an order sheet which is filled up by the consumer; and
the order sheet includes at least a picture bonding column for bonding the photograph or the picture which are requested by the consumer, and the picture bonding column includes a parting portion for determining a desirable range for the dial-plate in the photograph or the picture.

54. A watch design creating system as claimed in claim 53, wherein the order sheet is formed of a light transmitting sheet, and a plural kinds of time indicators, the message and the hand hole are previously printed in the parting means.

55. A watch design creating system as claimed in claim 53, wherein the order sheet is formed of a light transmitting sheet, and a plural kinds of watch case and the wrist band are previously printed in the parting means.

56. A watch design creating system as claimed in claim 53, wherein the parting means is formed of a light transmitting sheet separately from the order sheet, and a plurality kinds of dial-plates are previously printed on the light transmitting sheet.

57. A watch design creating system as claimed in claim 53, wherein the parting means is formed of a light transmitting sheet separately from the order sheet, and a plurality kinds of frames are previously printed on the light transmitting sheet.

58. A watch design creating system as claimed in claim 53, wherein the order sheet is formed of a magnetic sheet, and the picture is fixed by using another magnetic sheet.

59. A watch design creating system as claimed in claim 53, wherein penetrated long holes are provided, for upper and lower positions of each hole on the order sheet so that, when bonding the picture, it is fixed by a predetermined tape at the long hole from the front.

60. A watch design creating system as claimed in claim 53, wherein a plurality kinds of case frames are separately prepared as the picture bonding column on the order sheet, and the range of the picture is determined by bonding the case frame having a desirable size to the surface of the picture.

61. A watch design creating system as claimed in claim 53, wherein each hole on the order sheet is formed of a pair of holes.

62. A watch design creating system as claimed in claim 53, wherein a trimming sheet made of a light transmitting sheet is separately prepared as the picture bonding column on the order sheet, plural kinds of circles are provided coaxially on the trimming sheet, cutting portions are provided to each circle, and the cutting portions are put on the picture and traced by a felt pencil so that the desirable range of the picture is determined.

63. A watch design creating system as claimed in claim 53, wherein a trimming sheet is separately prepared as the picture bonding column on the order sheet, plural kinds of circles are provided coaxially on the trimming sheet, cutting portions are provided to each circle, and unnecessary portions at the inner of the cutting portion are eliminated so that the desirable range of the picture is determined.

64. A watch design creating system as claimed in claim 53, wherein plural kinds of parting portions, plural kinds of case sheets and plurality of kinds of band sheets, are integrated in order to provide a case frame so that it is easy to combine the picture arranged to the parting portion, the watch case and the wrist band.
